# EUROPEAN PATENT APPLICATION

(11) **EP 4 645 978 A1**
(43) Date of publication of application: **05.11.2025**
(21) Application number: 24755910.7
(22) Date of filing: 23.01.2024
(51) Int. Cl.: H04W 72/04, H04L 5/00

(54) **BEAM INDICATION METHOD AND RELATED APPARATUS**

(30) Priority: 15.02.2023 CN 202310157533
(71) Applicant: Huawei Technologies Co., Ltd., Shenzhen, Guangdong 518129 (CN)
(72) Inventor: FAN, Bo, Shenzhen, Guangdong 518129 (CN); YUAN, Shitong, Shenzhen, Guangdong 518129 (CN)
(74) Representative: Grünecker Patent- und Rechtsanwälte PartG mbB
(86) International application number: PCT/CN2024/073600
(87) International publication number: WO 2024/169535

(57) **Abstract**

This application discloses a beam indication method and a related apparatus, to enable a terminal device to determine, based on a first medium access control control element MAC CE, a transmission configuration indicator TCI state corresponding to each TCI field value in a plurality of TCI field values, so that a network device indicates the TCI state to the terminal device by using the TCI field value in DCI. The method includes: A terminal device receives a first MAC CE from a network device. The terminal device receives downlink control information DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value. The terminal device determines, based on the first MAC CE, a TCI state corresponding to each TCI field value in the plurality of TCI field values.

## Description

This application claims priority to Chinese Patent Application No. 202310157533.X, filed with the China National Intellectual Property Administration on February 15, 2023 and entitled "BEAM INDICATION METHOD AND RELATED APPARATUS", which is incorporated herein by reference in its entirety.

### TECHNICAL FIELD

This application relates to the field of communication technologies, and in particular, to a beam indication method and a related apparatus.

### BACKGROUND

In a 5th generation (5th generation, 5G) mobile communication system, high-frequency communication may be performed, to be specific, data is transmitted by using a signal in a super high frequency band (>6 GHz). A main problem of the high-frequency communication is that energy of a signal sharply decreases as a transmission distance increases. This results in a short transmission distance of the signal. To resolve this problem, an analog beam technology is for the high-frequency communication. Weighted processing is performed on an antenna array, and the energy of the signal is concentrated in a small angle range, to form a signal (referred to as an analog beam, a beam for short) similar to a light beam, so that the transmission distance is extended.

A terminal device may perform communication transmission with one or more transmission reception points (transmission reception points, TRPs). A network device may indicate one or more beams to the terminal device, and the network device may perform communication transmission with the terminal device by using the one or more beams. However, how the network device indicates the beam to the terminal device is a problem that is worth considering.

### SUMMARY

This application provides a beam indication method and a related apparatus, to enable a terminal device to determine, based on a first MAC CE, a TCI state corresponding to each TCI field value in a plurality of TCI field values, so that a network device indicates the TCI state to the terminal device by using the TCI field value in DCI; and the TCI state corresponds to a corresponding beam, so that the network device indicates the beam to the terminal device.

A first aspect of this application provides a beam indication method, including:
A terminal device receives a first medium access control control element (media access control control element, MAC CE) from a network device. The terminal device receives downlink control information (downlink control information, DCI) from the network device, where the DCI includes a transmission configuration indicator (transmission configuration indicator, TCI) field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values. The terminal device determines, based on the first MAC CE, a TCI state corresponding to each TCI field value in the plurality of TCI field values.

It can be learned from the foregoing technical solution that, for any TCI field value, the first MAC CE includes a first field, and the first field indicates a quantity of TCI state groups corresponding to the any TCI field value. In other words, the first MAC CE includes a plurality of first fields, the plurality of first fields are in one-to-one correspondence with the plurality of TCI field values, and each first field indicates a quantity of TCI state groups corresponding to a corresponding TCI field value. This helps the terminal device determine, based on the first MAC CE, the TCI state corresponding to each TCI field value in the plurality of TCI field values, so that the network device indicates the TCI state to the terminal device by using the TCI field value in the DCI; and the TCI state corresponds to a corresponding beam, so that the network device indicates the beam to the terminal device.

A second aspect of this application provides a beam indication method, including:
A network device receives a first MAC CE from a terminal device. The network device sends DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values.

It can be learned from the foregoing technical solution that, for any TCI field value, the first MAC CE includes a first field, and the first field indicates a quantity of TCI state groups corresponding to the any TCI field value. In other words, the first MAC CE includes a plurality of first fields, the plurality of first fields are in one-to-one correspondence with the plurality of TCI field values, and each first field indicates a quantity of TCI state groups corresponding to a corresponding TCI field value. This helps the terminal device determine, based on the first MAC CE, a TCI state corresponding to each TCI field value in the plurality of TCI field values, so that the network device indicates the TCI state to the terminal device by using the TCI field value in the DCI; and the TCI state corresponds to a corresponding beam, so that the network device indicates the beam to the terminal device.

A third aspect of this application provides a beam indication method, including:
A terminal device receives a first MAC CE from a network device. The terminal device receives DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a TCI state group corresponding to the any TCI field value and a quantity of TCI states included in each TCI state group; or the first MAC CE includes a first field, the first field indicates a TCI state group corresponding to a first TCI field value and a quantity of TCI states included in each TCI state group, and the first TCI field value is any TCI field value in the plurality of TCI field values. The terminal device determines, based on the first MAC CE, a TCI state corresponding to each TCI field value in the plurality of TCI field values.

It can be learned from the foregoing technical solution that, for any TCI field value, the first MAC CE includes a first field, and the first field indicates a TCI state group corresponding to the any TCI field value and a quantity of TCI states included in each TCI state group. In other words, the first MAC CE includes a plurality of first fields, the plurality of first fields are in one-to-one correspondence with the plurality of TCI field values, and each first field indicates a TCI state group corresponding to a corresponding TCI field value and a quantity of TCI states included in each TCI state group. This helps the terminal device determine, based on the first MAC CE, the TCI state corresponding to each TCI field value in the plurality of TCI field values, so that the network device indicates the TCI state to the terminal device by using the TCI field value in the DCI; and the TCI state corresponds to a corresponding beam, so that the network device indicates the beam to the terminal device.

A fourth aspect of this application provides a beam indication method, including:
A network device sends a first MAC CE to a terminal device. The network device sends DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a TCI state group corresponding to the any TCI field value and a quantity of TCI states included in each TCI state group; or the first MAC CE includes a first field, the first field indicates a TCI state group corresponding to a first TCI field value and a quantity of TCI states included in each TCI state group, and the first TCI field value is any TCI field value in the plurality of TCI field values.

It can be learned from the foregoing technical solution that, for any TCI field value, the first MAC CE includes a first field, and the first field indicates a TCI state group corresponding to the any TCI field value and a quantity of TCI states included in each TCI state group. In other words, the first MAC CE includes a plurality of first fields, the plurality of first fields are in one-to-one correspondence with the plurality of TCI field values, and each first field indicates a TCI state group corresponding to a corresponding TCI field value and a quantity of TCI states included in each TCI state group. This helps the terminal device determine, based on the first MAC CE, a TCI state corresponding to each TCI field value in the plurality of TCI field values, so that the network device indicates the TCI state to the terminal device by using the TCI field value in the DCI; and the TCI state corresponds to a corresponding beam, so that the network device indicates the beam to the terminal device.

A fifth aspect of this application provides a beam indication method, including:
A terminal device receives a first MAC CE from a network device. The terminal device receives DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values. The terminal device determines, based on the first MAC CE, a TCI state corresponding to each TCI field value in the plurality of TCI field values.

A sixth aspect of this application provides a beam indication method, including:
A network device receives a first MAC CE from a terminal device. The network device sends DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values.

A seventh aspect of this application provides a beam indication method, including:
A terminal device receives a first MAC CE from a network device. The terminal device receives DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a TRP to which a corresponding TCI state group belongs; or the first MAC CE includes a first field, the first field indicates a quantity of TCI state groups corresponding to a first TCI field value and a TRP to which a corresponding TCI state group belongs, and the first TCI field value is any TCI field value in the plurality of TCI field values. The terminal device determines, based on the first MAC CE, a TCI state corresponding to each TCI field value in the plurality of TCI field values.

An eighth aspect of this application provides a beam indication method, including:
A network device receives a first MAC CE from a terminal device. The network device sends DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a TRP to which a corresponding TCI state group belongs; or the first MAC CE includes a first field, the first field indicates a quantity of TCI state groups corresponding to a first TCI field value and a TRP to which a corresponding TCI state group belongs, and the first TCI field value is any TCI field value in the plurality of TCI field values.

A ninth aspect of this application provides a beam indication method, including:
A terminal device receives a first MAC CE from a network device. The terminal device receives DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a quantity of TCI states included in each TCI state group; or the first MAC CE includes a first field, the first field indicates a quantity of TCI state groups corresponding to a first TCI field value and a quantity of TCI states included in each TCI state group, and the first TCI field value is any TCI field value in the plurality of TCI field values. The terminal device determines, based on the first MAC CE, a TCI state corresponding to each TCI field value in the plurality of TCI field values.

A tenth aspect of this application provides a beam indication method, including:
A network device receives a first MAC CE from a terminal device. The network device sends DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a quantity of TCI states included in each TCI state group; or the first MAC CE includes a first field, the first field indicates a quantity of TCI state groups corresponding to a first TCI field value and a quantity of TCI states included in each TCI state group, and the first TCI field value is any TCI field value in the plurality of TCI field values.

An eleventh aspect of this application provides a beam indication method, including:
A terminal device receives a first MAC CE from a network device. The terminal device receives DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a type of a TCI state in each TCI state group; or the first MAC CE includes a first field, the first field indicates a quantity of TCI state groups corresponding to a first TCI field value and a type of a TCI state in each TCI state group, and the first TCI field value is any TCI field value in the plurality of TCI field values. The terminal device determines, based on the first MAC CE, a TCI state corresponding to each TCI field value in the plurality of TCI field values.

A twelfth aspect of this application provides a beam indication method, including:
A network device receives a first MAC CE from a terminal device. The network device sends DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a type of a TCI state in each TCI state group; or the first MAC CE includes a first field, the first field indicates a quantity of TCI state groups corresponding to a first TCI field value and a type of a TCI state in each TCI state group, and the first TCI field value is any TCI field value in the plurality of TCI field values.

A thirteenth aspect of this application provides a beam indication method, including:
A terminal device receives a first MAC CE from a network device. The terminal device receives DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values. The terminal device determines, based on the first MAC CE, a TCI state corresponding to each TCI field value in the plurality of TCI field values.

A fourteenth aspect of this application provides a beam indication method, including:
A network device receives a first MAC CE from a terminal device. The network device sends DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values.

A fifteenth aspect of this application provides a beam indication method, including:
A terminal device receives a first MAC CE from a network device. The terminal device receives DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values. The terminal device determines, based on the first MAC CE, a TCI state corresponding to each TCI field value in the plurality of TCI field values.

A sixteenth aspect of this application provides a beam indication method, including:
A network device receives a first MAC CE from a terminal device. The network device sends DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values.

A seventeenth aspect of this application provides a beam indication method, including:
A terminal device receives a first MAC CE from a network device. The terminal device receives DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value, a TRP to which each TCI state group belongs, and a type of a TCI state in each TCI state group; or the first MAC CE includes a first field, the first field indicates a quantity of TCI state groups corresponding to a first TCI field value, a TRP to which each TCI state group belongs, and a type of a TCI state in each TCI state group, and the first TCI field value is any TCI field value in the plurality of TCI field values. The terminal device determines, based on the first MAC CE, a TCI state corresponding to each TCI field value in the plurality of TCI field values.

An eighteenth aspect of this application provides a beam indication method, including:
A network device receives a first MAC CE from a terminal device. The network device sends DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value, a TRP to which each TCI state group belongs, and a type of a TCI state in each TCI state group; or the first MAC CE includes a first field, the first field indicates a quantity of TCI state groups corresponding to a first TCI field value, a TRP to which each TCI state group belongs, and a type of a TCI state in each TCI state group, and the first TCI field value is any TCI field value in the plurality of TCI field values.

A nineteenth aspect of this application provides a beam indication method, including:
A terminal device receives a first MAC CE from a network device. The terminal device receives DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity and types of TCI state groups corresponding to the any TCI field value; or the first MAC CE includes a first field, the first field indicates a quantity and types of TCI state groups corresponding to a first TCI field value, and the first TCI field value is any TCI field value in the plurality of TCI field values. The terminal device determines, based on the first MAC CE, a TCI state corresponding to each TCI field value in the plurality of TCI field values.

A twentieth aspect of this application provides a beam indication method, including:
A network device receives a first MAC CE from a terminal device. The network device sends DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity and types of TCI state groups corresponding to the any TCI field value; or the first MAC CE includes a first field, the first field indicates a quantity and types of TCI state groups corresponding to a first TCI field value, and the first TCI field value is any TCI field value in the plurality of TCI field values.

A twenty-first aspect of this application provides a beam indication method, including:
A terminal device receives a first MAC CE from a network device. The terminal device receives DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a quantity of TCI states included in each TCI state group; or the first MAC CE includes a first field, the first field indicates a quantity of TCI state groups corresponding to a first TCI field value and a quantity of TCI states included in each TCI state group, and the first TCI field value is any TCI field value in the plurality of TCI field values. The terminal device determines, based on the first MAC CE, a TCI state corresponding to each TCI field value in the plurality of TCI field values.

A twenty-second aspect of this application provides a beam indication method, including:
A network device receives a first MAC CE from a terminal device. The network device sends DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a quantity of TCI states included in each TCI state group; or the first MAC CE includes a first field, the first field indicates a quantity of TCI state groups corresponding to a first TCI field value and a quantity of TCI states included in each TCI state group, and the first TCI field value is any TCI field value in the plurality of TCI field values.

A twenty-third aspect of this application provides a beam indication method, including:
A terminal device receives a first MAC CE from a network device. The terminal device receives DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a TRP to which a TCI state in each corresponding TCI state group belongs; or the first MAC CE includes a first field, the first field indicates a quantity of TCI state groups corresponding to a first TCI field value and a TRP to which a TCI state in each corresponding TCI state group belongs, and the first TCI field value is any TCI field value in the plurality of TCI field values. The terminal device determines, based on the first MAC CE, a TCI state corresponding to each TCI field value in the plurality of TCI field values.

A twenty-fourth aspect of this application provides a beam indication method, including:
A network device receives a first MAC CE from a terminal device. The network device sends DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a TRP to which a TCI state in each corresponding TCI state group belongs; or the first MAC CE includes a first field, the first field indicates a quantity of TCI state groups corresponding to a first TCI field value and a TRP to which a TCI state in each corresponding TCI state group belongs, and the first TCI field value is any TCI field value in the plurality of TCI field values.

A twenty-fifth aspect of this application provides a beam indication method, including:
A terminal device receives a first MAC CE from a network device. The terminal device receives DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values. The terminal device determines, based on the first MAC CE, a TCI state corresponding to each TCI field value in the plurality of TCI field values.

A twenty-sixth aspect of this application provides a beam indication method, including:
A network device receives a first MAC CE from a terminal device. The network device sends DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values.

A twenty-seventh aspect of this application provides a beam indication method, including:
A terminal device receives a first MAC CE from a network device. The terminal device receives DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values. The terminal device determines, based on the first MAC CE, a TCI state corresponding to each TCI field value in the plurality of TCI field values.

A twenty-eighth aspect of this application provides a beam indication method, including:
A network device receives a first MAC CE from a terminal device. The network device sends DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values.

A twenty-ninth aspect of this application provides a beam indication method, including:
A terminal device receives a first MAC CE from a network device. The terminal device receives DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value, a type of each TCI state group, and a TRP to which a TCI state in each TCI state group belongs; or the first MAC CE includes a first field, the first field indicates a quantity of TCI state groups corresponding to a first TCI field value, a type of each TCI state group, and a TRP to which a TCI state in each TCI state group belongs, and the first TCI field value is any TCI field value in the plurality of TCI field values. The terminal device determines, based on the first MAC CE, a TCI state corresponding to each TCI field value in the plurality of TCI field values.

A thirtieth aspect of this application provides a beam indication method, including:
A network device receives a first MAC CE from a terminal device. The network device sends DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value, a type of each TCI state group, and a TRP to which a TCI state in each TCI state group belongs; or the first MAC CE includes a first field, the first field indicates a quantity of TCI state groups corresponding to a first TCI field value, a type of each TCI state group, and a TRP to which a TCI state in each TCI state group belongs, and the first TCI field value is any TCI field value in the plurality of TCI field values.

A thirty-first aspect of this application provides a first communication apparatus, including:
a transceiver module, configured to receive a first MAC CE from a network device, and receive DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values; and
a processing module, configured to determine, based on the first MAC CE, a TCI state corresponding to each TCI field value in the plurality of TCI field values.

A thirty-second aspect of this application provides a second communication apparatus, including:
a transceiver module, configured to receive a first MAC CE from a terminal device, and send DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values.

Based on the first aspect, the second aspect, the thirty-first aspect, or the thirty-second aspect, in a possible implementation, if a value of the first field is a first value, it indicates that the any TCI field value corresponds to one TCI state group; or if a value of the first field is a second value, it indicates that the any TCI field value corresponds to two TCI state groups.

This implementation provides a TCI state group corresponding to the any TCI field value when the first field is set to different values, to indicate the quantity of TCI state groups corresponding to the any TCI field.

Based on the first aspect, the second aspect, the thirty-first aspect, or the thirty-second aspect, in a possible implementation, each TCI state group corresponds to one transmission reception point (transmission reception point, TRP), and different TCI state groups correspond to different TRPs.

In this implementation, a TCI state group is obtained through classification at a TRP granularity. Therefore, whether the network device indicates a TCI state of a single TRP or TCI states of a plurality of TRPs to the terminal device may be determined based on the quantity of TCI state groups corresponding to the any TCI field value. This helps the terminal device preliminarily determine whether the any TCI field value corresponds to the TCI state of the single TRP or the TCI states of the plurality of TRPs. If the any TCI field value corresponds to the TCI state of the single TRP, the terminal device performs single-TRP transmission by using the TCI state of the single TRP. If the any TCI field value corresponds to the TCI states of the plurality of TRPs, the terminal device performs multi-TRP transmission by using the TCI states of the plurality of TRPs. In this way, in a multi-TRP scenario, the network device indicates TCI state groups of the plurality of TRPs to the terminal device.

Based on the first aspect, the second aspect, the thirty-first aspect, or the thirty-second aspect, in a possible implementation, for the any TCI field value, the first MAC CE further includes a second field, and the second field indicates a quantity of TCI states of each TRP that correspond to the any TCI field value; or the first MAC CE further includes a second field, the second field indicates a quantity of TCI states of each TRP that correspond to the first TCI field value, and the first TCI field value is any TCI field value in the plurality of TCI field values.

In other words, the first MAC CE further includes a plurality of second fields, the plurality of second fields are in one-to-one correspondence with the plurality of TCI field values, and each second field indicates a quantity of TCI states of each TRP that correspond to a corresponding TCI field value. In this implementation, the first MAC CE further includes the second field, to help the terminal device further determine the quantity of TCI states of each TRP that correspond to the any TCI field value. This helps the terminal device determine a TCI state corresponding to the any TCI field value. In this way, in the multi-TRP scenario, the network device indicates, to the terminal device, quantities of TCI states included in the TCI state groups of the plurality of TRPs. It should be noted that, this implementation may be used as an independent solution without depending on the foregoing implementations, in other words, without depending on existence of the foregoing first field.

Based on the first aspect, the second aspect, the thirty-first aspect, or the thirty-second aspect, in a possible implementation, when the first field indicates that the any TCI field value corresponds to one TCI state group, the second field indicates any one of the following:
the any TCI field value corresponds to one TCI state of a first TRP;
the any TCI field value corresponds to one TCI state of a second TRP;
the any TCI field value corresponds to two TCI states of a first TRP; or
the any TCI field value corresponds to two TCI states of a second TRP.

In this implementation, the second field indicates any one of the four cases when the first field indicates that the any TCI field value corresponds to one TCI state group. In this way, in a single-TRP scenario, the network device indicates, to the terminal device, a quantity of TCI states of the single TRP that correspond to the any TCI field value.

Based on the first aspect, the second aspect, the thirty-first aspect, or the thirty-second aspect, in a possible implementation, when the first field indicates that the any TCI field value corresponds to two TCI state groups, the second field indicates any one of the following:
the any TCI field corresponds to one TCI state of a first TRP and one TCI state of a second TRP;
the any TCI field corresponds to one TCI state of a first TRP and two TCI states of a second TRP;
the any TCI field corresponds to two TCI states of a first TRP and one TCI state of a second TRP; or
the any TCI field corresponds to two TCI states of a first TRP and two TCI states of a second TRP.

In this implementation, the second field indicates any one of the four cases when the first field indicates that the any TCI field value corresponds to two TCI state groups. In this way, in the multi-TRP scenario, the network device indicates, to the terminal device, quantities of TCI states that are of the plurality of TRPs and that correspond to the any TCI field value.

Based on the first aspect, the second aspect, the thirty-first aspect, or the thirty-second aspect, in a possible implementation, when the first field indicates that the any TCI field value corresponds to two TCI state groups, the two TCI state groups include a TCI state group corresponding to the first TRP and a TCI state group corresponding to the second TRP; and in the first MAC CE, a TCI state in the TCI state group corresponding to the first TRP ranks before a TCI state in the TCI state group corresponding to the second TRP; or in the first MAC CE, a TCI state in the TCI state group corresponding to the first TRP ranks after a TCI state in the TCI state group corresponding to the second TRP.

In this implementation, a sorting rule that is between the TCI state group corresponding to the first TRP and the TCI state group corresponding to the second TRP in the first MAC CE and that is applied when the first field indicates that the any TCI field value corresponds to two TCI state groups is specified by default. In this way, a TRP to which a TCI state group belongs does not need to be additionally indicated in the first MAC CE, to reduce bit overheads for the first MAC CE.

Based on the first aspect, the second aspect, the thirty-first aspect, or the thirty-second aspect, in a possible implementation, the any TCI field value corresponds to a maximum of 4 bytes in the first MAC CE; and in the 4 bytes, a 1^{st} byte corresponds to a first TCI state of the first TRP, a 2^{nd} byte corresponds to a second TCI state of the first TRP, a 3^{rd} byte corresponds to a first TCI state of the second TRP, and a 4^{th} byte corresponds to a second TCI state of the second TRP; or
the any TCI field value corresponds to a maximum of 4 bytes in the first MAC CE; and in the 4 bytes, a 1^{st} byte corresponds to a first TCI state of the second TRP, a 2^{nd} byte corresponds to a second TCI state of the second TRP, a 3^{rd} byte corresponds to a first TCI state of the first TRP, and a 4^{th} byte corresponds to a second TCI state of the first TRP.

In this implementation, the any TCI field value corresponds to a maximum of 4 bytes in the first MAC CE, and specific TRPs whose TCI states are respectively indicated by the 4 bytes are specified. In this way, the TRPs to which the TCI states respectively indicated by the 4 bytes belong and which TCI states of the TRPs that the TCI states are do not need to be additionally indicated in the first MAC CE, to reduce bit overheads for the first MAC CE.

Based on the first aspect, the second aspect, the thirty-first aspect, or the thirty-second aspect, in a possible implementation, a 1^{st} bit of the 1^{st} byte indicates a type of a TCI state indicated by last 7 bits of the 1^{st} byte, and a type of a TCI state indicated by the 2^{nd} byte is a type opposite to the type of the TCI state indicated by the last 7 bits of the 1^{st} byte; and a 1^{st} bit of the 3^{rd} byte indicates a type of a TCI state indicated by last 7 bits of the 3^{rd} byte, and a type of a TCI state indicated by the 4^{th} byte is a type opposite to the type of the TCI state indicated by the last 7 bits of the 3^{rd} byte;
or
a 1^{st} bit of each byte in the 4 bytes indicates a type of a TCI state indicated by last 7 bits of the byte, where the type of the TCI state includes at least one of the following: an uplink TCI state, a downlink TCI state, or a joint uplink/downlink TCI state.

This implementation provides two implementations in which a corresponding bit in the first MAC CE indicates a type of a TCI state. In this way, the terminal device determines the type of each TCI state indicated by the network device. This helps the terminal device determine, in the multi-TRP scenario, types of the TCI states of the plurality of TRPs.

Based on the first aspect, the second aspect, the thirty-first aspect, or the thirty-second aspect, in a possible implementation, the any TCI field value corresponds to 2 bytes in the first MAC CE; and in the 2 bytes, a 1^{st} byte corresponds to a TCI state of the first TRP, and a 2^{nd} byte corresponds to a TCI state of the second TRP; or
the any TCI field value corresponds to 2 bytes in the first MAC CE; and in the 2 bytes, a 1^{st} byte corresponds to a TCI state of the second TRP, and a 2^{nd} byte corresponds to a TCI state of the first TRP.

Based on the first aspect, the second aspect, the thirty-first aspect, or the thirty-second aspect, in a possible implementation, a 1^{st} bit of the 1^{st} byte indicates a type of a TCI state indicated by last 7 bits of the 1^{st} byte, a 1^{st} bit of the 2^{nd} byte indicates a type of a TCI state indicated by last 7 bits of the 2^{nd} byte, and both the type of the TCI state indicated by the last 7 bits of the 1^{st} byte and the type of the TCI state indicated by the last 7 bits of the 2^{nd} byte are a joint uplink/downlink TCI state.

Based on the first aspect, the second aspect, the thirty-first aspect, or the thirty-second aspect, in a possible implementation, the any TCI field value corresponds to 3 bytes in the first MAC CE; and in the 3 bytes, a 1^{st} byte corresponds to a first TCI state of the first TRP, a 2^{nd} byte corresponds to a second TCI state of the first TRP, and a 3^{rd} byte corresponds to a TCI state of the second TRP; or
the any TCI field value corresponds to 3 bytes in the first MAC CE; and in the 3 bytes, a 1^{st} byte corresponds to a first TCI state of the second TRP, a 2^{nd} byte corresponds to a second TCI state of the second TRP, and a 3^{rd} byte corresponds to a TCI state of the first TRP.

Based on the first aspect, the second aspect, the thirty-first aspect, or the thirty-second aspect, in a possible implementation,
a 1^{st} bit of the 1^{st} byte indicates a type of a TCI state indicated by last 7 bits of the 1^{st} byte, and a type of a TCI state indicated by the 2^{nd} byte is a type opposite to the type of the TCI state indicated by the last 7 bits of the 1^{st} byte; and a 1^{st} bit of the 3^{rd} byte indicates a type of a TCI state indicated by last 7 bits of the 3^{rd} byte, and the type of the TCI state indicated by the last 7 bits of the 3^{rd} byte is a joint uplink/downlink TCI state; or
a 1^{st} bit of each byte in the 3 bytes indicates a type of a TCI state indicated by last 7 bits of the byte, where the type of the TCI state includes at least one of the following: an uplink TCI state, a downlink TCI state, or a joint uplink/downlink TCI state.

Based on the first aspect, the second aspect, the thirty-first aspect, or the thirty-second aspect, in a possible implementation, TCI states in each TCI state group belong to a same type of TCI states, and TCI states in different TCI state groups belong to different types of TCI states.

In this implementation, a TCI state group is obtained through classification at a granularity of a type of a TCI state. Therefore, a quantity of types of TCI states indicated by the network device to the terminal device may be determined based on the quantity of TCI state groups corresponding to the any TCI field value. This enriches manners of obtaining the TCI state group through classification, and enriches manners of indicating the TCI state by the network device to the terminal device.

Based on the first aspect, the second aspect, the thirty-first aspect, or the thirty-second aspect, in a possible implementation, for the any TCI field value, the first MAC CE further includes a third field, and the third field indicates a quantity of TCI states of each type that correspond to the any TCI field value; or the first MAC CE further includes a third field, the third field indicates a quantity of TCI states of each type that correspond to the first TCI field value, and the first TCI field value is any TCI field value in the plurality of TCI field values.

In other words, the first MAC CE further includes a plurality of third fields, the plurality of third fields are in one-to-one correspondence with the plurality of TCI field values, and each third field indicates a quantity of TCI states of each type that correspond to a corresponding TCI field value. In this implementation, the first MAC CE further includes the third field, to help the terminal device further determine the quantity of TCI states of each type that correspond to the any TCI field value. This helps the terminal device preliminarily determine whether the network device indicates a TCI state of a single TRP or TCI states of a plurality of TRPs to the terminal device. For example, if the any TCI field value corresponds to two uplink TCI states and two downlink TCI states, corresponds to one joint uplink/downlink TCI state, one uplink TCI state, and one downlink TCI state, or corresponds to two joint uplink/downlink TCI states, the terminal device may determine that the network device indicates the TCI states of the plurality of TRPs to the terminal device. If the any TCI field value corresponds to one uplink TCI state and one downlink TCI state, or corresponds to one joint uplink/downlink TCI state, the terminal device may determine that the network device indicates the TCI states of the plurality of TRPs to the terminal device. It should be noted that, this implementation may be used as an independent solution without depending on the foregoing implementations, in other words, without depending on existence of the foregoing first field.

Based on the first aspect, the second aspect, the thirty-first aspect, or the thirty-second aspect, in a possible implementation, when the first field indicates that the any TCI field value corresponds to one TCI state group, the third field indicates any one of the following:
the any TCI field value corresponds to one uplink TCI state;
the any TCI field value corresponds to one downlink TCI state;
the any TCI field value corresponds to two uplink TCI states; or
the any TCI field value corresponds to two downlink TCI states.

In this implementation, the third field indicates one of the four cases when the first field indicates that the any TCI field value corresponds to one TCI state group. In this way, in a single-TRP scenario or a multi-TRP scenario, the network device indicates, to the terminal device, a quantity of TCI states of the single TRP that correspond to the any TCI field value or quantities of TCI states that are of the plurality of TRPs and that correspond to the any TCI field value.

Based on the first aspect, the second aspect, the thirty-first aspect, or the thirty-second aspect, in a possible implementation, when the first field indicates that the any TCI field value corresponds to two TCI state groups, the third field indicates any one of the following:
the any TCI field value corresponds to one uplink TCI state and one downlink TCI state;
the any TCI field value corresponds to one uplink TCI state and two downlink TCI states;
the any TCI field value corresponds to two uplink TCI states and one downlink TCI state; or
the any TCI field value corresponds to two uplink TCI states and two downlink TCI states.

In this implementation, the third field indicates one of the four cases when the first field indicates that the any TCI field value corresponds to two TCI state groups. In this way, in a single-TRP scenario or a multi-TRP scenario, the network device indicates, to the terminal device, a quantity of TCI states of the single TRP that correspond to the any TCI field value or quantities of TCI states that are of the plurality of TRPs and that correspond to the any TCI field value.

Based on the first aspect, the second aspect, the thirty-first aspect, or the thirty-second aspect, in a possible implementation, when the first field indicates that the any TCI field value corresponds to two TCI state groups, the two TCI state groups include an uplink TCI state group and a downlink TCI state group.

In the first MAC CE, an uplink TCI state in the uplink TCI state group ranks before a downlink TCI state in the downlink TCI state group; or in the first MAC CE, an uplink TCI state in the uplink TCI state group ranks after a downlink TCI state in the downlink TCI state group.

In this implementation, a sorting rule that is between a TCI state group corresponding to a first TRP and a TCI state group corresponding to a second TRP in the first MAC CE and that is applied when the first field indicates that the any TCI field value corresponds to two TCI state groups is specified by default. In this way, a TRP to which a TCI state group belongs does not need to be additionally indicated in the first MAC CE, to reduce bit overheads for the first MAC CE.

Based on the first aspect, the second aspect, the thirty-first aspect, or the thirty-second aspect, in a possible implementation, the any TCI field value corresponds to a maximum of 4 bytes in the first MAC CE; and in the 4 bytes, a 1^{st} byte corresponds to a first uplink TCI state in the uplink TCI state group, a 2^{nd} byte corresponds to a second uplink TCI state in the uplink TCI state group, a 3^{rd} byte corresponds to a first downlink TCI state in the downlink TCI state group, and a 4^{th} byte corresponds to a second downlink TCI state in the downlink TCI state group; or
the any TCI field value corresponds to a maximum of 4 bytes in the first MAC CE; and in the 4 bytes, a 1^{st} byte corresponds to a first downlink TCI state in the downlink TCI state group, a 2^{nd} byte corresponds to a second downlink TCI state in the downlink TCI state group, a 3^{rd} byte corresponds to a first uplink TCI state in the uplink TCI state group, and a 4^{th} byte corresponds to a second uplink TCI state in the uplink TCI state group.

In this implementation, the any TCI field value corresponds to a maximum of 4 bytes in the first MAC CE, and specific TCI states respectively indicated by the 4 bytes and specific types of TCI state groups to which the TCI states belong are specified. In this way, the TCI state groups to which the TCI states respectively indicated by the 4 bytes belong and which TCI states in the TCI state groups that the TCI states are do not need to be additionally indicated in the first MAC CE, to reduce bit overheads for the first MAC CE.

Based on the first aspect, the second aspect, the thirty-first aspect, or the thirty-second aspect, in a possible implementation, a TCI state corresponding to the any TCI field value belongs to a first TRP and/or a second TRP; a 1^{st} bit of the 1^{st} byte indicates a TRP to which a TCI state indicated by last 7 bits of the 1^{st} byte belongs, and a TRP to which a TCI state indicated by the 2^{nd} byte belongs is a TRP, in the first TRP and the second TRP, other than the TRP to which the TCI state indicated by the last 7 bits of the 1^{st} byte belongs; and a 1^{st} bit of the 3^{rd} byte indicates a TRP to which a TCI state indicated by last 7 bits of the 3^{rd} byte belongs, and a TRP to which a TCI state indicated by the 4^{th} byte belongs is a TRP, in the first TRP and the second TRP, other than the TRP to which the TCI state indicated by the last 7 bits of the 3^{rd} byte belongs; or
a 1^{st} bit of each byte in the 4 bytes indicates a TRP to which a TCI state indicated by last 7 bits of the byte belongs.

This implementation provides two implementations in which a corresponding bit in the first MAC CE indicates a TRP to which a TCI state belongs. In this way, the terminal device determines a TRP to which each TCI state indicated by the network device belongs. This helps the terminal device determine, in a multi-TRP scenario, the TRP to which each TCI state belongs.

Based on the first aspect or the second aspect, in a possible implementation, the method further includes: The terminal device determines a default byte in the 4 bytes based on the third field. This helps the terminal device obtain, from a corresponding byte in the first MAC CE, an identifier of a TCI state corresponding to the any TCI field value.

Based on the first aspect or the second aspect, in a possible implementation, for either TRP in the first TRP and the second TRP,
if a quantity of TCI states of the either TRP that correspond to the any TCI field value is 0, 2 bytes corresponding to the either TRP are both default;
if a quantity of TCI states of the either TRP that correspond to the any TCI field value is 1, a 2^{nd} byte in 2 bytes corresponding to the either TRP is default; or
if a quantity of TCI states of the either TRP that correspond to the any TCI field value is 2, neither of 2 bytes corresponding to the either TRP is default.

In this implementation, whether a byte corresponding to each TRP is default is provided for various cases. This helps the terminal device obtain, from a corresponding byte in the first MAC CE, an identifier of a TCI state corresponding to the any TCI field value.

Based on the first aspect, in a possible implementation, the method further includes:
When a first condition is met, the terminal device performs transmission by only using a TCI state of a single TRP, where the first condition includes either of the following: The terminal device receives a second MAC CE from the network device, where the second MAC CE indicates a TCI state of one TRP; or the terminal device receives the first MAC CE from the network device, where a TCI state of a same TRP is activated in the first MAC CE.

In this implementation, if the foregoing first condition is met, the terminal device performs transmission by using the TCI state of the single TRP. In other words, the network device may indicate, by using the foregoing first condition, the terminal device to perform transmission by using the TCI state of the single TRP. In this way, the terminal device switches from a multi-TRP mode to a single-TRP mode.

Based on the thirty-first aspect, in a possible implementation, the processing module is further configured to determine a default byte in the 4 bytes based on the second field, or determine a default byte in the 4 bytes based on the third field.

Based on the thirty-first aspect or the thirty-second aspect, in a possible implementation, for either TRP in the first TRP and the second TRP,
if a quantity of TCI states of the either TRP that correspond to the any TCI field value is 0, 2 bytes corresponding to the either TRP are both default;
if a quantity of TCI states of the either TRP that correspond to the any TCI field value is 1, a 2^{nd} byte in 2 bytes corresponding to the either TRP is default; or
if a quantity of TCI states of the either TRP that correspond to the any TCI field value is 2, neither of 2 bytes corresponding to the either TRP is default.

Based on the thirty-first aspect, in a possible implementation, the processing module is further configured to:
when a first condition is met, perform transmission by only using a TCI state of a single TRP, where
the first condition includes either of the following: The transceiver module receives a second MAC CE from the network device, where the second MAC CE indicates a TCI state of one TRP; or the transceiver module receives the first MAC CE from the network device, where a TCI state of a same TRP is activated in the first MAC CE.

A thirty-third aspect of this application provides a first communication apparatus, including:
a transceiver module, configured to receive a first MAC CE from a network device, and receive DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a TCI state group corresponding to the any TCI field value and a quantity of TCI states included in each TCI state group; or the first MAC CE includes a first field, the first field indicates a TCI state group corresponding to a first TCI field value and a quantity of TCI states included in each TCI state group, and the first TCI field value is any TCI field value in the plurality of TCI field values; and
a processing module, configured to determine, based on the first MAC CE, a TCI state corresponding to each TCI field value in the plurality of TCI field values.

A thirty-fourth aspect of this application provides a second communication apparatus, including:
a transceiver module, configured to send a first MAC CE to a terminal device, and send DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a TCI state group corresponding to the any TCI field value and a quantity of TCI states included in each TCI state group; or the first MAC CE includes a first field, the first field indicates a TCI state group corresponding to a first TCI field value and a quantity of TCI states included in each TCI state group, and the first TCI field value is any TCI field value in the plurality of TCI field values.

Based on the third aspect, the fourth aspect, the thirty-third aspect, or the thirty-fourth aspect, in a possible implementation, each TCI state group corresponds to one TRP, and different TCI state groups correspond to different TRPs.

In this implementation, a TCI state group is obtained through classification at a TRP granularity. Therefore, whether the network device indicates a TCI state of a single TRP or TCI states of a plurality of TRPs to the terminal device may be determined based on a quantity of TCI state groups corresponding to the any TCI field value. This helps the terminal device preliminarily determine whether the any TCI field value corresponds to the TCI state of the single TRP or the TCI states of the plurality of TRPs. If the any TCI field value corresponds to the TCI state of the single TRP, the terminal device performs single-TRP transmission by using the TCI state of the single TRP. If the any TCI field value corresponds to the TCI states of the plurality of TRPs, the terminal device performs multi-TRP transmission by using the TCI states of the plurality of TRPs. In this way, in a multi-TRP scenario, the network device indicates TCI state groups of the plurality of TRPs to the terminal device.

Based on the third aspect, the fourth aspect, the thirty-third aspect, or the thirty-fourth aspect, in a possible implementation, the first field indicates any one of the following:
the any TCI field value corresponds to one TCI state of a first TRP;
the any TCI field value corresponds to one TCI state of a second TRP;
the any TCI field value corresponds to two TCI states of a first TRP;
the any TCI field value corresponds to two TCI states of a second TRP;
the any TCI field value corresponds to one TCI state of a first TRP and one TCI state of a second TRP;
the any TCI field value corresponds to one TCI state of a first TRP and two TCI states of a second TRP;
the any TCI field value corresponds to two TCI states of a first TRP and one TCI state of a second TRP; or
the any TCI field value corresponds to two TCI states of a first TRP and two TCI states of a second TRP.

In this implementation, the first field indicates any one of the foregoing cases. In this way, in a single-TRP scenario or the multi-TRP scenario, the network device indicates, to the terminal device, a TCI state group that is of each TRP and that corresponds to the any TCI field value and a quantity of TCI states included in each TCI state group. This helps the terminal device determine the quantity of TCI states included in the TCI state group of each TRP.

Based on the third aspect, the fourth aspect, the thirty-third aspect, or the thirty-fourth aspect, in a possible implementation, when the first field indicates that the any TCI field value corresponds to two TCI state groups, the two TCI state groups include a TCI state group corresponding to the first TRP and a TCI state group corresponding to the second TRP.

In the first MAC CE, a TCI state in the TCI state group corresponding to the first TRP ranks before a TCI state in the TCI state group corresponding to the second TRP; or in the first MAC CE, a TCI state in the TCI state group corresponding to the first TRP ranks after a TCI state in the TCI state group corresponding to the second TRP.

In this implementation, a sorting rule that is between the TCI state group corresponding to the first TRP and the TCI state group corresponding to the second TRP in the first MAC CE and that is applied when the first field indicates that the any TCI field value corresponds to two TCI state groups is specified by default. In this way, a TRP to which a TCI state group belongs does not need to be additionally indicated in the first MAC CE, to reduce bit overheads for the first MAC CE.

Based on the third aspect, the fourth aspect, the thirty-third aspect, or the thirty-fourth aspect, in a possible implementation, the any TCI field value corresponds to a maximum of 4 bytes in the first MAC CE; and in the 4 bytes, a 1^{st} byte corresponds to a first TCI state of the first TRP, a 2^{nd} byte corresponds to a second TCI state of the first TRP, a 3^{rd} byte corresponds to a first TCI state of the second TRP, and a 4^{th} byte corresponds to a second TCI state of the second TRP;
or
the any TCI field value corresponds to a maximum of 4 bytes in the first MAC CE; and in the 4 bytes, a 1^{st} byte corresponds to a first TCI state of the second TRP, a 2^{nd} byte corresponds to a second TCI state of the second TRP, a 3^{rd} byte corresponds to a first TCI state of the first TRP, and a 4^{th} byte corresponds to a second TCI state of the first TRP.

In this implementation, the any TCI field value corresponds to a maximum of 4 bytes in the first MAC CE, and specific TRPs whose TCI states are respectively indicated by the 4 bytes are specified. In this way, the TRPs to which the TCI states respectively indicated by the 4 bytes belong and which TCI states of the TRPs that the TCI states are do not need to be additionally indicated in the first MAC CE, to reduce bit overheads for the first MAC CE.

Based on the third aspect, the fourth aspect, the thirty-third aspect, or the thirty-fourth aspect, in a possible implementation, a 1^{st} bit of the 1^{st} byte indicates a type of a TCI state indicated by last 7 bits of the 1^{st} byte, and a type of a TCI state indicated by the 2^{nd} byte is a type opposite to the type of the TCI state indicated by the last 7 bits of the 1^{st} byte; and a 1^{st} bit of the 3^{rd} byte indicates a type of a TCI state indicated by last 7 bits of the 3^{rd} byte, and a type of a TCI state indicated by the 4^{th} byte is a type opposite to the type of the TCI state indicated by the last 7 bits of the 3^{rd} byte;
or
a 1^{st} bit of each byte in the 4 bytes indicates a type of a TCI state indicated by last 7 bits of the byte, where the type of the TCI state includes at least one of the following: an uplink TCI state, a downlink TCI state, or a joint uplink/downlink TCI state.

This implementation provides two implementations in which a corresponding bit in the first MAC CE indicates a type of a TCI state. In this way, the terminal device determines the type of each TCI state indicated by the network device. This helps the terminal device determine, in the multi-TRP scenario, types of the TCI states of the plurality of TRPs.

Based on the third aspect, the fourth aspect, the thirty-third aspect, or the thirty-fourth aspect, in a possible implementation, TCI states in each TCI state group belong to a same type of TCI states, and TCI states in different TCI state groups belong to different types of TCI states.

In this implementation, a TCI state group is obtained through classification at a granularity of a type of a TCI state. It can be learned from this that the terminal device may determine, based on the quantity of TCI state groups corresponding to the any TCI field value and the quantity of TCI states included in each TCI state group, a quantity of types of TCI states indicated by the network device to the terminal device and a quantity of TCI states. This enriches manners of obtaining the TCI state group through classification, and enriches manners of indicating the TCI state by the network device to the terminal device.

Based on the third aspect, the fourth aspect, the thirty-third aspect, or the thirty-fourth aspect, in a possible implementation, the first field indicates any one of the following:
the any TCI field value corresponds to one uplink TCI state group, and the uplink TCI state group includes one uplink TCI state;
the any TCI field value corresponds to one downlink TCI state group, and the downlink TCI state group includes one downlink TCI state;
the any TCI field value corresponds to one uplink TCI state group, and the uplink TCI state group includes two uplink TCI states;
the any TCI field value corresponds to one downlink TCI state group, and the downlink TCI state group includes two downlink TCI states;
the any TCI field value corresponds to one uplink TCI state group and one downlink TCI state group, the uplink TCI state group includes one uplink TCI state, and the downlink TCI state group includes one downlink TCI state;
the any TCI field value corresponds to one uplink TCI state group and one downlink TCI state group, the uplink TCI state group includes one uplink TCI state, and the downlink TCI state group includes two downlink TCI states;
the any TCI field value corresponds to one uplink TCI state group and one downlink TCI state group, the uplink TCI state group includes two uplink TCI states, and the downlink TCI state group includes one downlink TCI state; or
the any TCI field value corresponds to one uplink TCI state group and one downlink TCI state group, the uplink TCI state group includes two uplink TCI states, and the downlink TCI state group includes two downlink TCI states.

In this implementation, the first field indicates one of the foregoing plurality of cases. In this way, in a single-TRP scenario or a multi-TRP scenario, the network device indicates, to the terminal device, a quantity of TCI states of each type and of a single TRP that correspond to the any TCI field value or a quantity of TCI states that are of each type and of a plurality of TRPs and that correspond to the any TCI field value.

Based on the third aspect, the fourth aspect, the thirty-third aspect, or the thirty-fourth aspect, in a possible implementation, when the first field indicates that the any TCI field value corresponds to one uplink TCI state group and one downlink TCI state group,
in the first MAC CE, an uplink TCI state in the uplink TCI state group ranks before a downlink TCI state in the downlink TCI state group; or in the first MAC CE, an uplink TCI state in the uplink TCI state group ranks after a downlink TCI state in the downlink TCI state group.

In this implementation, a sorting rule that is between the uplink TCI state group and the downlink TCI state group in the first MAC CE and that is applied when the first field indicates that the any TCI field value corresponds to two TCI state groups is specified by default. In this way, a type of a TCI state does not need to be additionally indicated in the first MAC CE, to reduce bit overheads for the first MAC CE.

Based on the third aspect, the fourth aspect, the thirty-third aspect, or the thirty-fourth aspect, in a possible implementation, the any TCI field value corresponds to a maximum of 4 bytes in the first MAC CE; and in the 4 bytes, a 1^{st} byte corresponds to a first uplink TCI state in the uplink TCI state group, a 2^{nd} byte corresponds to a second uplink TCI state in the uplink TCI state group, a 3^{rd} byte corresponds to a first downlink TCI state in the downlink TCI state group, and a 4^{th} byte corresponds to a second downlink TCI state in the downlink TCI state group; or
the any TCI field value corresponds to a maximum of 4 bytes in the first MAC CE; and in the 4 bytes, a 1^{st} byte corresponds to a first downlink TCI state in the downlink TCI state group, a 2^{nd} byte corresponds to a second downlink TCI state in the downlink TCI state group, a 3^{rd} byte corresponds to a first uplink TCI state in the uplink TCI state group, and a 4^{th} byte corresponds to a second uplink TCI state in the uplink TCI state group.

In this implementation, the any TCI field value corresponds to a maximum of 4 bytes in the first MAC CE, and specific TCI states respectively indicated by the 4 bytes and specific types of TCI state groups to which the TCI states belong are specified. In this way, the TCI state groups to which the TCI states respectively indicated by the 4 bytes belong and which TCI states in the TCI state groups that the TCI states are do not need to be additionally indicated in the first MAC CE, to reduce bit overheads for the first MAC CE.

Based on the third aspect, the fourth aspect, the thirty-third aspect, or the thirty-fourth aspect, in a possible implementation, a TCI state corresponding to the any TCI field value belongs to a first TRP and/or a second TRP; a 1^{st} bit of the 1^{st} byte indicates a TRP to which a TCI state indicated by last 7 bits of the 1^{st} byte belongs, and a TRP to which a TCI state indicated by the 2^{nd} byte belongs is a TRP, in the first TRP and the second TRP, other than the TRP to which the TCI state indicated by the last 7 bits of the 1^{st} byte belongs; and a 1^{st} bit of the 3^{rd} byte indicates a TRP to which a TCI state indicated by last 7 bits of the 3^{rd} byte belongs, and a TRP to which a TCI state indicated by the 4^{th} byte belongs is a TRP, in the first TRP and the second TRP, other than the TRP to which the TCI state indicated by the last 7 bits of the 3^{rd} byte belongs; or
a 1^{st} bit of each byte in the 4 bytes indicates a TRP to which a TCI state indicated by last 7 bits of the byte belongs.

This implementation provides two implementations in which a corresponding bit in the first MAC CE indicates a TRP to which a TCI state belongs. In this way, the terminal device determines a TRP to which each TCI state indicated by the network device belongs. This helps the terminal device determine, in a multi-TRP scenario, the TRP to which each TCI state belongs.

Based on the third aspect, in a possible implementation, the method further includes: The terminal device determines a default byte in the 4 bytes based on the first field. This helps the terminal device obtain, from a corresponding byte in the first MAC CE, an identifier of a TCI state corresponding to the any TCI field value.

Based on the third aspect, in a possible implementation, the method further includes: when a first condition is met, performing transmission by only using a TCI state of a single TRP, where the first condition includes either of the following: The terminal device receives a second MAC CE from the network device, where the second MAC CE indicates a TCI state of one TRP; or the terminal device receives the first MAC CE from the network device, where a TCI state of a same TRP is activated in the first MAC CE.

In this implementation, if the foregoing first condition is met, the terminal device performs transmission by using the TCI state of the single TRP. In other words, the network device may indicate, by using the foregoing first condition, the terminal device to perform transmission by using the TCI state of the single TRP. In this way, the terminal device switches from a multi-TRP mode to a single-TRP mode.

Based on the third aspect, the fourth aspect, the thirty-third aspect, or the thirty-fourth aspect, in a possible implementation, for either TCI state group in a first TCI state group and a second TCI state group that correspond to the any TCI field value,
if a quantity of TCI states included in the either TCI state group is 0, 2 bytes corresponding to the either TCI state group are both default;
if a quantity of TCI states included in the either TCI state group is 1, a 2^{nd} byte in 2 bytes corresponding to the either TCI state group is default; or
if a quantity of TCI states included in the either TCI state group is 2, neither of 2 bytes corresponding to the either TCI state group is default.

In this implementation, whether a byte corresponding to each TCI state group is default is provided for various cases. This helps the terminal device obtain, from a corresponding byte in the first MAC CE, an identifier of a TCI state in each TCI state group corresponding to the any TCI field value.

Based on the thirty-third aspect, in a possible implementation, the processing module is further configured to determine a default byte in the 4 bytes based on the second field, or determine a default byte in the 4 bytes based on the third field.

Based on the thirty-third aspect, in a possible implementation, the processing module is further configured to:
when a first condition is met, perform transmission by only using a TCI state of a single TRP.

The first condition includes either of the following: The transceiver module receives a second MAC CE from the network device, where the second MAC CE indicates a TCI state of one TRP; or the transceiver module receives the first MAC CE from the network device, where a TCI state of a same TRP is activated in the first MAC CE.

A thirty-fifth aspect of this application provides a first communication apparatus, including:
a transceiver module, configured to receive a first MAC CE from a network device, and receive DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values; and
a processing module, configured to determine, based on the first MAC CE, a TCI state corresponding to each TCI field value in the plurality of TCI field values.

A thirty-sixth aspect of this application provides a second communication apparatus, including:
a transceiver module, configured to receive a first MAC CE from a terminal device, and a network device sends DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values.

Based on the fifth aspect, the sixth aspect, the thirty-fifth aspect, or the thirty-sixth aspect, in a possible implementation, each TCI state group corresponds to one TRP, and different TCI state groups correspond to different TRPs.

Based on the fifth aspect, the sixth aspect, the thirty-fifth aspect, or the thirty-sixth aspect, in a possible implementation, for the any TCI field value, the first MAC CE further includes a second field, and the second field indicates a TRP to which a TCI state group corresponding to the any TCI field value belongs. In other words, the first MAC CE further includes a plurality of second fields, the plurality of second fields are in one-to-one correspondence with the plurality of TCI field values, and each second field indicates a TRP to which a TCI state group corresponding to the any TCI field value belongs.

Based on the fifth aspect, the sixth aspect, the thirty-fifth aspect, or the thirty-sixth aspect, in a possible implementation, for the any TCI field value, the first MAC CE further includes a third field, and the third field indicates a quantity of TCI states included in each TCI state group corresponding to the any TCI field value. Alternatively, the first MAC CE includes a third field, the third field indicates a quantity of TCI states included in each TCI state group corresponding to the first TCI field value, and the first TCI field value is any TCI field value in the plurality of TCI field values. In other words, the first MAC CE further includes a plurality of third fields, and the plurality of third fields are in one-to-one correspondence with the plurality of TCI field values. Each third field indicates a quantity of TCI states included in each TCI state group corresponding to a corresponding TCI field value.

Based on the fifth aspect, the sixth aspect, the thirty-fifth aspect, or the thirty-sixth aspect, in a possible implementation, the first MAC CE further includes a fourth field, and the fourth field indicates a type of a TCI state in each TCI state group corresponding to the any TCI field value, where the type of the TCI state includes an uplink TCI state, a downlink TCI state, or a joint uplink/downlink TCI state. Alternatively, the first MAC CE further includes a fourth field, the fourth field indicates a type of a TCI state in each TCI state group corresponding to the first TCI field value, and the first TCI field value is any TCI field value in the plurality of TCI field values. In other words, the first MAC CE further includes a plurality of fourth fields, the plurality of fourth fields are in one-to-one correspondence with the plurality of TCI field values, and each fourth field indicates a type of a TCI state in each TCI state group corresponding to a corresponding TCI field value.

Based on the fifth aspect, the sixth aspect, the thirty-fifth aspect, or the thirty-sixth aspect, in a possible implementation, for the any TCI field value, the first MAC CE further includes a fifth field, the fifth field indicates an index (or an identifier) of a TCI state corresponding to the any TCI field value, and the index of the TCI state uniquely identifies the TCI state. Alternatively, the first MAC CE further includes a fifth field, the fifth field indicates an index (or an identifier) of a TCI state corresponding to the first TCI field value, the index of the TCI state uniquely identifies the TCI state, and the first TCI field value is any TCI field value in the plurality of TCI field values. In other words, the first MAC CE includes a plurality of fifth fields, the plurality of fifth fields are in one-to-one correspondence with the plurality of TCI field values, and each fifth field indicates an index of a TCI state corresponding to a corresponding TCI field value.

Based on the fifth aspect, the sixth aspect, the thirty-fifth aspect, or the thirty-sixth aspect, in a possible implementation, TCI states in each TCI state group belong to a same type of TCI states, and TCI states in different TCI state groups belong to different types of TCI states.

Based on the fifth aspect, the sixth aspect, the thirty-fifth aspect, or the thirty-sixth aspect, in a possible implementation, for the any TCI field value, the first MAC CE further includes a sixth field, and the sixth field indicates a type of each TCI state group corresponding to the any TCI field value; or the first MAC CE further includes a sixth field, the sixth field indicates a type of each TCI state group corresponding to the first TCI field value, and the first TCI field value is any TCI field value in the plurality of TCI field values, where the type of the TCI state group includes an uplink TCI state group, a downlink TCI state group, or a joint uplink/downlink TCI state group.

In other words, the first MAC CE further includes a plurality of sixth fields, and the plurality of sixth fields are in one-to-one correspondence with the plurality of TCI field values. Each sixth field indicates a type of a TCI state group corresponding to a corresponding TCI field value.

Based on the fifth aspect, the sixth aspect, the thirty-fifth aspect, or the thirty-sixth aspect, in a possible implementation, for the any TCI field value, the first MAC CE further includes a seventh field, and the seventh field indicates a quantity of TCI states included in each TCI state group corresponding to the any TCI field value; or the first MAC CE further includes a seventh field, the seventh field indicates a quantity of TCI states included in each TCI state group corresponding to the first TCI field value, and the first TCI field value is any TCI field value in the plurality of TCI field values. In other words, the first MAC CE includes a plurality of seventh fields, and the plurality of seventh fields are in one-to-one correspondence with the plurality of TCI field values. Each seventh field indicates a quantity of TCI state groups included in each TCI state group corresponding to a corresponding TCI field value.

Based on the fifth aspect, the sixth aspect, the thirty-fifth aspect, or the thirty-sixth aspect, in a possible implementation, for the any TCI field value, the first MAC CE further includes an eighth field, and the eighth field indicates a TRP to which a TCI state in each TCI state group corresponding to the any TCI field value belongs; or the first MAC CE further includes an eighth field, the eighth field indicates a TRP to which a TCI state in each TCI state group corresponding to the first TCI field value belongs, and the first TCI field value is any TCI field value in the plurality of TCI field values. In other words, the first MAC CE includes a plurality of eighth fields, and the plurality of eighth fields are in one-to-one correspondence with the plurality of TCI field values. Each eighth field indicates a TRP to which a TCI state in each TCI state group corresponding to a corresponding TCI field value belongs.

Based on the fifth aspect, the sixth aspect, the thirty-fifth aspect, or the thirty-sixth aspect, in a possible implementation, for the any TCI field value, the first MAC CE further includes a ninth field, the ninth field indicates an index (or an identifier) of a TCI state corresponding to the any TCI field value, and the index of the TCI state uniquely identifies the TCI state; or the first MAC CE further includes a ninth field, the ninth field indicates an index (or an identifier) of a TCI state corresponding to the first TCI field value, the index of the TCI state uniquely identifies the TCI state, and the first TCI field value is any TCI field value in the plurality of TCI field values. In other words, the first MAC CE includes a plurality of ninth fields, the plurality of ninth fields are in one-to-one correspondence with the plurality of TCI field values, and each ninth field indicates an index of a TCI state corresponding to a corresponding TCI field value.

A thirty-seventh aspect of this application provides a first communication apparatus, including:
a transceiver module, configured to receive a first MAC CE from a network device, and receive DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a TRP to which a corresponding TCI state group belongs; or the first MAC CE includes a first field, the first field indicates a quantity of TCI state groups corresponding to a first TCI field value and a TRP to which a corresponding TCI state group belongs, and the first TCI field value is any TCI field value in the plurality of TCI field values; and
a processing module, configured to determine, based on the first MAC CE, a TCI state corresponding to each TCI field value in the plurality of TCI field values.

A thirty-eighth aspect of this application provides a second communication apparatus, including:
a transceiver module, configured to receive a first MAC CE from a terminal device, and send DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a TRP to which a corresponding TCI state group belongs; or the first MAC CE includes a first field, the first field indicates a quantity of TCI state groups corresponding to a first TCI field value and a TRP to which a corresponding TCI state group belongs, and the first TCI field value is any TCI field value in the plurality of TCI field values.

Based on the seventh aspect, the eighth aspect, the thirty-seventh aspect, or the thirty-eighth aspect, in a possible implementation, each TCI state group corresponds to one TRP, and different TCI state groups correspond to different TRPs.

Based on the seventh aspect, the eighth aspect, the thirty-seventh aspect, or the thirty-eighth aspect, in a possible implementation, the first field indicates any one of the following:
the any TCI field value corresponds to one TCI state group of a first TRP;
the any TCI field value corresponds to one TCI state group of a second TRP;
the any TCI field value corresponds to two TCI state groups, the two TCI state groups include a first TCI state group and a second TCI state group, the first TCI state group belongs to a first TRP, and the second TCI state group belongs to a second TRP; or
the any TCI field value corresponds to two TCI state groups, the two TCI state groups include a first TCI state group and a second TCI state group, the first TCI state group belongs to a second TRP, and the second TCI state group belongs to a first TRP.

Based on the seventh aspect, the eighth aspect, the thirty-seventh aspect, or the thirty-eighth aspect, in a possible implementation, for the any TCI field value, the first MAC CE further includes a second field, and the second field indicates a quantity of TCI states included in each TCI state group corresponding to the any TCI field value. In other words, the first MAC CE further includes a plurality of second fields, the plurality of second fields are in one-to-one correspondence with the plurality of TCI field values, and each second field indicates a quantity of TCI states included in each TCI state group corresponding to a corresponding TCI field value.

Based on the seventh aspect, the eighth aspect, the thirty-seventh aspect, or the thirty-eighth aspect, in a possible implementation, for the any TCI field value, the first MAC CE further includes a third field, and the third field indicates a type of a TCI state in each TCI state group corresponding to the any TCI field value; or the first MAC CE further includes a third field, the third field indicates a type of a TCI state in each TCI state group corresponding to the first TCI field value, and the first TCI field value is any TCI field value in the plurality of TCI field values, where the type of the TCI state includes an uplink TCI state, a downlink TCI state, or a joint uplink/downlink TCI state. In other words, the first MAC CE further includes a plurality of third fields, the plurality of third fields are in one-to-one correspondence with the plurality of TCI field values, and each third field indicates a type of a TCI state in each TCI state group corresponding to a corresponding TCI field value.

Based on the seventh aspect, the eighth aspect, the thirty-seventh aspect, or the thirty-eighth aspect, in a possible implementation, for the any TCI field value, the first MAC CE further includes a fourth field, the fourth field indicates an index (or an identifier) of a TCI state corresponding to the any TCI field value, and the index of the TCI state uniquely identifies the TCI state; or the first MAC CE further includes a fourth field, the fourth field indicates an index (or an identifier) of a TCI state corresponding to the first TCI field value, the index of the TCI state uniquely identifies the TCI state, and the first TCI field value is any TCI field value in the plurality of TCI field values. In other words, the first MAC CE includes a plurality of fourth fields, the plurality of fourth fields are in one-to-one correspondence with the plurality of TCI field values, and each fourth field indicates an index of a TCI state corresponding to a corresponding TCI field value.

A thirty-ninth aspect of this application provides a first communication apparatus, including:
a transceiver module, configured to receive a first MAC CE from a network device, and receive DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a quantity of TCI states included in each TCI state group; or the first MAC CE includes a first field, the first field indicates a quantity of TCI state groups corresponding to a first TCI field value and a quantity of TCI states included in each TCI state group, and the first TCI field value is any TCI field value in the plurality of TCI field values; and
a processing module, configured to determine, based on the first MAC CE, a TCI state corresponding to each TCI field value in the plurality of TCI field values.

A fortieth aspect of this application provides a second communication apparatus, including:
a transceiver module, configured to receive a first MAC CE from a terminal device, and send DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a quantity of TCI states included in each TCI state group; or the first MAC CE includes a first field, the first field indicates a quantity of TCI state groups corresponding to a first TCI field value and a quantity of TCI states included in each TCI state group, and the first TCI field value is any TCI field value in the plurality of TCI field values.

Based on the ninth aspect, the tenth aspect, the thirty-ninth aspect, or the fortieth aspect, in a possible implementation, each TCI state group corresponds to one TRP, and different TCI state groups correspond to different TRPs.

Based on the ninth aspect, the tenth aspect, the thirty-ninth aspect, or the fortieth aspect, in a possible implementation, the first field indicates any one of the following:
the any TCI field value corresponds to one TCI state group, and the TCI state group includes one TCI state;
the any TCI field value corresponds to one TCI state group, and the TCI state group includes two TCI states;
the any TCI field value corresponds to two TCI state groups, the two TCI state groups include a first TCI state group and a second TCI state group, the first TCI state group includes one TCI state, and the second TCI state group includes two TCI states;
the any TCI field value corresponds to two TCI state groups, the two TCI state groups include a first TCI state group and a second TCI state group, the first TCI state group includes two TCI states, and the second TCI state group includes one TCI state; or
the any TCI field value corresponds to two TCI state groups, the two TCI state groups include a first TCI state group and a second TCI state group, the first TCI state group includes two TCI states, and the second TCI state group includes two TCI states.

Based on the ninth aspect, the tenth aspect, the thirty-ninth aspect, or the fortieth aspect, in a possible implementation, for the any TCI field value, the first MAC CE further includes a second field, and the second field indicates a TRP to which a TCI state group corresponding to the any TCI field value belongs. In other words, the first MAC CE further includes a plurality of second fields, and the plurality of second fields are in one-to-one correspondence with the plurality of TCI field values. Each second field indicates a TRP to which a TCI state group corresponding to a corresponding TCI field value belongs.

Based on the ninth aspect, the tenth aspect, the thirty-ninth aspect, or the fortieth aspect, in a possible implementation, for the any TCI field value, the first MAC CE further includes a third field, and the third field indicates a type of a TCI state in each TCI state group corresponding to the any TCI field value. Alternatively, the first MAC CE further includes a third field, the third field indicates a type of a TCI state in each TCI state group corresponding to the first TCI field value, and the first TCI field value is any TCI field value in the plurality of TCI field values. In other words, the first MAC CE further includes a plurality of third fields, and the plurality of third fields are in one-to-one correspondence with the plurality of TCI field values. Each third field indicates a type of a TCI state in each TCI state group corresponding to a corresponding TCI field value.

Based on the ninth aspect, the tenth aspect, the thirty-ninth aspect, or the fortieth aspect, in a possible implementation, for the any TCI field value, the first MAC CE further includes a fourth field, the fourth field indicates an index (or an identifier) of a TCI state corresponding to the any TCI field value, and the index of the TCI state uniquely identifies the TCI state. Alternatively, the first MAC CE further includes a fourth field, the fourth field indicates an index (or an identifier) of a TCI state corresponding to the first TCI field value, the index of the TCI state uniquely identifies the TCI state, and the first TCI field value is any TCI field value in the plurality of TCI field values. In other words, the first MAC CE further includes a plurality of fourth fields, the plurality of fourth fields are in one-to-one correspondence with the plurality of TCI field values, and each fourth field indicates an index of a TCI state corresponding to a corresponding TCI field value.

A forty-first aspect of this application provides a first communication apparatus, including:
a transceiver module, configured to receive a first MAC CE from a network device, and receive DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a type of a TCI state in each TCI state group; or the first MAC CE includes a first field, the first field indicates a quantity of TCI state groups corresponding to the first TCI field value and a type of a TCI state in each TCI state group, and the first TCI field value is any TCI field value in the plurality of TCI field values; and
a processing module, configured to determine, based on the first MAC CE, a TCI state corresponding to each TCI field value in the plurality of TCI field values.

A forty-second aspect of this application provides a second communication apparatus, including:
a transceiver module, configured to receive a first MAC CE from a terminal device, and send DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a type of a TCI state in each TCI state group; or the first MAC CE includes a first field, the first field indicates a quantity of TCI state groups corresponding to a first TCI field value and a type of a TCI state in each TCI state group, and the first TCI field value is any TCI field value in the plurality of TCI field values.

Based on the eleventh aspect, the twelfth aspect, the forty-first aspect, or the forty-second aspect, in a possible implementation, each TCI state group corresponds to one TRP, and different TCI state groups correspond to different TRPs.

Based on the eleventh aspect, the twelfth aspect, the forty-first aspect, or the forty-second aspect, in a possible implementation, the first field indicates any one of the following:
the any TCI field value corresponds to one TCI state group, and a first TCI state in the TCI state group is an uplink TCI state;
the any TCI field value corresponds to one TCI state group, and a first TCI state in the TCI state group is a downlink TCI state;
the any TCI field value corresponds to two TCI state groups, and a first TCI state in each of the two TCI state groups is an uplink TCI state;
the any TCI field value corresponds to two TCI state groups, and a first TCI state in each of the two TCI state groups is a downlink TCI state;
the any TCI field value corresponds to two TCI state groups, a first TCI state in a first TCI state group in the two TCI state groups is an uplink TCI state, and a first TCI state in a second TCI state group is a downlink TCI state; or
the any TCI field value corresponds to two TCI state groups, a first TCI state in a first TCI state group in the two TCI state groups is a downlink TCI state, and a first TCI state in a second TCI state group is an uplink TCI state.

Based on the eleventh aspect, the twelfth aspect, the forty-first aspect, or the forty-second aspect, in a possible implementation, for the any TCI field value, the first MAC CE further includes a second field, and the second field indicates a TRP to which a TCI state group corresponding to the any TCI field value belongs. Alternatively, the first MAC CE further includes a second field, the second field indicates a TRP to which a TCI state group corresponding to the first TCI field value belongs, and the first TCI field value is any TCI field value in the plurality of TCI field values. In other words, the first MAC CE further includes a plurality of second fields, the plurality of second fields are in one-to-one correspondence with the plurality of TCI field values, and each second field indicates a TRP to which a TCI state group corresponding to a corresponding TCI field value belongs.

Based on the eleventh aspect, the twelfth aspect, the forty-first aspect, or the forty-second aspect, in a possible implementation, for the any TCI field value, the first MAC CE further includes a third field, and the third field indicates a quantity of TCI states included in each TCI state group corresponding to the any TCI field value. Alternatively, the first MAC CE further includes a third field, the third field indicates a quantity of TCI states included in each TCI state group corresponding to the first TCI field value, and the first TCI field value is any TCI field value in the plurality of TCI field values. In other words, the first MAC CE further includes a plurality of third fields, the plurality of third fields are in one-to-one correspondence with the plurality of TCI field values, and each third field indicates a quantity of TCI states included in each TCI state group corresponding to a corresponding TCI field value.

Based on the eleventh aspect, the twelfth aspect, the forty-first aspect, or the forty-second aspect, in a possible implementation, for the any TCI field value, the first MAC CE further includes a fourth field, the fourth field indicates an index (or an identifier) of a TCI state corresponding to the any TCI field value, and the index of the TCI state uniquely identifies the TCI state. Alternatively, the first MAC CE further includes a fourth field, the fourth field indicates an index (or an identifier) of a TCI state corresponding to the first TCI field value, and the first TCI field value is any TCI field value in the plurality of TCI field values. In other words, the first MAC CE further includes a plurality of fourth fields, the plurality of fourth fields are in one-to-one correspondence with the plurality of TCI field values, and each fourth field indicates an index of a TCI state corresponding to a corresponding TCI field value.

A forty-third aspect of this application provides a first communication apparatus, including:
a transceiver module, configured to receive a first MAC CE from a network device, and receive DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values; and
a processing module, configured to determine, based on the first MAC CE, a TCI state corresponding to each TCI field value in the plurality of TCI field values.

A forty-fourth aspect of this application provides a second communication apparatus, including:
a transceiver module, configured to receive a first MAC CE from a terminal device, and send DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values.

Based on the thirteenth aspect, the fourteenth aspect, the forty-third aspect, or the forty-fourth aspect, in a possible implementation, each TCI state group corresponds to one TRP, and different TCI state groups correspond to different TRPs.

Based on the thirteenth aspect, the fourteenth aspect, the forty-third aspect, or the forty-fourth aspect, in a possible implementation, if the first field indicates that the any TCI field value corresponds to one TCI state group, the second field indicates any one of the following:
the any TCI field value corresponds to one TCI state group of a first TRP, and a first TCI state in the TCI state group is an uplink TCI state; and if the TCI state group includes a second TCI state, the second TCI state is a downlink TCI state;
the any TCI field value corresponds to one TCI state group of a first TRP, and a first TCI state in the TCI state group is a downlink TCI state; and if the TCI state group includes a second TCI state, the second TCI state is a downlink TCI state;
the any TCI field value corresponds to one TCI state group of a second TRP, and a first TCI state in the TCI state group is a downlink TCI state; and if the TCI state group includes a second TCI state, the second TCI state is an uplink TCI state; or
the any TCI field value corresponds to one TCI state group of a second TRP, and a first TCI state in the TCI state group is an uplink TCI state; and if the TCI state group includes a second TCI state, the second TCI state is a downlink TCI state.

Based on the thirteenth aspect, the fourteenth aspect, the forty-third aspect, or the forty-fourth aspect, in a possible implementation, if the first field indicates that the any TCI field value corresponds to two TCI state groups, the second field indicates any one of the following:
the any TCI field value corresponds to one TCI state group of a first TRP and one TCI state group of a second TRP, and a first TCI state in each of the two TCI state groups is an uplink TCI state; and if each TCI state group includes a second TCI state, the second TCI state is a downlink TCI state;
the any TCI field value corresponds to one TCI state group of a first TRP and one TCI state group of a second TRP, and a first TCI state in each of the two TCI state groups is a downlink TCI state; and if each TCI state group includes a second TCI state, the second TCI state is an uplink TCI state;
the any TCI field value corresponds to one TCI state group of a first TRP and one TCI state group of a second TRP, and first TCI states in the two TCI state groups are respectively an uplink TCI state and a downlink TCI state; and if second TCI states exist, the second TCI states are respectively a downlink TCI state and an uplink TCI state; or
the any TCI field value corresponds to one TCI state group of a first TRP and one TCI state group of a second TRP, and first TCI states in the two TCI state groups are respectively a downlink TCI state and an uplink TCI state; and if second TCI states exist, the second TCI states are respectively an uplink TCI state and a downlink TCI state.

Based on the thirteenth aspect, the fourteenth aspect, the forty-third aspect, or the forty-fourth aspect, in a possible implementation, for the any TCI field value, the first MAC CE further includes a third field, and the third field indicates a quantity of TCI states included in each TCI state group corresponding to the any TCI field value. Alternatively, the first MAC CE further includes a third field, the third field indicates a quantity of TCI states included in each TCI state group corresponding to the first TCI field value, and the first TCI field value is any TCI field value in the plurality of TCI field values. In other words, the first MAC CE further includes a plurality of third fields, and the plurality of third fields are in one-to-one correspondence with the plurality of TCI field values. Each third field indicates a quantity of TCI states included in each TCI state group corresponding to a corresponding TCI field value.

Based on the thirteenth aspect, the fourteenth aspect, the forty-third aspect, or the forty-fourth aspect, in a possible implementation, for the any TCI field value, the first MAC CE further includes a fourth field, the fourth field indicates an index (or an identifier) of a TCI state corresponding to the any TCI field value, and the index of the TCI state uniquely identifies the TCI state. Alternatively, the first MAC CE further includes a fourth field, the fourth field indicates an index (or an identifier) of a TCI state corresponding to the any TCI field value, and the first TCI field value is any TCI field value in the plurality of TCI field values. In other words, the first MAC CE further includes a plurality of fourth fields, the plurality of fourth fields are in one-to-one correspondence with the plurality of TCI field values, and each fourth field indicates an index of a TCI state corresponding to a corresponding TCI field value.

A forty-fifth aspect of this application provides a first communication apparatus, including:
a transceiver module, configured to receive a first MAC CE from a network device, and receive DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values; and
a processing module, configured to determine, based on the first MAC CE, a TCI state corresponding to each TCI field value in the plurality of TCI field values.

A forty-sixth aspect of this application provides a second communication apparatus, including:
a transceiver module, configured to receive a first MAC CE from a terminal device, and send DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values.

Based on the fifteenth aspect, the sixteenth aspect, the forty-fifth aspect, or the forty-sixth aspect, in a possible implementation, each TCI state group corresponds to one TRP, and different TCI state groups correspond to different TRPs.

Based on the fifteenth aspect, the sixteenth aspect, the forty-fifth aspect, or the forty-sixth aspect, in a possible implementation, for the any TCI field value, the first MAC CE further includes a second field, and the second field indicates a TRP to which a TCI state group corresponding to the any TCI field value belongs. Alternatively, the first MAC CE further includes a second field, and the second field indicates a TRP to which a TCI state group corresponding to the first TCI field value belongs. In other words, the first MAC CE further includes a plurality of second fields, the plurality of second fields are in one-to-one correspondence with the plurality of TCI field values, and each second field indicates a TRP to which a TCI state group corresponding to a corresponding TCI field value belongs.

Based on the fifteenth aspect, the sixteenth aspect, the forty-fifth aspect, or the forty-sixth aspect, in a possible implementation, for the any TCI field value, the first MAC CE further includes a third field, and the third field indicates a quantity of TCI states included in each TCI state group corresponding to the any TCI field value and a type of a TCI state in each TCI state group. Alternatively, the first MAC CE further includes a third field, and the third field indicates a quantity of TCI states included in each TCI state group corresponding to the first TCI field value and a type of the TCI state in each TCI state group. In other words, the first MAC CE includes a plurality of third fields, the plurality of third fields are in one-to-one correspondence with the plurality of TCI field values, and each third field indicates a quantity of TCI states included in each TCI state group corresponding to a corresponding TCI field value and a type of a TCI state in each TCI state group.

Based on the fifteenth aspect, the sixteenth aspect, the forty-fifth aspect, or the forty-sixth aspect, in a possible implementation, for each TCI state group corresponding to the any TCI field value, the third field indicates any one of the following:
the TCI state group includes one uplink TCI state;
the TCI state group includes one downlink TCI state;
the TCI state group includes two TCI states; and in the two TCI states, a first TCI state is an uplink TCI state, and a second TCI state is a downlink TCI state; or
the TCI state group includes two TCI states; and in the two TCI states, a first TCI state is a downlink TCI state, and a second TCI state is an uplink TCI state.

Based on the fifteenth aspect, the sixteenth aspect, the forty-fifth aspect, or the forty-sixth aspect, in a possible implementation, for the any TCI field value, the first MAC CE further includes a fourth field, the fourth field indicates an index (or an identifier) of a TCI state corresponding to the any TCI field value, and the index of the TCI state uniquely identifies the TCI state. Alternatively, the first MAC CE further includes a fourth field, and the fourth field indicates an index (or an identifier) of a TCI state corresponding to the first TCI field value. In other words, the first MAC CE further includes a plurality of fourth fields, the plurality of fourth fields are in one-to-one correspondence with the plurality of TCI field values, and each fourth field indicates an index of a TCI state corresponding to a corresponding TCI field value.

A forty-seventh aspect of this application provides a first communication apparatus, including:
a transceiver module, configured to receive a first MAC CE from a network device, and receive DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value, a TRP to which each TCI state group belongs, and a type of a TCI state in each TCI state group; or the first MAC CE includes a first field, the first field indicates a quantity of TCI state groups corresponding to a first TCI field value, a TRP to which each TCI state group belongs, and a type of a TCI state in each TCI state group, and the first TCI field value is any TCI field value in the plurality of TCI field values; and
a processing module, configured to determine, based on the first MAC CE, a TCI state corresponding to each TCI field value in the plurality of TCI field values.

A forty-eighth aspect of this application provides a second communication apparatus, including:
a transceiver module, configured to receive a first MAC CE from a terminal device, and send DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value, a TRP to which each TCI state group belongs, and a type of a TCI state in each TCI state group; or the first MAC CE includes a first field, the first field indicates a quantity of TCI state groups corresponding to a first TCI field value, a TRP to which each TCI state group belongs, and a type of a TCI state in each TCI state group, and the first TCI field value is any TCI field value in the plurality of TCI field values.

Based on the seventeenth aspect, the eighteenth aspect, the forty-seventh aspect, or the forty-eighth aspect, in a possible implementation, each TCI state group corresponds to one TRP, and different TCI state groups correspond to different TRPs.

Based on the seventeenth aspect, the eighteenth aspect, the forty-seventh aspect, or the forty-eighth aspect, in a possible implementation, the first field indicates any one of the following:
one TCI state group of a first TRP, where a first TCI state in the TCI state group is an uplink TCI state; and if the TCI state group includes a second TCI state, the second TCI state is a downlink TCI state;
one TCI state group of a second TRP, where a first TCI state in the TCI state group is an uplink TCI state; and if the TCI state group includes a second TCI state, the second TCI state is a downlink TCI state;
one TCI state group of a first TRP, where a first TCI state in the TCI state group is a downlink TCI state; and if the TCI state group includes a second TCI state, the second TCI state is an uplink TCI state;
one TCI state group of a second TRP, where a first TCI state in the TCI state group is a downlink TCI state; and if the TCI state group includes a second TCI state, the second TCI state is an uplink TCI state;
one TCI state group of a first TRP and one TCI state group of a second TRP, where a first TCI state in the TCI state group of the first TRP is an uplink TCI state, and a first TCI state in the TCI state group of the second TRP is an uplink TCI state; and if a TCI state of the first TRP and/or a TCI state of the second TRP include/includes a second TCI state, the second TCI state is a downlink TCI state;
one TCI state group of a first TRP and one TCI state group of a second TRP, where a first TCI state in the TCI state group of the first TRP is a downlink TCI state, and a first TCI state in the TCI state group of the second TRP is a downlink TCI state; and if a TCI state of the first TRP and/or a TCI state of the second TRP include/includes a second TCI state, the second TCI state is an uplink TCI state;
one TCI state group of a first TRP and one TCI state group of a second TRP, where a first TCI state in the TCI state group of the first TRP is an uplink TCI state, and a first TCI state in the TCI state group of the second TRP is a downlink state; if the TCI state group of the first TRP includes a second TCI state, the second TCI state is a downlink TCI state; and if the TCI state group of the second TRP includes a second TCI state, the second TCI state is an uplink TCI state; or
one TCI state group of a first TRP and one TCI state group of a second TRP, where a first TCI state in the TCI state group of the first TRP is a downlink TCI state, and a first TCI state in the TCI state group of the second TRP is an uplink TCI state; if the TCI state group of the first TRP includes a second TCI state, the second TCI state is an uplink TCI state; and if the TCI state group of the second TRP includes a second TCI state, the second TCI state is a downlink TCI state.

Based on the seventeenth aspect, the eighteenth aspect, the forty-seventh aspect, or the forty-eighth aspect, in a possible implementation, for the any TCI field value, the first MAC CE further includes a second field, and the second field indicates a quantity of TCI states included in each TCI state group corresponding to the any TCI field value. Alternatively, the first MAC CE further includes a second field, and the second field indicates a quantity of TCI states included in each TCI state group corresponding to the first TCI field value. In other words, the first MAC CE further includes a plurality of second fields, the plurality of second fields are in one-to-one correspondence with the plurality of TCI field values, and each second field indicates a quantity of TCI states included in each TCI state group corresponding to a corresponding TCI field value.

Based on the seventeenth aspect, the eighteenth aspect, the forty-seventh aspect, or the forty-eighth aspect, in a possible implementation, for the any TCI field value, the first MAC CE further includes a third field, the third field indicates an index (or an identifier) of a TCI state corresponding to the any TCI field value, and the index of the TCI state uniquely identifies the TCI state. Alternatively, the first MAC CE further includes a third field, and the third field indicates an index (or an identifier) of a TCI state corresponding to the first TCI field value. In other words, the first MAC CE includes a plurality of third fields, the plurality of third fields are in one-to-one correspondence with the plurality of TCI field values, and each third field indicates an index of a TCI state corresponding to a corresponding TCI field value.

A forty-ninth aspect of this application provides a first communication apparatus, including:
a transceiver module, configured to receive a first MAC CE from a network device, and receive DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity and types of TCI state groups corresponding to the any TCI field value; or the first MAC CE includes a first field, the first field indicates a quantity and types of TCI state groups corresponding to a first TCI field value, and the first TCI field value is any TCI field value in the plurality of TCI field values; and
a processing module, configured to determine, based on the first MAC CE, a TCI state corresponding to each TCI field value in the plurality of TCI field values.

A fiftieth aspect of this application provides a second communication apparatus, including:
a transceiver module, configured to receive a first MAC CE from a terminal device, and send DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity and types of TCI state groups corresponding to the any TCI field value; or the first MAC CE includes a first field, the first field indicates a quantity and types of TCI state groups corresponding to a first TCI field value, and the first TCI field value is any TCI field value in the plurality of TCI field values.

Based on the nineteenth aspect, the twentieth aspect, the forty-ninth aspect, or the fiftieth aspect, in a possible implementation, TCI states in each TCI state group belong to a same type of TCI states, and TCI states in different TCI state groups belong to different types of TCI states.

Based on the nineteenth aspect, the twentieth aspect, the forty-ninth aspect, or the fiftieth aspect, in a possible implementation, the first field indicates any one of the following:
the any TCI field value corresponds to one TCI state group, and a TCI state in the TCI state group is an uplink TCI state;
the any TCI field value corresponds to one TCI state group, and a TCI state in the TCI state group is a downlink TCI state;
the any TCI field value corresponds to two TCI state groups, a TCI state in a first TCI state group in the two TCI state groups is an uplink TCI state, and a TCI state in a second TCI state group is a downlink TCI state; or
the any TCI field value corresponds to two TCI state groups, a TCI state in a first TCI state group in the two TCI state groups is a downlink TCI state, and a TCI state in a second TCI state group is an uplink TCI state.

Based on the nineteenth aspect, the twentieth aspect, the forty-ninth aspect, or the fiftieth aspect, in a possible implementation, for the any TCI field value, the first MAC CE further includes a second field, and the second field indicates a quantity of TCI states included in each TCI state group corresponding to the any TCI field value. In other words, the first MAC CE further includes a plurality of second fields, the plurality of second fields are in one-to-one correspondence with the plurality of TCI field values, and each second field indicates a quantity of TCI states included in each TCI state group corresponding to a corresponding TCI field value.

Based on the nineteenth aspect, the twentieth aspect, the forty-ninth aspect, or the fiftieth aspect, in a possible implementation, for the any TCI field value, the first MAC CE further includes a third field, and the third field indicates a TRP to which a TCI state in each TCI state group corresponding to the any TCI field value belongs. Alternatively, the first MAC CE further includes a third field, and the third field indicates a TRP to which a TCI state in each TCI state group corresponding to the first TCI field value belongs. In other words, the first MAC CE includes a plurality of third fields, the plurality of third fields are in one-to-one correspondence with the plurality of TCI field values, and each third field indicates a TRP to which a TCI state in each TCI state group corresponding to a corresponding TCI field value belongs.

Based on the nineteenth aspect, the twentieth aspect, the forty-ninth aspect, or the fiftieth aspect, in a possible implementation, for the any TCI field value, the first MAC CE further includes a fourth field, the fourth field indicates an index (or an identifier) of a TCI state corresponding to the any TCI field value, and the index of the TCI state uniquely identifies the TCI state. Alternatively, the first MAC CE further includes a fourth field, and the fourth field indicates an index (or an identifier) of a TCI state corresponding to the first TCI field value. In other words, the first MAC CE includes a plurality of fourth fields, the plurality of fourth fields are in one-to-one correspondence with the plurality of TCI field values, and each fourth field indicates an index of a TCI state corresponding to a corresponding TCI field value.

A fifty-first aspect of this application provides a first communication apparatus, including:
a transceiver module, configured to receive a first MAC CE from a network device, and receive DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a quantity of TCI states included in each TCI state group; or the first MAC CE includes a first field, the first field indicates a quantity of TCI state groups corresponding to a first TCI field value and a quantity of TCI states included in each TCI state group, and the first TCI field value is any TCI field value in the plurality of TCI field values; and
a processing module, configured to determine, based on the first MAC CE, a TCI state corresponding to each TCI field value in the plurality of TCI field values.

A fifty-second aspect of this application provides a second communication apparatus, including:
a transceiver module, configured to receive a first MAC CE from a terminal device, and send DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a quantity of TCI states included in each TCI state group; or the first MAC CE includes a first field, the first field indicates a quantity of TCI state groups corresponding to a first TCI field value and a quantity of TCI states included in each TCI state group, and the first TCI field value is any TCI field value in the plurality of TCI field values.

Based on the twenty-first aspect, the twenty-second aspect, the fifty-first aspect, or the fifty-second aspect, in a possible implementation, TCI states in each TCI state group belong to a same type of TCI states, and TCI states in different TCI state groups belong to different types of TCI states.

Based on the twenty-first aspect, the twenty-second aspect, the fifty-first aspect, or the fifty-second aspect, in a possible implementation, the first field indicates any one of the following:
the any TCI field value corresponds to a TCI state group of one type, and the TCI state group includes one TCI state;
the any TCI field value corresponds to a TCI state group of one type, and the TCI state group includes two TCI states; or
the any TCI field value corresponds to TCI state groups of two types, a TCI state group of one of the two types includes one TCI state, and a TCI state group of the other type includes two TCI states.

Based on the twenty-first aspect, the twenty-second aspect, the fifty-first aspect, or the fifty-second aspect, in a possible implementation, for the any TCI field value, the first MAC CE further includes a second field, and the second field indicates a type of each TCI state group corresponding to the any TCI field value. Alternatively, the first MAC CE further includes a second field, and the second field indicates a type of each TCI state group corresponding to the first TCI field value. In other words, the first MAC CE further includes a plurality of second fields, the plurality of second fields are in one-to-one correspondence with the plurality of TCI field values, and each second field indicates a type of a TCI state group corresponding to a corresponding TCI field value.

Based on the twenty-first aspect, the twenty-second aspect, the fifty-first aspect, or the fifty-second aspect, in a possible implementation, for the any TCI field value, the first MAC CE further includes a third field, and the third field indicates a TRP to which a TCI state in each TCI state group corresponding to the any TCI field value belongs. Alternatively, the first MAC CE further includes a third field, and the third field indicates a TRP to which a TCI state in each TCI state group corresponding to the first TCI field value belongs. In other words, the first MAC CE further includes a plurality of third fields, the plurality of third fields are in one-to-one correspondence with the plurality of TCI field values, and each third field indicates a TRP to which a TCI state in each TCI state group corresponding to a corresponding TCI field value belongs.

Based on the twenty-first aspect, the twenty-second aspect, the fifty-first aspect, or the fifty-second aspect, in a possible implementation, for the any TCI field value, the first MAC CE further includes a fourth field, the fourth field indicates an index (or an identifier) of a TCI state corresponding to the any TCI field value, and the index of the TCI state uniquely identifies the TCI state. Alternatively, the first MAC CE further includes a fourth field, and the fourth field indicates an index (or an identifier) of a TCI state corresponding to the first TCI field value. In other words, the first MAC CE includes a plurality of fourth fields, the plurality of fourth fields are in one-to-one correspondence with the plurality of TCI field values, and each fourth field indicates an index of a TCI state corresponding to a corresponding TCI field value.

A fifty-third aspect of this application provides a first communication apparatus, including:
a transceiver module, configured to receive a first MAC CE from a network device, and receive DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a TRP to which a TCI state in each corresponding TCI state group belongs; or the first MAC CE includes a first field, the first field indicates a quantity of TCI state groups corresponding to a first TCI field value and a TRP to which a TCI state in each corresponding TCI state group belongs, and the first TCI field value is any TCI field value in the plurality of TCI field values; and
a processing module, configured to determine, based on the first MAC CE, a TCI state corresponding to each TCI field value in the plurality of TCI field values.

A fifty-fourth aspect of this application provides a second communication apparatus, including:
a transceiver module, configured to receive a first MAC CE from a terminal device, and send DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value and a TRP to which a TCI state in each corresponding TCI state group belongs; or the first MAC CE includes a first field, the first field indicates a quantity of TCI state groups corresponding to a first TCI field value and a TRP to which a TCI state in each corresponding TCI state group belongs, and the first TCI field value is any TCI field value in the plurality of TCI field values.

Based on the twenty-third aspect, the twenty-fourth aspect, the fifty-third aspect, or the fifty-fourth aspect, in a possible implementation, TCI states in each TCI state group belong to a same type of TCI states, and TCI states in different TCI state groups belong to different types of TCI states.

Based on the twenty-third aspect, the twenty-fourth aspect, the fifty-third aspect, or the fifty-fourth aspect, in a possible implementation, the first field indicates any one of the following:
the any TCI field value corresponds to one TCI state group, and a first TCI state in the TCI state group belongs to a first TRP;
the any TCI field value corresponds to one TCI state group, and a first TCI state in the TCI state group belongs to a second TRP;
the any TCI field value corresponds to two TCI state groups, and first TCI states in the two TCI state groups both belong to a first TRP;
the any TCI field value corresponds to two TCI state groups, and first TCI states in the two TCI state groups both belong to a second TRP;
the any TCI field value corresponds to two TCI state groups, a first TCI state in a first TCI state group in the two TCI state groups belongs to a first TRP, and a first TCI state in a second TCI state group belongs to a second TRP; or
the any TCI field value corresponds to two TCI state groups, a second TCI state in a first TCI state group in the two TCI state groups belongs to a second TRP, and a first TCI state in a second TCI state group belongs to a first TRP.

Based on the twenty-third aspect, the twenty-fourth aspect, the fifty-third aspect, or the fifty-fourth aspect, in a possible implementation, for the any TCI field value, the first MAC CE further includes a second field, and the second field indicates a type of each TCI state group corresponding to the any TCI field value. Alternatively, the first MAC CE further includes a second field, and the second field indicates a type of each TCI state group corresponding to the first TCI field value. In other words, the first MAC CE further includes a plurality of second fields, the plurality of second fields are in one-to-one correspondence with the plurality of TCI field values, and each second field indicates a type of each TCI state group corresponding to a corresponding TCI field value.

Based on the twenty-third aspect, the twenty-fourth aspect, the fifty-third aspect, or the fifty-fourth aspect, in a possible implementation, for the any TCI field value, the first MAC CE further includes a third field, and the third field indicates a quantity of TCI states included in each TCI state group corresponding to the any TCI field value. Alternatively, the first MAC CE further includes a third field, and the third field indicates a quantity of TCI states included in each TCI state group corresponding to the first TCI field value. In other words, the first MAC CE further includes a plurality of third fields, the plurality of third fields are in one-to-one correspondence with the plurality of TCI field values, and each third field indicates a quantity of TCI states included in each TCI state group corresponding to a corresponding TCI field value.

Based on the twenty-third aspect, the twenty-fourth aspect, the fifty-third aspect, or the fifty-fourth aspect, in a possible implementation, for the any TCI field value, the first MAC CE further includes a fourth field, the fourth field indicates an index (or an identifier) of a TCI state corresponding to the any TCI field value, and the index of the TCI state uniquely identifies the TCI state. Alternatively, the first MAC CE further includes a fourth field, and the fourth field indicates an index (or an identifier) of a TCI state corresponding to the first TCI field value. In other words, the first MAC CE includes a plurality of fourth fields, the plurality of fourth fields are in one-to-one correspondence with the plurality of TCI field values, and each fourth field indicates an index of a TCI state corresponding to a corresponding TCI field value.

A fifty-fifth aspect of this application provides a first communication apparatus, including:
a transceiver module, configured to receive a first MAC CE from a network device, and receive DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values; and
a processing module, configured to determine, based on the first MAC CE, a TCI state corresponding to each TCI field value in the plurality of TCI field values.

A fifty-sixth aspect of this application provides a second communication apparatus, including:
a transceiver module, configured to receive a first MAC CE from a terminal device, and send DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values.

Based on the twenty-fifth aspect, the twenty-sixth aspect, the fifty-fifth aspect, or the fifty-sixth aspect, in a possible implementation, TCI states in each TCI state group belong to a same type of TCI states, and TCI states in different TCI state groups belong to different types of TCI states.

Based on the twenty-fifth aspect, the twenty-sixth aspect, the fifty-fifth aspect, or the fifty-sixth aspect, in a possible implementation, for the any TCI field value, the first MAC CE further includes a second field, and the second field indicates a type of each TCI state group corresponding to the any TCI field value and a TRP to which a TCI state in each TCI state group belongs. In other words, the first MAC CE includes a plurality of second fields, the plurality of second fields are in one-to-one correspondence with the plurality of TCI field values, and each second field indicates a type of each TCI state group corresponding to a corresponding TCI field value and a TRP to which a TCI state in each TCI state group belongs.

Based on the twenty-fifth aspect, the twenty-sixth aspect, the fifty-fifth aspect, or the fifty-sixth aspect, in a possible implementation, if the first field indicates that the any TCI field value corresponds to one TCI state group, the second field indicates any one of the following:
the any TCI field value corresponds to one uplink TCI state group, and a first TCI state in the uplink TCI state group belongs to a first TRP; and if the uplink TCI state group includes a second TCI state, the second TCI state belongs to a second TRP;
the any TCI field value corresponds to one downlink TCI state group, and a first TCI state in the downlink TCI state group belongs to a first TRP; and if the downlink TCI state group includes a second TCI state, the second TCI state belongs to a second TRP;
the any TCI field value corresponds to one uplink TCI state group, and a first TCI state in the uplink TCI state group belongs to a second TRP; and if the uplink TCI state group includes a second TCI state, the second TCI state belongs to a first TRP; or
the any TCI field value corresponds to one downlink TCI state group, and a first TCI state in the downlink TCI state group belongs to a second TRP; and if the downlink TCI state group includes a second TCI state, the second TCI state belongs to a first TRP.

Based on the twenty-fifth aspect, the twenty-sixth aspect, the fifty-fifth aspect, or the fifty-sixth aspect, in a possible implementation, if the first field indicates that the any TCI field value corresponds to two TCI state groups, the second field indicates any one of the following:
the any TCI field value corresponds to one uplink TCI state group and one downlink TCI state group, and corresponding first TCI states in the uplink TCI state group and the downlink TCI state group belong to a first TRP; and if the uplink TCI state group and/or the downlink TCI state group include/includes a corresponding second TCI state, the second TCI state belongs to a second TRP;
the any TCI field value corresponds to one uplink TCI state group and one downlink TCI state group, and corresponding first TCI states in the uplink TCI state group and the downlink TCI state group belong to a second TRP; and if the uplink TCI state group and/or the downlink TCI state group include/includes a corresponding second TCI state, the second TCI state belongs to the second TRP;
the any TCI field value corresponds to one uplink TCI state group and one downlink TCI state group, a first TCI state in the uplink TCI state group belongs to a first TRP, and a second TCI state belongs to a second TRP; if the uplink TCI state group includes a corresponding second TCI state, the second TCI state belongs to the second TRP; and if the downlink TCI state group includes a corresponding second TCI state, the second TCI state belongs to the first TRP; or
the any TCI field value corresponds to one uplink TCI state group and one downlink TCI state group, a first TCI state in the uplink TCI state group belongs to a second TRP, and a second TCI state belongs to a first TRP; if the uplink TCI state group includes a corresponding second TCI state, the second TCI state belongs to the first TRP; and if the downlink TCI state group includes a corresponding second TCI state, the second TCI state belongs to the second TRP.

Based on the twenty-fifth aspect, the twenty-sixth aspect, the fifty-fifth aspect, or the fifty-sixth aspect, in a possible implementation, for the any TCI field value, the first MAC CE further includes a third field, and the third field indicates a quantity of TCI states included in each TCI state group corresponding to the any TCI field value. Alternatively, the first MAC CE further includes a third field, and the third field indicates a quantity of TCI states included in each TCI state group corresponding to the first TCI field value. In other words, the first MAC CE includes a plurality of third fields, the plurality of third fields are in one-to-one correspondence with the plurality of TCI field values, and each third field indicates a quantity of TCI states included in each TCI state group corresponding to a corresponding TCI field value.

Based on the twenty-fifth aspect, the twenty-sixth aspect, the fifty-fifth aspect, or the fifty-sixth aspect, in a possible implementation, for the any TCI field value, the first MAC CE further includes a fourth field, the fourth field indicates an index (or an identifier) of a TCI state corresponding to the any TCI field value, and the index of the TCI state uniquely identifies the TCI state. Alternatively, the first MAC CE further includes a fourth field, and the fourth field indicates an index (or an identifier) of a TCI state corresponding to the first TCI field value. In other words, the first MAC CE includes a plurality of fourth fields, the plurality of fourth fields are in one-to-one correspondence with the plurality of TCI field values, and each fourth field indicates an index of a TCI state corresponding to a corresponding TCI field value.

A fifty-seventh aspect of this application provides a first communication apparatus, including:
a transceiver module, configured to receive a first MAC CE from a network device, and receive DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values; and
a processing module, configured to determine, based on the first MAC CE, a TCI state corresponding to each TCI field value in the plurality of TCI field values.

A fifty-eighth aspect of this application provides a second communication apparatus, including:
a transceiver module, configured to receive a first MAC CE from a terminal device, and send DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value; or the first MAC CE includes a first field, the first field indicates a quantity of TCI state groups corresponding to a first TCI field value, and the first TCI field value is any TCI field value in the plurality of TCI field values.

Based on the twenty-seventh aspect, the twenty-eighth aspect, the fifty-seventh aspect, and the fifty-eighth aspect, in a possible implementation, TCI states in each TCI state group belong to a same type of TCI states, and TCI states in different TCI state groups belong to different types of TCI states.

Based on the twenty-seventh aspect, the twenty-eighth aspect, the fifty-seventh aspect, and the fifty-eighth aspect, in a possible implementation, for the any TCI field value, the first MAC CE further includes a second field, and the second field indicates a type of each TCI state group corresponding to the any TCI field value. Alternatively, the first MAC CE further includes a second field, and the second field indicates a type of each TCI state group corresponding to the first TCI field value. In other words, the first MAC CE includes a plurality of second fields, the plurality of second fields are in one-to-one correspondence with the plurality of TCI field values, and each second field indicates a type of each TCI state group corresponding to a corresponding TCI field value.

Based on the twenty-seventh aspect, the twenty-eighth aspect, the fifty-seventh aspect, and the fifty-eighth aspect, in a possible implementation, for the any TCI field value, the first MAC CE further includes a third field, and the third field indicates a quantity of TCI states included in each TCI state group corresponding to the any TCI field value and a TRP to which each TCI state group belongs. Alternatively, the first MAC CE further includes a third field, and the third field indicates a quantity of TCI states included in each TCI state group corresponding to the first TCI field value and a TRP to which each TCI state group belongs. In other words, the first MAC CE includes a plurality of third fields, the plurality of third fields are in one-to-one correspondence with the plurality of TCI field values, and each third field indicates a quantity of TCI states included in each TCI state group corresponding to a corresponding TCI state group and a TRP to which each TCI state group belongs.

Based on the twenty-seventh aspect, the twenty-eighth aspect, the fifty-seventh aspect, and the fifty-eighth aspect, in a possible implementation, for each TCI state group corresponding to the any TCI field value, the third field indicates any one of the following:
the TCI state group includes one TCI state of a first TRP;
the TCI state group includes one TCI state of a second TRP;
the TCI state group includes a first TCI state and a second TCI state, the first TCI state belongs to a first TRP, and the second TCI state belongs to a second TRP; or
the TCI state group includes a first TCI state and a second TCI state, the first TCI state belongs to a second TRP, and the second TCI state belongs to a first TRP.

Based on the twenty-seventh aspect, the twenty-eighth aspect, the fifty-seventh aspect, and the fifty-eighth aspect, in a possible implementation, for the any TCI field value, first indication information further includes a fourth field, the fourth field indicates an index (or an identifier) of a TCI state corresponding to the any TCI field value, and the index of the TCI state uniquely identifies the TCI state. Alternatively, first indication information further includes a fourth field, and the fourth field indicates an index (or an identifier) of a TCI state corresponding to the first TCI field value. In other words, the first MAC CE includes a plurality of fourth fields, the plurality of fourth fields are in one-to-one correspondence with the plurality of TCI field values, and each fourth field indicates an index of a TCI state corresponding to a corresponding TCI field value.

A fifty-ninth aspect of this application provides a first communication apparatus, including:
a transceiver module, configured to receive a first MAC CE from a network device, and receive DCI from the network device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value, a type of each TCI state group, and a TRP to which a TCI state in each TCI state group belongs; or the first MAC CE includes a first field, the first field indicates a quantity of TCI state groups corresponding to a first TCI field value, a type of each TCI state group, and a TRP to which a TCI state in each TCI state group belongs, and the first TCI field value is any TCI field value in the plurality of TCI field values; and
a processing module, configured to determine, based on the first MAC CE, a TCI state corresponding to each TCI field value in the plurality of TCI field values.

A sixtieth aspect of this application provides a second communication apparatus, including:
a transceiver module, configured to receive a first MAC CE from a terminal device, and send DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value, a type of each TCI state group, and a TRP to which a TCI state in each TCI state group belongs; or the first MAC CE includes a first field, the first field indicates a quantity of TCI state groups corresponding to a first TCI field value, a type of each TCI state group, and a TRP to which a TCI state in each TCI state group belongs, and the first TCI field value is any TCI field value in the plurality of TCI field values.

Based on the twenty-ninth aspect, the thirtieth aspect, the fifty-ninth aspect, or the sixtieth aspect, in a possible implementation, TCI states in each TCI state group belong to a same type of TCI states, and TCI states in different TCI state groups belong to different types of TCI states.

Based on the twenty-ninth aspect, the thirtieth aspect, the fifty-ninth aspect, or the sixtieth aspect, in a possible implementation, the first field indicates any one of the following:
the any TCI field value corresponds to one uplink TCI state group, and a first TCI state in the uplink TCI state group belongs to a first TRP; and if the uplink TCI state group includes a second TCI state, the second TCI state belongs to a second TRP;
the any TCI field value corresponds to one downlink TCI state group, and a first TCI state in the downlink TCI state group belongs to a first TRP; and if the downlink TCI state group includes a second TCI state, the second TCI state belongs to a second TRP;
the any TCI field value corresponds to one uplink TCI state group, and a first TCI state in the uplink TCI state group belongs to a second TRP; and if the uplink TCI state group includes a second TCI state, the second TCI state belongs to a first TRP;
the any TCI field value corresponds to one downlink TCI state group, and a first TCI state in the downlink TCI state group belongs to a second TRP; and if the downlink TCI state group includes a second TCI state, the second TCI state belongs to a first TRP;
the any TCI field value corresponds to one uplink TCI state group and one downlink TCI state group, and corresponding first TCI states in the uplink TCI state group and the downlink TCI state group belong to a first TRP; and if the uplink TCI state group and/or the downlink TCI state group include/includes a corresponding second TCI state, the second TCI state belongs to a second TRP;
the any TCI field value corresponds to one uplink TCI state group and one downlink TCI state group, and corresponding first TCI states in the uplink TCI state group and the downlink TCI state group belong to a second TRP; and if the uplink TCI state group and/or the downlink TCI state group include/includes a corresponding second TCI state, the second TCI state belongs to a first TRP;
the any TCI field value corresponds to one uplink TCI state group and one downlink TCI state group, a first TCI state in the uplink TCI state group belongs to a first TRP, and a first TCI state in the downlink TCI state group belongs to a second TRP; if the uplink TCI state group includes a second TCI state, the second TCI state belongs to the second TRP; and if the downlink TCI state group includes a second TCI state, the second TCI state belongs to the first TRP; or
the any TCI field value corresponds to one uplink TCI state group and one downlink TCI state group, a first TCI state in the uplink TCI state group belongs to a second TRP, and a first TCI state in the downlink TCI state group belongs to a first TRP; if the uplink TCI state group includes a second TCI state, the second TCI state belongs to the first TRP; and if the downlink TCI state group includes a second TCI state, the second TCI state belongs to the second TRP.

Based on the twenty-ninth aspect, the thirtieth aspect, the fifty-ninth aspect, or the sixtieth aspect, in a possible implementation, for the any TCI field value, the first MAC CE further includes a second field, and the second field indicates a quantity of TCI states included in each TCI state group corresponding to the any TCI field value. In other words, the first MAC CE further includes a plurality of second fields, the plurality of second fields are in one-to-one correspondence with the plurality of TCI field values, and each second field indicates a quantity of TCI states included in each TCI state group corresponding to a corresponding TCI field value.

Based on the twenty-ninth aspect, the thirtieth aspect, the fifty-ninth aspect, or the sixtieth aspect, in a possible implementation, for the any TCI field value, the first MAC CE further includes a third field, the third field indicates an index (or an identifier) of a TCI state corresponding to the any TCI field value, and the index of the TCI state uniquely identifies the TCI state. In other words, the first MAC CE further includes a plurality of third fields, the plurality of third fields are in one-to-one correspondence with the plurality of TCI field values, and each third field indicates an index of a TCI state corresponding to a corresponding TCI field value.

It should be noted that, in the foregoing aspects, the any TCI field value may be replaced with the first TCI field value, and the first TCI field value is any TCI field value in the plurality of TCI field values. That the any TCI field value corresponds to one TCI state may be replaced with: A quantity of TCI states corresponding to the any TCI field value is 1, or a quantity of TCI states corresponding to the first TCI field value is 1. That the any TCI field value corresponds to two TCI states may be replaced with: A quantity of TCI states corresponding to the any TCI field value is 2, or a quantity of TCI states corresponding to the first TCI field value is 2.

That the any TCI field value corresponds to one uplink TCI state may be replaced with: A quantity of uplink TCI states corresponding to the any TCI field value is 1, or a quantity of uplink TCI states corresponding to the first TCI field value is 1. That the any TCI field value corresponds to two uplink TCI states may be replaced with: A quantity of uplink TCI states corresponding to the any TCI field value is 2, or a quantity of uplink TCI states corresponding to the first TCI field value is 2. That the any TCI field value corresponds to one downlink TCI state may be replaced with: A quantity of downlink TCI states corresponding to the any TCI field value is 1, or a quantity of downlink TCI states corresponding to the first TCI field value is 1. That the any TCI field value corresponds to two downlink TCI states may be replaced with: A quantity of downlink TCI states corresponding to the any TCI field value is 2, or a quantity of downlink TCI states corresponding to the first TCI field value is 2.

That the any TCI field value corresponds to one TCI state group may be replaced with: A quantity of TCI state groups corresponding to the any TCI field value is 1, or a quantity of TCI state groups corresponding to the first TCI field value is 1. That the any TCI field value corresponds to two TCI state groups may be replaced with: A quantity of TCI state groups corresponding to the any TCI field value is 2, or a quantity of TCI state groups corresponding to the first TCI field value is 2.

That the any TCI field value corresponds to one uplink TCI state group may be replaced with: A quantity of uplink TCI state groups corresponding to the any TCI field value is 1, or a quantity of uplink TCI state groups corresponding to the first TCI field value is 1. That the any TCI field value corresponds to two uplink TCI state groups may be replaced with: A quantity of uplink TCI state groups corresponding to the any TCI field value is 2, or a quantity of uplink TCI state groups corresponding to the first TCI field value is 2.

That the any TCI field value corresponds to one downlink TCI state group may be replaced with: A quantity of downlink TCI state groups corresponding to the any TCI field value is 1, or a quantity of downlink TCI state groups corresponding to the first TCI field value is 1. That the any TCI field value corresponds to two downlink TCI state groups may be replaced with: A quantity of downlink TCI state groups corresponding to the any TCI field value is 2, or a quantity of downlink TCI state groups corresponding to the first TCI field value is 2.

A sixty-first aspect of this application provides a communication apparatus, where the communication apparatus includes a processor and a memory. The memory stores a computer program or computer instructions, and the processor is configured to invoke and run the computer program or the computer instructions stored in the memory, to enable the processor to implement any implementation of any one of the first aspect, the third aspect, the fifth aspect, the seventh aspect, the ninth aspect, the eleventh aspect, the thirteenth aspect, the fifteenth aspect, the seventeenth aspect, the nineteenth aspect, the twenty-first aspect, the twenty-third aspect, the twenty-fifth aspect, the twenty-seventh aspect, and the twenty-ninth aspect.

Optionally, the communication apparatus further includes a transceiver, and the processor is configured to control the transceiver to receive or send a signal.

A sixty-second aspect of this application provides a communication apparatus, where the communication apparatus includes a processor. The processor is configured to invoke a computer program or computer instructions in a memory, to enable the processor to implement any implementation of any one of the second aspect, the fourth aspect, the sixth aspect, the eighth aspect, the tenth aspect, the twelfth aspect, the fourteenth aspect, the sixteenth aspect, the eighteenth aspect, the twentieth aspect, the twenty-second aspect, the twenty-fourth aspect, the twenty-sixth aspect, the twenty-eighth aspect, and the thirtieth aspect.

Optionally, the communication apparatus further includes a transceiver, and the processor is configured to control the transceiver to receive or send a signal.

A sixty-third aspect of this application provides a communication apparatus. The communication apparatus includes a processor, and the processor is configured to perform any implementation of any one of the first aspect to the thirtieth aspect.

A sixty-fourth aspect of this application provides a computer program product including instructions. When the computer program product runs on a computer, the computer is enabled to perform any implementation of any one of the first aspect to the thirtieth aspect.

A sixty-fifth aspect of this application provides a computer-readable storage medium, including computer instructions. When the instructions are run on a computer, the computer is enabled to perform any implementation of any one of the first aspect to the thirtieth aspect.

A sixty-sixth aspect of this application provides a chip apparatus, including a processor, configured to invoke a computer program or computer instructions in a memory, to enable the processor to perform any implementation of any one of the first aspect to the thirtieth aspect.

Optionally, the processor is coupled to the memory through an interface.

A sixty-seventh aspect of this application provides a communication system, where the communication system includes a terminal device and a network device. The terminal device is configured to perform any implementation of any one of the first aspect, the third aspect, the fifth aspect, the seventh aspect, the ninth aspect, the eleventh aspect, the thirteenth aspect, the fifteenth aspect, the seventeenth aspect, the nineteenth aspect, the twenty-first aspect, the twenty-third aspect, the twenty-fifth aspect, the twenty-seventh aspect, and the twenty-ninth aspect. The network device
is configured to implement any implementation of any one of the second aspect, the fourth aspect, the sixth aspect, the eighth aspect, the tenth aspect, the twelfth aspect, the fourteenth aspect, the sixteenth aspect, the eighteenth aspect, the twentieth aspect, the twenty-second aspect, the twenty-fourth aspect, the twenty-sixth aspect, the twenty-eighth aspect, and the thirtieth aspect.

According to the foregoing technical solutions, it can be learned that embodiments of this application have the following advantages:

It can be learned from the foregoing technical solutions that the terminal device receives the first MAC CE from the network device. The terminal device receives the DCI from the network device. The DCI includes the TCI field, the TCI field corresponds to the plurality of TCI field values, any TCI field value in the plurality of TCI field values corresponds to one or two TCI state groups, and each TCI state group includes one or two TCI states. For the any TCI field value, the first MAC CE includes a first field, and the first field indicates a quantity of TCI state groups corresponding to the any TCI field value. The terminal device determines, based on the first MAC CE, the TCI state corresponding to each TCI field value in the plurality of TCI field values. It can be learned from this that, for the any TCI field value, the first MAC CE includes the first field, and the first field indicates the quantity of TCI state groups corresponding to the any TCI field value. In this way, the terminal device determines, based on the first MAC CE, the TCI state corresponding to each TCI field value in the plurality of TCI field values, so that the network device indicates the TCI state to the terminal device by using the TCI field value in the DCI; and the TCI state corresponds to a corresponding beam, so that the network device indicates the beam to the terminal device.

### BRIEF DESCRIPTION OF DRAWINGS

FIG. 1 is a diagram of a communication system according to an embodiment of this application;
FIG. 2 is another diagram of a communication system according to an embodiment of this application;
FIG. 3 is a diagram of a scenario to which a beam indication method is applicable according to an embodiment of this application;
FIG. 4 is a diagram of another scenario to which a beam indication method is applicable according to an embodiment of this application;
FIG. 5 is a diagram of indicating a common beam by a network device to a terminal device according to an embodiment of this application;
FIG. 6 is a diagram of a format of a MAC CE in a single-TRP scenario according to an embodiment of this application;
FIG. 7 is a diagram of an embodiment of a beam indication method according to embodiments of this application;
FIG. 8 is a diagram of a format of a first MAC CE according to an embodiment of this application;
FIG. 9 is a diagram of another format of a first MAC CE according to an embodiment of this application;
FIG. 10 is a diagram of another embodiment of a beam indication method according to embodiments of this application;
FIG. 11 is a diagram of still another format of a first MAC CE according to an embodiment of this application;
FIG. 12 is a diagram of still another format of a first MAC CE according to an embodiment of this application;
FIG. 13 is a diagram of a structure of a communication apparatus according to an embodiment of this application;
FIG. 14 is a diagram of another structure of a communication apparatus according to an embodiment of this application;
FIG. 15 is a diagram of another structure of a communication apparatus according to an embodiment of this application;
FIG. 16 is a diagram of another structure of a communication apparatus according to an embodiment of this application; and
FIG. 17 is a diagram of another structure of a communication apparatus according to an embodiment of this application.

### DESCRIPTION OF EMBODIMENTS

Embodiments of this application provide a beam indication method and a related apparatus, to enable a terminal device to determine, based on a first MAC CE, a TCI state corresponding to each TCI field value in a plurality of TCI field values, so that a network device indicates the TCI state to the terminal device by using the TCI field value in DCI; and the TCI state corresponds to a corresponding beam, so that the network device indicates the beam to the terminal device.

The following describes technical solutions in this application with reference to the accompanying drawings.

The technical solutions in this application may be applied to various communication systems, for example, a 5G system, a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system (for example, a 6G mobile communication system) after the 5G network, and a vehicle-to-everything (vehicle-to-everything, V2X) communication system.

The communication system to which this application is applicable includes a network device and a terminal device. The network device and the terminal device may perform communication by using a beam.

The following describes the terminal device and the network device in this application.

The terminal device may be a wireless terminal device that can receive scheduling and indication information of the network device. The terminal device may be a device that provides a user with voice and/or data connectivity, a handheld device having a wireless connection function, or another processing device connected to a wireless modem.

The terminal device is also referred to as user equipment (user equipment, UE), a mobile station (mobile station, MS), a mobile terminal (mobile terminal, MT), customer premises equipment (customer premises equipment, CPE), or the like. The terminal device is a device that includes a wireless communication function (providing voice/data connectivity to a user), for example, a handheld device or a vehicle-mounted device having a wireless connection function. Currently, some examples of the terminal device are: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in an Internet of vehicles, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the self-driving may be an uncrewed aerial vehicle, a helicopter, or an airplane. For example, the wireless terminal in the Internet of vehicles may be a vehicle-mounted device, an entire vehicle device, a vehicle-mounted module, a vehicle, or a ship. The wireless terminal in the industrial control may be a camera, a robot, a robotic arm, or the like. The wireless terminal in the smart home may be a television, an air conditioner, a sweeper, a speaker, a set-top box, or the like.

It should be noted that the terminal device may alternatively be a chip, a module, or a control unit in the foregoing possible devices or apparatuses. This is not specifically limited in this application.

The network device may be a device in a wireless network. For example, the network device may be a device that is deployed in a radio access network and that provides a wireless communication function for the terminal device. For example, the network device may be a radio access network (radio access network, RAN) node that connects the terminal device to the wireless network, and may also be referred to as an access network device, a RAN entity, an access node, a network node, a communication apparatus, or the like.

Specifically, the network device may be an access network device in a cellular system related to the 3rd generation partnership project (3rd generation partnership project, 3GPP), for example, a 4G communication system or a 5G communication system. Alternatively, the network device may be an access network device in an open radio access network (open RAN, O-RAN or ORAN) or a cloud radio access network (cloud radio access network, CRAN). Alternatively, the network device may be an access network device in a communication system obtained by converging two or more of the foregoing communication systems.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a macro base station, a micro base station, a wireless relay node, a donor node, a radio controller in a CRAN scenario, a wireless backhaul node, a transmission point (transmission point, TP), a transmission reception point (transmission reception point, TRP), or the like, or may be a network device in a 5G mobile communication system, for example, a next generation NodeB (next generation NodeB, gNB), a TRP or a TP in an NR system, or one antenna panel or one group of antenna panels (including a plurality of antenna panels) of a base station in a 5G mobile communication system. Alternatively, the network device may be a network node, for example, a central unit (central unit, CU), a distributed unit (distributed unit, DU), a CU-control plane (control plane, CP), a CU-user plane (user plane, UP), or a radio unit (radio unit, RU), that is included in a gNB or a transmission point. The CU and the DU may be separately disposed, or may be included in a same network element, for example, a BBU. The RU may be included in a radio frequency device or a radio frequency unit, for example, a remote radio unit (remote radio unit, RRU), an active antenna unit (active antenna unit, AAU), or a remote radio head (remote radio head, RRH). Alternatively, the network device may be a server, a wearable device, a vehicle, a vehicle-mounted device, or the like. For example, an access network device in a V2X technology may be a road side unit (road side unit, RSU).

It should be noted that in different systems, the CU (or the CU-CP and the CU-UP), the DU, or the RU may have different names, but persons skilled in the art may understand meanings of the names. For example, in an ORAN system, the CU may also be referred to as an O-CU or an open CU, the DU may also be referred to as an O-DU, the CU-CP may also be referred to as an O-CU-CP, the CU-UP may also be referred to as an O-CU-UP, and the RU may also be referred to as an O-RU. This is not specifically limited in this application. Any one of the CU, the CU-CP, the CU-UP, the DU, and the RU in this application may be implemented by using a software module, a hardware module, or a combination of a software module and a hardware module.

Optionally, for network elements in the ORAN system, the network elements may implement protocol layer functions enumerated in Table 1.1.

**Table 1.1**

| ORAN network element | Protocol layer function |
|---|---|
| O-CU-CP | Radio resource control (radio resource control, RRC) and packet data convergence protocol control plane (packet data convergence protocol control plane, PDCP-C) |
| O-CU-UP | Service data adaptation protocol (service data adaptation protocol, SDAP) and packet data convergence protocol user plane (packet data convergence protocol user plane, PDCP-U) |
| O-DU | Radio link control (radio link control, RLC), medium access control (media access control, MAC), and higher physical layer (PHY-high) |
| O-RU | Lower physical layer (PHY-low) |

The following describes architectures of a CU and a DU of an access network device. The access network device includes at least one CU and at least one DU. Optionally, the access network device further includes at least one RU.

The following provides descriptions by using an example in which the access network device includes one CU and one DU. The CU has some functions of a core network, and the CU may include a CU-CP and a CU-UP. The CU and the DU may be configured based on protocol layer functions of a wireless network that are implemented by the CU and the DU. For example, the CU is configured to implement functions of a packet data convergence protocol (packet data convergence protocol, PDCP) layer and a protocol layer (for example, an RRC layer and/or an SDAP layer) above the PDCP layer. The DU is configured to implement a function of a protocol layer (for example, an RLC layer, a MAC layer, and/or a physical (physical, PHY) layer) below the PDCP layer. For another example, the CU is configured to implement a function of a protocol layer (for example, an RRC layer and/or an SDAP layer) above a PDCP layer, and the DU is configured to implement functions of the PDCP layer and a protocol layer (for example, an RLC layer, a MAC layer, and/or a PHY layer) below the PDCP layer.

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement a function of the RRC layer and a control plane function of the PDCP layer, and the CU-UP is configured to implement a function of the SDAP layer and a user plane function of the PDCP layer.

The CU-CP may interact with a network element that is in the core network and that is configured to implement a control plane function. The network element that is in the core network and that is configured to implement the control plane function may be an access and mobility function network element, for example, an access and mobility function (access and mobility management function, AMF) in a 5G system. The access and mobility function network element is configured to be responsible for mobility management in a mobile network, for example, location update of a terminal device, network registration of the terminal device, and handover of the terminal device.

The CU-UP may interact with a network element that is in the core network and that is configured to implement a user plane function. The network element that is in the core network and that is configured to implement the user plane function is, for example, a user plane function (User Plane Function, UPF) in the 5G system, and is configured to be responsible for forwarding and receiving of data in the terminal device.

The foregoing configurations of the CU and the DU are merely examples. Alternatively, functions of the CU and the DU may be configured based on a requirement. For example, the CU or the DU may be configured to have functions of more protocol layers, or the CU or the DU may be configured to have a part of processing functions of a protocol layer. For example, a part of functions of the RLC layer and a function of a protocol layer above the RLC layer are set on the CU, and a remaining function of the RLC layer and a function of a protocol layer below the RLC layer are set on the DU. For another example, functions of the CU or the DU may be obtained through division based on a service type or another system requirement. For example, division is performed based on a latency, a function whose processing time needs to satisfy a low-latency requirement is set on the DU, and a function whose processing time does not need to satisfy the latency requirement is set on the CU.

The DU and the RU may cooperate to jointly implement a function of the PHY layer. One DU may be connected to one or more RUs. Functions of the DU and the RU may be configured into a plurality of modes according to a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer, or implement the lower-layer function and a radio frequency function. The higher-layer function of the physical layer may include a part of functions of the physical layer, and the part of functions are closer to the MAC layer. The lower-layer function of the physical layer may include the other part of functions of the physical layer, and the other part of functions are closer to an intermediate radio frequency side.

It should be noted that the network device may be the device or apparatus described above, or may be a component (for example, a chip), a module, or a unit in the device or apparatus described above. This is not specifically limited in this application.

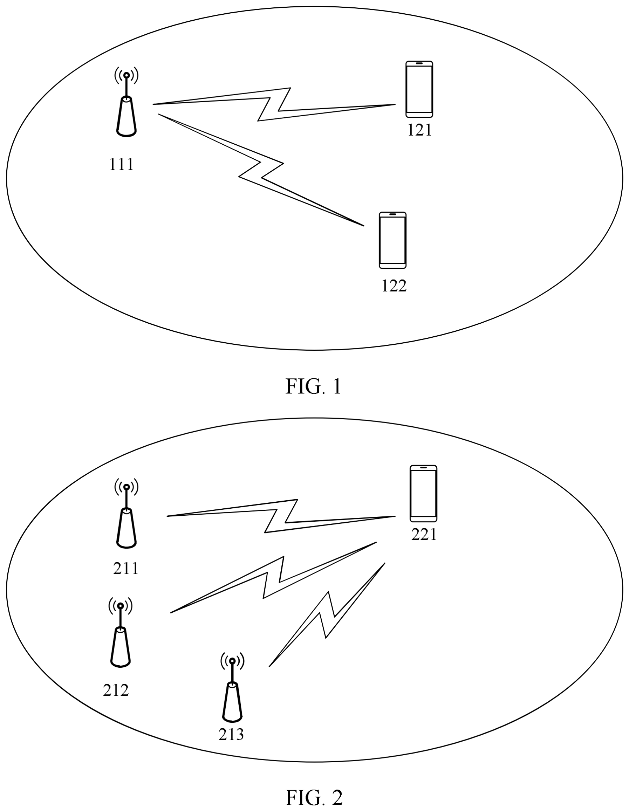

For ease of understanding the technical solutions in embodiments of this application, the following provides, with reference to FIG. 1 and FIG. 2, two possible communication systems to which a method provided in embodiments of this application is applicable.

FIG. 1 is a diagram of a communication system according to an embodiment of this application. As shown in FIG. 1, the communication system includes at least one network device, for example, a network device 111 shown in FIG. 1. The communication system further includes at least one terminal device, for example, a terminal device 121 and a terminal device 122 shown in FIG. 1. The network device 111 may perform transmission with the terminal device 121 and the terminal device 122 by using beams.

FIG. 2 is another diagram of a communication system according to an embodiment of this application. As shown in FIG. 2, the communication system may include at least two network devices, for example, a network device 211, a network device 212, and a network device 213 shown in FIG. 2. The communication system further includes at least one terminal device, for example, a terminal device 221 shown in FIG. 2. The terminal device 221 may be provided with communication services by a plurality of network devices. For example, as shown in FIG. 2, the network device 211 may perform transmission with the terminal device 221 by using a beam 1, the network device 212 may perform transmission with the terminal device 221 by using a beam 2, and the network device 213 may perform transmission with the terminal device 221 by using a beam 3. In other words, one terminal device may be provided with communication services by a plurality of network devices.

The following describes two possible scenarios to which this application is applicable. This application is also applicable to other scenarios, and the scenarios in the following examples do not constitute a limitation on this application.

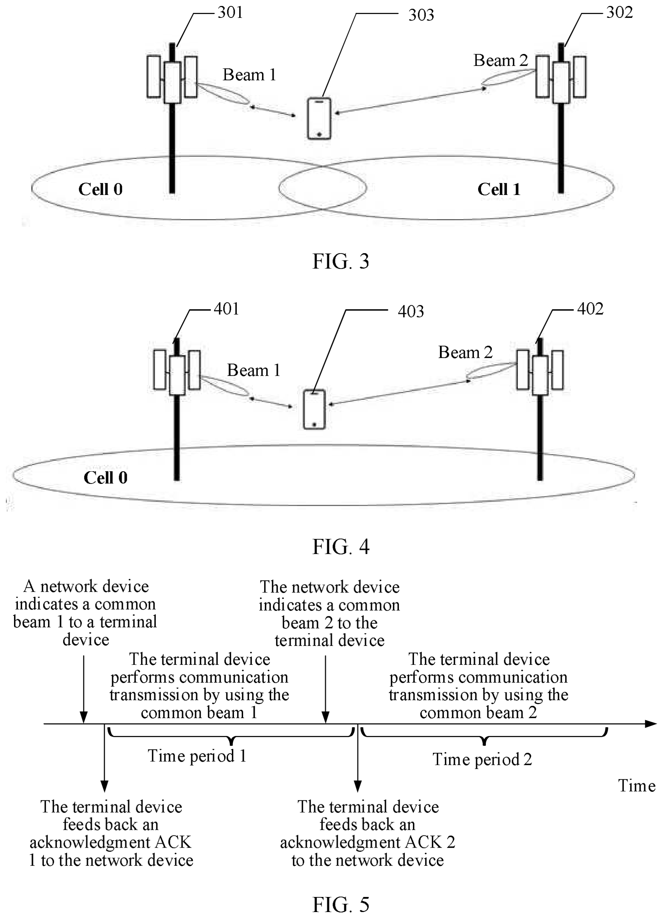

FIG. 3 is a diagram of a scenario to which a beam indication method is applicable according to an embodiment of this application. Refer to FIG. 3. A communication system includes a TRP 301, a TRP 302, and a terminal device 303. A cell 0 is a serving cell of the terminal device 303, and a cell 1 is a non-serving cell of the terminal device 303. The terminal device 303 may communicate with the TRP 301 by using a beam 1, and communicate with the TRP 302 by using a beam 2. The scenario shown in FIG. 3 may be referred to as an inter-cell multi-TRP transmission scenario of a terminal device.

FIG. 4 is a diagram of another scenario to which a beam indication method is applicable according to an embodiment of this application. Refer to FIG. 4. A communication system includes a TRP 401, a TRP 402, and a terminal device 403. A cell 0 is a serving cell of the terminal device 403. The terminal device 303 may communicate with the TRP 301 by using a beam 1, and communicate with the TRP 302 by using a beam 2. The scenario shown in FIG. 4 may be referred to as an intra-cell multi-TRP transmission scenario of a terminal device.

It should be noted that, when one TRP provides a service for a terminal device, the network device in this application may be understood as the TRP or a logical device including the TRP. When a plurality of TRPs provide services for a terminal device, the network device in this application may be understood as one of the plurality of TRPs or a logical device including the plurality of TRPs. This is not specifically limited in this application. The method provided in this application may be performed between the network device and the terminal device. A form of the network device is not described below again.

The technical solutions in this application are applicable to an mTRP scenario, and are also applicable to a single-TRP scenario. This is not specifically limited in this application.
1. Beam (beam): The beam is a communication resource. The beam may be a wide beam, a narrow beam, or another type of beam, and a technology for forming the beam may be a beamforming technology or another technical means. The beamforming technology may be specifically a digital beamforming technology, an analog beamforming technology, and a hybrid digital/analog beamforming technology. Different beams may be considered as different resources.

In an NR protocol, the beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-co-location (quasi-co-location, QCL) information, a QCL assumption, a QCL indication, or the like. The beam may be indicated by a TCI-state parameter or a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, a TCI-state (including an uplink TCI-state or a downlink TCI-state), a spatial relation, or the like. The foregoing terms are equivalent to each other. Alternatively, the beam may be replaced with another term representing the beam. This is not limited in this application.

A transmit end may send same information or different information by using different beams. Optionally, a plurality of beams having a same communication feature or similar communication features may be considered as one beam. One beam may include one or more antenna ports, configured to transmit a data channel, a control channel, a sounding signal, and the like.

A beam for sending a signal may be referred to as a transmit beam (transmission beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). An uplink transmit beam may be indicated by any one of a spatial relation, a TCI-state, or a sounding reference signal (sounding reference signal, SRS) resource (representing a transmit beam using an SRS). Therefore, the uplink transmit beam may alternatively be replaced with the SRS resource.

A beam for receiving a signal may be referred to as a receive beam (reception beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting).

For example, the transmit beam may be signal strength distribution formed in different directions in space after a signal is transmitted through an antenna, and the receive beam may be signal strength distribution, in different directions in space, of a radio signal received from an antenna. It may be understood that one or more antenna ports forming one beam may also be considered as one antenna port set.

When a low-frequency band or an intermediate-frequency band is used, the transmit end may send a signal in an omnidirectional manner or at a wide angle. When a high-frequency band is used, because of a small carrier wavelength in a high-frequency communication system, an antenna array including many antenna elements may be disposed at both the transmit end and a receive end. The transmit end sends a signal by using a specific beamforming weight, so that the sent signal forms a spatially directional beam, and the receive end receives the signal by using the antenna array and a specific beamforming weight. This helps increase received power of the signal at the receive end and resist a path loss.

2. Quasi-co-location (quasi-co-location, QCL): A quasi-co-location relationship indicates that a plurality of resources have one or more same or similar communication features. A same communication configuration or similar communication configurations may be used for the plurality of resources in the quasi-co-location relationship. For example, if two antenna ports are in a quasi-co-location relationship, a large-scale characteristic of a channel on which one symbol is transmitted through one port may be deduced from a large-scale characteristic of a channel on which one symbol is transmitted through the other port. The large-scale characteristic may include: a delay spread, an average delay, a Doppler spread, a Doppler shift, an average gain, a reception parameter, a receive beam number of a terminal device, a transmit/receive channel correlation, a reception angle of arrival, a spatial correlation of a receiver antenna, a dominant angle-of-arrival (angle-of-arrival, AoA), an average angle-of-arrival, an AoA spread, and the like. Specifically, that a co-location indication indicates whether at least two groups of antenna ports are in a co-location relationship includes: The co-location indication indicates whether channel state information-reference signals sent by the at least two groups of antenna ports are from a same transmission point, or the co-location indication indicates whether channel state information-reference signals sent by the at least two groups of antenna ports are from a same beam group.

3. TCI: The TCI may also be referred to as a TCI state (TCI-State). In uplink and downlink transmission, correct beams need to be used between a network device and a terminal device to implement correct transmission. In the downlink transmission, the network device needs to indicate, to the terminal device, a downlink transmit beam used by the network device. In this way, the terminal device may determine, based on the downlink transmit beam, an appropriate receive beam for receiving information from the network device. In the uplink transmission, the network device also needs to indicate, to the terminal device, an uplink transmit beam to be used by the terminal device to send information to the network device. This is because: The network device can determine a specific uplink transmit beam, of the terminal device, with optimal signal quality. Both an uplink beam and a downlink beam may be indicated by corresponding TCI states. Specifically, a beam used in the downlink transmission may be indicated by a downlink TCI state, and a beam used in the uplink transmission may be indicated by an uplink TCI state.

In a 3GPP protocol, a network device may indicate a TCI state to a terminal device by using a transmission configuration indicator (transmission configuration indicator, TCI) field in downlink control information (downlink control information, DCI). The TCI field has a size of 3 bits, and the bits may be specifically represented as eight different field values (codepoints). Each field value of the TCI field may be associated with an index of one TCI state. The index of the TCI state may uniquely identify one TCI state, and the TCI state may be a downlink TCI state or an uplink TCI state. Each field value of the TCI field may alternatively be associated with indexes of two TCI states, the indexes of the two TCI states may uniquely identify two TCI states, and the two TCI states may include one downlink TCI state and one uplink TCI state.

The downlink TCI state includes several parameters. The terminal device may determine related information of a downlink transmit beam by using these parameters, to determine a specific receive beam for receiving information from the network device. The TCI state is configured by the network device for each terminal device, and a structure of the downlink TCI state is as follows:

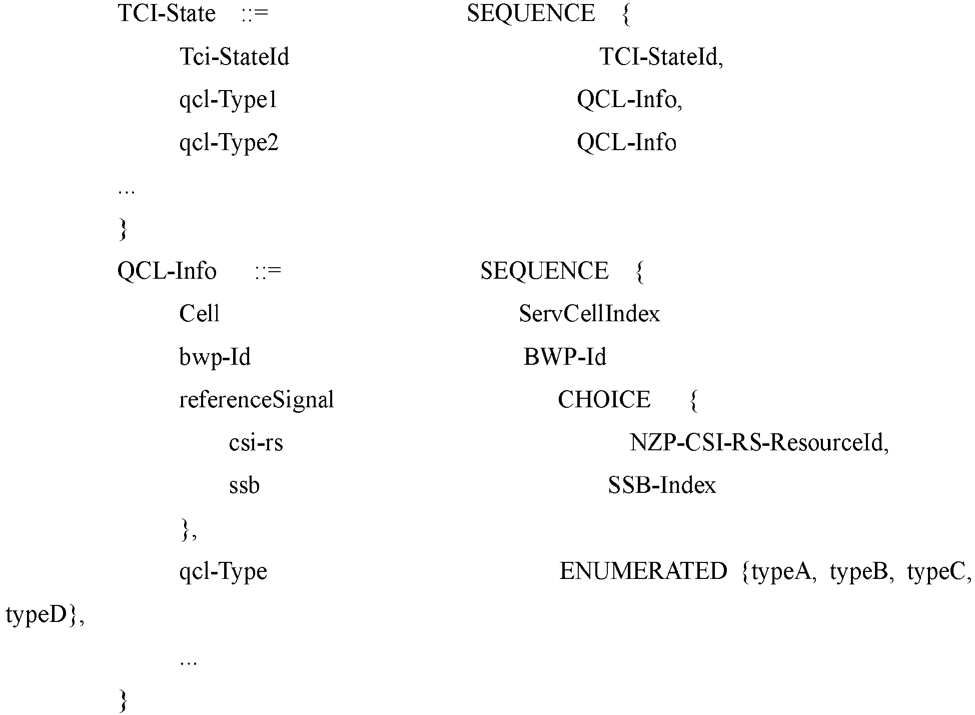

Each TCI state includes an index (tci-StateId) of the TCI state and two pieces of QCL-info. Each piece of QCL-info includes one reference signal resource, to indicate that a same downlink timing, frequency offset, or receive beam as that for the reference signal resource should be used in downlink transmission in the TCI state. The downlink timing, the frequency offset, or the receive beam is specifically determined based on a type of the QCL-info. A QCL type may have four values: {typeA, typeB, typeC, typeD}. When the QCL type is typeA, typeB, or typeC, the same downlink timing and frequency offset as those for the reference signal resource should be used in the downlink transmission. When the QCL type is typeD, the same receive beam as that for the reference signal resource should be used in the downlink transmission. In the foregoing two pieces of QCL-info, a type of one of the two pieces of QCL-info is typeD, and a type of the other piece is typeA, typeB, or typeC. The terminal device may determine, by using the QCL-info of typeD, a specific receive beam for receiving in the corresponding downlink transmission. Specific steps are as follows:

The network device indicates a specific downlink TCI state to the terminal device by using DCI. The terminal device determines a reference signal resource in QCL information of typeD in the downlink TCI state. The terminal device uses a receive beam for the reference signal resource as a receive beam to be used in downlink transmission. It should be noted that the receive beam for the reference signal resource is obtained by the terminal device in advance through a beam management procedure. Through the beam management procedure, the terminal device may determine an optimal receive beam for receiving the reference signal resource, and use the receive beam as the receive beam for the reference signal resource.

The uplink TCI state includes a reference signal resource, to indicate that a same uplink transmit beam as that for the reference signal resource should be used in uplink transmission in the TCI state. The terminal device may determine, by using the reference signal resource, a specific transmit beam for the uplink transmission. In the uplink TCI state, the reference signal resource is not included in QCL-info, and QCL types are not distinguished. This is because: Uplink timing information and frequency offset information do not need to be referenced, and only the uplink transmit beam needs to be referenced. A structure of the uplink TCI state is as follows:

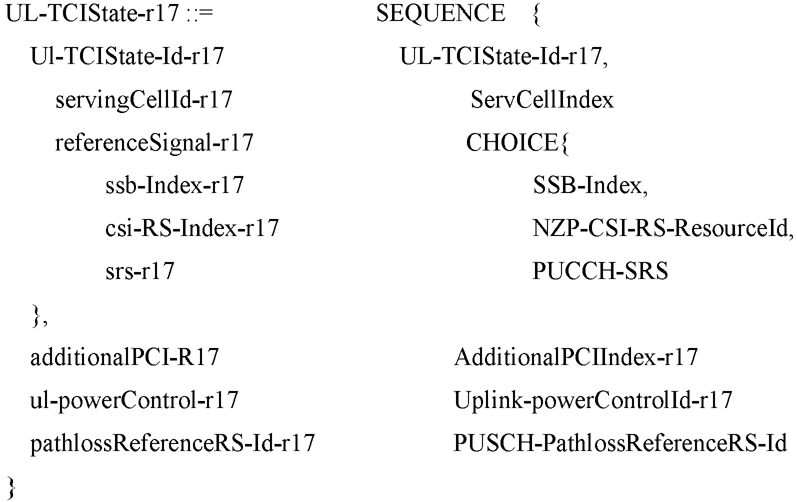

Specific steps are as follows:
The network device indicates a specific uplink TCI state to the terminal device by using DCI. The terminal device determines a reference signal resource in the uplink TCI state. The terminal device uses a transmit beam for the reference signal resource as a transmit beam to be used by the terminal device to perform uplink transmission. It should be noted that the transmit beam for the reference signal resource is obtained by the terminal device in advance through a beam management procedure.

The following describes configuration, activation, and indication of the TCI state.

Configuration of the TCI-state: The network device configures a plurality of TCI-states for the terminal device by using RRC signaling. These TCI-states all include one piece of QCL-Info of typeD. Alternatively, the network device may configure TCI-states that do not include QCL-info of typeD. However, these TCI-states do not indicate a data transmission beam, and therefore are not further described herein.

Activation of the TCI-state: After configuring the plurality of TCI-states, the network device further needs to activate eight of the TCI-states by using a MAC CE. The eight TCI-states are in one-to-one correspondence with eight field values of the TCI field in the DCI. In other words, the eight specific TCI-states corresponding to the eight field values of the TCI field in the DCI are determined by using the MAC CE.

Indication of the TCI-state: The network device indicates a specific TCI-state by using the TCI field in the DCI. For example, a field value of the TCI field in the DCI sent by the network device to the terminal device is 000, and it indicates that a TCI state corresponding to 000 is for a data transmission beam. A reference signal included in QCL-Info of typeD in the TCI state is a channel state information-reference signal (channel state information-reference signal, CSI-RS) whose index is #1, and it indicates that a beam for data transmission is the same as a receive beam corresponding to the CSI-RS whose index is #1. The receive beam corresponding to the CSI-RS whose index is #1 may be determined through a beam measurement procedure, and is known to the terminal device. Therefore, the terminal device may determine, based on a specific field value of the TCI field, a beam corresponding to the data transmission beam, to send or receive data by using the corresponding beam.

It should be noted that the two descriptions, namely, the TCI-state and the TCI state, in this specification may be interchangeably used.

4. Common beam: Currently, each channel is indicated by using a separate beam. Each channel has a corresponding beam. In this application, a common beam is defined for a plurality of uplink and/or downlink channels.

The common beam is a same beam for a plurality of channels, a plurality of types of channels, a plurality of reference signals, and/or a plurality of types of reference signals. The channel includes but is not limited to at least one of a physical downlink control channel (physical downlink control channel, PDCCH), a PDSCH, a physical uplink control channel (physical uplink control channel, PUCCH), a physical uplink shared channel (physical uplink shared channel, PUSCH), or a physical random access channel (physical random access channel, PRACH). The reference signal includes but is not limited to at least one of an SSB, a CSI-RS, a DMRS, a phase tracking reference signal (phase tracking reference signal, PTRS), a time-frequency tracking reference signal (tracking reference signal, TRS), an SRS, or the like.

A joint (joint) common beam is for transmission of at least one uplink channel or reference signal and at least one downlink channel or reference signal, for example, a PDCCH, a PDSCH, a PUCCH, and a PUSCH. The joint common beam may also be referred to as an uplink and downlink common beam.

An uplink common beam is for transmission of a plurality of uplink channels, transmission of a plurality of types of uplink channels, and/or transmission of one or more uplink reference signals, for example, a PUCCH, a PUSCH, and an SRS.

A downlink common beam is for transmission of a plurality of downlink channels, transmission of a plurality of types of downlink channels, and/or transmission of one or more downlink reference signals, for example, a PDCCH, a PDSCH, and a CSI-RS.

Form of the common beam: The common beam may have a newly defined structure (different from an existing TCI-state). For example, the common beam includes beam indication related information, including but not limited to one or more of the following: a common beam identifier (identifier, ID), a logical cell identity (cell ID), a physical cell identity, a bandwidth part identifier, a reference signal resource for determining a beam, a QCL type, an uplink power control related parameter (for example, a path loss measurement reference signal resource, p0, or a closed loop index (closedLoopIndex)), or an identifier of a path loss reference signal.

Application scope of the common beam: The common beam may be cell-specific, that is, one common beam is for transmission of a plurality of channels in one cell. The common beam may be bandwidth part (bandwidth part, BWP)-specific, and is for transmission of a plurality of beams in one BWP. The common beam may alternatively be cross-cell, that is, is for transmission of a plurality of channels of a plurality of cells. The plurality of cells may be a plurality of cells in one band (band). The plurality of cells may alternatively be a plurality of inter-band cells.

5. TCI mode: The TCI mode includes a joint uplink/downlink TCI mode and a separate uplink/downlink TCI mode. The joint uplink/downlink TCI mode means that a same beam is for both uplink transmission and downlink transmission between a TRP and a terminal device. The separate uplink/downlink TCI mode means that different beams are for uplink transmission between a TRP and a terminal device and downlink transmission between the TRP and the terminal device.

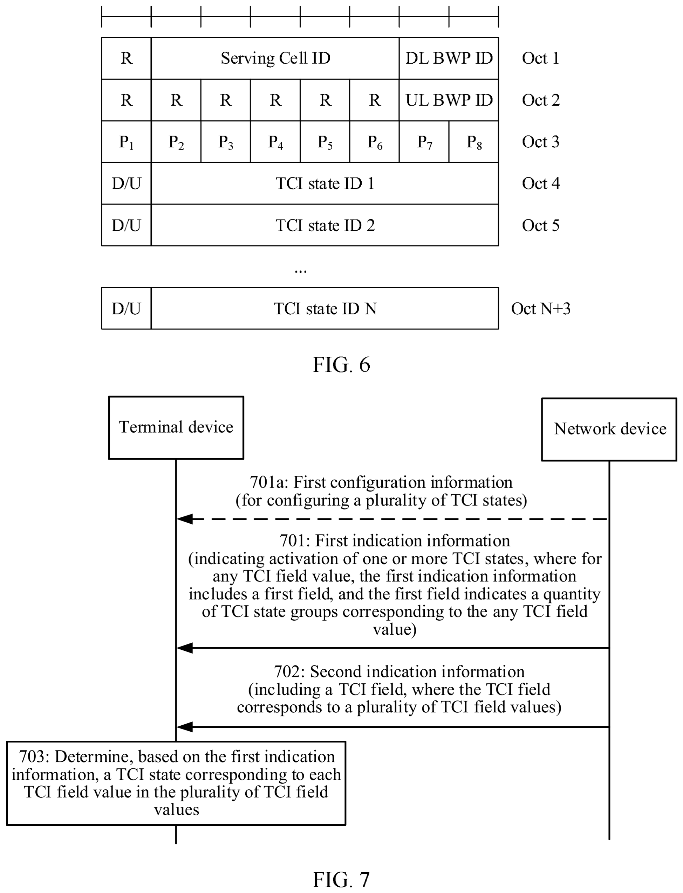

6. TCI state byte: The TCI state byte is a byte that is in a MAC CE and that indicates a TCI state. For example, as shown in FIG. 6, a byte shown by Qct4 in a MAC CE indicates an identifier of a TCI state. Therefore, the byte shown by Qct4 may be referred to as the TCI state byte.

7. Control resource set (control resource set, CORESET): The CORESET indicates a frequency domain resource set for PDCCH transmission, is a parameter configuration unit for the PDCCH transmission, and includes a PDCCH-related configuration parameter.

The following describes a process in which the network device indicates the common beam to the terminal device.

FIG. 5 is a diagram of indicating a common beam by a network device to a terminal device according to an embodiment of this application. Refer to FIG. 5. The network device may indicate a common beam 1 to the terminal device by using DCI 1. After the terminal device receives the DCI 1, the terminal device may feed back an acknowledgment 1 (acknowledgment 1, ACK 1) to the network device. Then, the terminal device may communicate with the network device by using the common beam 1. The network device sends DCI 2 to the terminal device, where the DCI 2 indicates a common beam 2. In this case, after the terminal device receives the DCI 2, the terminal device may feed back an ACK 2 to the network device. Then, the terminal device may communicate with the network device by using the common beam 2. The common beam 1 and the common beam 2 may be downlink common beams, uplink common beams, or uplink and downlink common beams.

In other words, the terminal device uses only one common beam of a same type. When the network device indicates a plurality of common beams of a same type, the terminal device uses only a recently indicated common beam of the same type. However, the terminal device may use a plurality of common beams of different types. For example, the terminal device performs uplink transmission by using one uplink common beam, and performs downlink transmission by using one downlink common beam.

The following describes the indication of the TCI state.

During downlink transmission, the network device needs to send downlink data by using a specific downlink transmit beam, and the terminal device needs to receive the downlink data by using a corresponding receive beam. During uplink transmission, the terminal device needs to send uplink data by using a specific uplink transmit beam, and the network device needs to receive the uplink data by using a corresponding receive beam. In the downlink transmission, the network device needs to notify the terminal device of the specific receive beam for receiving the downlink data. In the uplink transmission, the network device needs to notify the terminal device of the specific transmit beam for sending the uplink data.

Specifically, DCI includes a TCI field, and the TCI field indicates a TCI state. The terminal device determines, based on the indicated TCI state, the beam for the uplink transmission and/or the beam for the downlink transmission. The TCI state is classified into three types: an uplink TCI state, a downlink TCI state, and a joint uplink/downlink TCI state. The uplink TCI state indicates an uplink transmit beam, and the downlink TCI state indicates a downlink receive beam. The joint uplink/downlink TCI state indicates an uplink transmit beam and a downlink receive beam. Whether the terminal device uses the joint uplink/downlink TCI state or a separate uplink/downlink TCI state depends on configuration performed by the network device for the terminal device.

The following separately describes the indication of the TCI state in a single-TRP scenario and an mTRP scenario.

The single-TRP scenario means that the network device is a single TRP, and the terminal device performs uplink and downlink transmission with the single TRP. When the terminal device uses the joint uplink/downlink TCI state, the network device indicates one uplink/downlink TCI state to the terminal device, where the uplink/downlink TCI state is for the uplink and downlink transmission between the terminal device and the single TRP. When the terminal device uses the separate uplink/downlink TCI state, the network device indicates one uplink TCI state and one downlink TCI state to the terminal device. The uplink TCI state is for the uplink transmission between the terminal device and the single TRP, and the downlink TCI state is for the downlink transmission between the terminal device and the single TRP.

The mTRP scenario means that the network device is a plurality of TRPs. Two TRPs are used herein as an example for description. The terminal device performs uplink and downlink transmission with the two TRPs. When the terminal device uses the joint uplink/downlink TCI state, the network device indicates two joint uplink/downlink TCI states to the terminal device, where each joint uplink/downlink TCI state corresponds to one TRP, and is used by the terminal device to perform uplink and downlink transmission with the TRP. When the terminal device uses the separate uplink/downlink TCI state, the network device indicates two groups of TCI states to the terminal device, where each group of TCI states corresponds to one TRP. Each group of TCI states includes one uplink TCI state and one downlink TCI state, the uplink TCI state is for uplink transmission between the terminal device and the TRP, and the downlink TCI state is for downlink transmission between the terminal device and the TRP.

It can be learned from the foregoing descriptions that, in the TCI state indication method, a mapping relationship between a TCI field value and a TCI state needs to be established. In this way, the network device may indicate the TCI state to the terminal device by using the TCI field value in the DCI. With reference to FIG. 6, the following describes a possible format of a MAC CE sent by the network device to the terminal device in the single-TRP scenario.

The network device may configure a plurality of TCI states for the terminal device by using RRC signaling, where each TCI state corresponds to one TCI state identifier. Then, the network device sends the MAC CE to the terminal device, where the MAC CE is for activating one or more TCI states. The MAC CE may reflect a mapping relationship between a TCI field value in the DCI and a TCI state of the TRP.

As shown in FIG. 6, each row in the MAC CE is 1 byte, and includes 8 bits. The MAC CE is sequentially read from a 1^{st} row, and each row is sequentially read from a 1^{st} bit to an 8^{th} bit. A serving cell identity (ServingcellID) field indicates a cell to which a TCI state indicated in the MAC CE belongs. A downlink bandwidth part identity (downlink bandwidth part identity, DL BWP ID) indicates a DL BWP to which a downlink TCI state indicated in the MAC CE belongs. An uplink bandwidth part identity (uplink bandwidth part identity, UL BWP ID) indicates a UL BWP to which an uplink TCI state indicated in the MAC CE belongs. R is a reserved field. P1 to P8 respectively indicate whether each TCI field value in the eight TCI field values corresponds to a single TCI state or two TCI states. Last 7 bits of each byte below P1 to P8 indicate one TCI state index. A 1^{st} bit of each byte indicates a type of a TCI state. Based on the MAC CE, the terminal device determines, in the following manner, a TCI state associated with each TCI field value. Starting from P1, if P1 = 0, it indicates that a 1^{st} TCI field value is associated with one TCI state, and a 1^{st} TCI state identifier is associated with the 1^{st} TCI field value. If P1 = 1, it indicates that a 1^{st} TCI field value is associated with two TCI states, and first two TCI state identifiers are associated with the 1^{st} TCI field value. Similarly, if P2 = 0, it indicates that a 2^{nd} TCI field value is associated with one TCI state; or if P2 = 1, it indicates that a 2^{nd} TCI field value is associated with two TCI states. By analogy, the terminal device may determine the TCI state corresponding to each TCI field value.

The foregoing provides a case in which the network device establishes the mapping relationship between a TCI field value and a TCI state by using the MAC CE in the single-TRP scenario. However, in the mTRP scenario, how to establish a mapping relationship between a TCI field value and a TCI state is a problem that is worth considering, to indicate, to the terminal device by using TCI field values in the DCI, TCI states respectively corresponding to a plurality of TRPs.

In this application, a TCI state or a TCI state group of a first TRP may be referred to as a first TCI state set. When the terminal device uses the joint uplink/downlink TCI state, the first TCI state set includes one joint uplink/downlink TCI state that may be referred to as a first joint uplink/downlink TCI state. When the terminal device uses the separate uplink/downlink TCI state, the first TCI state set includes two TCI states, namely, one uplink TCI state and one downlink TCI state that may be referred to as a first uplink TCI state and a first downlink TCI state. Similarly, a TCI state or a TCI state group of a second TRP may be referred to as a second TCI state set. When the terminal device uses the joint uplink/downlink TCI state, the second TCI state set includes one joint uplink/downlink TCI state that may be referred to as a second joint uplink/downlink TCI state. When the terminal device uses the separate uplink/downlink TCI state, the second TCI state set includes two TCI states, namely, one uplink TCI state and one downlink TCI state that may be referred to as a second uplink TCI state and a second downlink TCI state. A TCI state of either TRP may be a TCI state in the first TCI state set or a TCI state in the second TCI state set.

One TCI state of the first TRP is one TCI state in the first TCI state set. When the terminal device uses the joint uplink/downlink TCI state, the one TCI state of the first TRP is the first joint uplink/downlink TCI state. When the terminal device uses the separate uplink/downlink TCI state, the one TCI state of the first TRP may be the first uplink TCI state or the first downlink TCI state. Similarly, one TCI state of the second TRP is one TCI state in the second TCI state set. When the terminal device uses the joint uplink/downlink TCI state, the one TCI state of the second TRP is the second joint uplink/downlink TCI state. When the terminal device uses the separate uplink/downlink TCI state, the one TCI state of the second TRP may be the second uplink TCI state or the second downlink TCI state.

Two TCI states of the first TRP are the first uplink TCI state and the first downlink TCI state. Two TCI states of the second TRP are the second uplink TCI state and the second downlink TCI state.

Optionally, a first TCI state of the first TRP is a 1^{st} TCI state in the first TCI state set, and a second TCI state of the first TRP is a 2^{nd} TCI state in the first TCI state set. A first TCI state of the second TRP is a 1^{st} TCI state in the second TCI state set, and a second TCI state of the second TRP is a 2^{nd} TCI state in the second TCI state set.

The following describes the technical solutions in this application with reference to specific embodiments.

FIG. 7 is a diagram of an embodiment of a beam indication method according to embodiments of this application. Refer to FIG. 7. The method includes the following steps.

701: A network device sends first indication information to a terminal device, where the first indication information is for activating one or more TCI states; and for any TCI field value, the first indication information includes a first field, and the first field indicates a quantity of TCI state groups corresponding to the any TCI field value. Correspondingly, the terminal device receives the first indication information from the network device.

Optionally, the first indication information is a first MAC CE.

Optionally, the embodiment shown in FIG. 7 further includes step 701a. Step 701a may be performed before step 701.

701a: The network device sends first configuration information to the terminal device, where the first configuration information is for configuring a plurality of TCI states. Correspondingly, the terminal device receives the first configuration information from the network device.

Optionally, the first configuration information is carried in RRC signaling.

Specifically, the network device sends the RRC signaling to the terminal device, where the RRC signaling indicates the terminal device to use a joint uplink/downlink TCI state or a separate uplink/downlink TCI state. If the terminal device is indicated to use the joint uplink/downlink TCI state, the RRC signaling is further for configuring one joint uplink/downlink TCI state set, and the joint uplink/downlink TCI state set includes a plurality of joint uplink/downlink TCI states. If the terminal device is indicated to use the separate uplink/downlink TCI state, the RRC signaling is further for configuring one uplink TCI state set and one downlink TCI state set. The uplink TCI state set includes a plurality of uplink TCI states, and the downlink TCI state set includes a plurality of downlink TCI states.

702: The network device sends second indication information to the terminal device, where the second indication information includes a TCI field, and the TCI field corresponds to a plurality of TCI field values. Correspondingly, the terminal device receives the second indication information from the network device.

Optionally, the second indication information is DCI.

Specifically, the network device sends the first MAC CE to the terminal device. The network device establishes, by using the first MAC CE, a mapping relationship between a TCI field value corresponding to the TCI field in the DCI and a TCI state. For example, a length of the TCI field in the DCI is 3 bits, and the bits respectively correspond to eight possible TCI field values that are specifically 000, 001, 010, 011, 100, 101, 110, and 111. The first MAC CE may indicate a TCI state corresponding to each TCI field value, so that the network device indicates the TCI state to the terminal device by using the TCI field in the DCI.

It should be noted that the TCI field in the DCI may alternatively have another length. For example, the length of the TCI field is 4 bits. In the following method, an example in which the terminal device performs transmission with two TRPs is used to describe the technical solution in this application. A solution in which the terminal device performs transmission with more than two TRPs is similar, and adaptive extension may be specifically performed.

Any TCI field value in the plurality of TCI field values corresponds to one or two TCI state groups, and each TCI state group includes one or two TCI states.

For the any TCI field value, the first MAC CE includes a first field, and the first field indicates a quantity of TCI state groups corresponding to the any TCI field value. In other words, the first MAC CE includes a plurality of first fields, and the plurality of first fields are in one-to-one correspondence with the plurality of TCI field values. Each first field indicates a quantity of TCI state groups corresponding to a corresponding TCI field value.

For example, if a value of the first field is a first value, it indicates that the any TCI field value corresponds to one TCI state group. If a value of the first field is a second value, it indicates that the any TCI field value corresponds to two TCI state groups. For example, if the value of the first field is 0, it indicates that the any TCI field value corresponds to one TCI state group. If the value of the first field is 1, it indicates that the any TCI field value corresponds to two TCI state groups.

The following describes two possible manners of obtaining the TCI state group through classification.

Manner 1: Each TCI state group corresponds to one TRP, and different TCI state groups correspond to different TRPs.

In this implementation, the TCI state group is obtained through classification at a TRP granularity. For example, if the first field indicates that the any TCI field value corresponds to one TCI state group, it indicates that the any TCI field value corresponds to a TCI state group of one TRP. For example, the any TCI field value corresponds to a TCI state group of a first TRP or a TCI state group of a second TRP. Alternatively, if the first field indicates that the any TCI field value corresponds to two TCI state groups, it indicates that the any TCI field value corresponds to TCI state groups of two TRPs (a first TRP and a second TRP).

The following describes two possible implementations of the first field.
1. The first field may be a bit other than a TCI state byte in the first MAC CE.

Optionally, 1 bit in the first MAC CE indicates the quantity of TCI state groups corresponding to the any TCI field value.

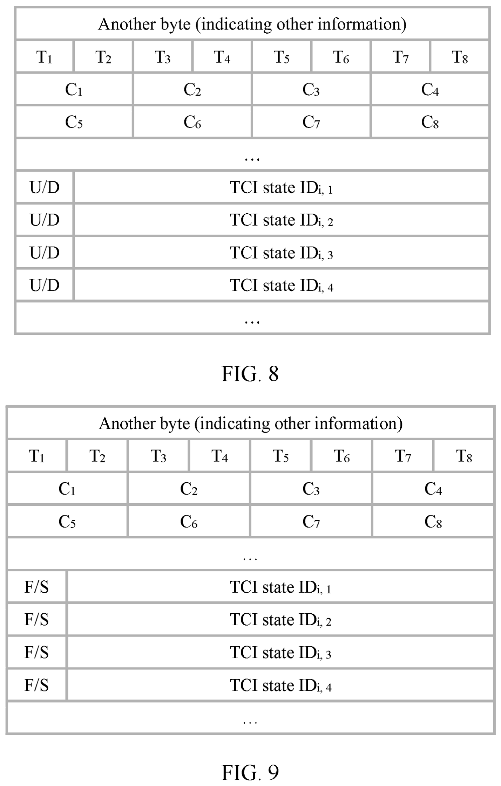

For example, the TCI field in the DCI corresponds to eight TCI field values, and each TCI field value corresponds to one first field. As shown in FIG. 8, a 1^{st} TCI field value corresponds to a first field T1, and a 2^{nd} TCI field value corresponds to a first field T2. By analogy, an 8^{th} TCI field value corresponds to a first field T8. A length of each first field is 1 bit, where the bit indicates a quantity of TCI state groups corresponding to a TCI field value corresponding to the first field. For example, if a value of the first field T1 is 0, it indicates that the 1^{st} TCI field value corresponds to a TCI state of one TRP (that is, corresponds to one TCI state group). Alternatively, if a value of the first field T1 is 1, it indicates that the 1^{st} TCI field value corresponds to TCI states of two TRPs (that is, corresponds to two TCI state groups).

For example, the TCI field corresponds to P TCI field values. The first MAC CE includes a first bitmap, and the first bitmap includes P bits, where P is an integer greater than or equal to 1. In the P bits, a 1^{st} bit indicates a quantity of TCI state groups corresponding to a 1^{st} TCI field value in the P TCI field values, and a 2^{nd} bit indicates a quantity of TCI state groups corresponding to a 2^{nd} TCI field value in the P TCI field values. By analogy, a P^{th} bit indicates a quantity of TCI state groups corresponding to a P^{th} TCI field value in the P TCI field values.

For example, the TCI field corresponds to P TCI field values, and the first MAC CE includes a second bitmap and a third bitmap. The second bitmap includes P bits, and the third bitmap includes P bits, where P is an integer greater than or equal to 1. In the P bits of the second bitmap, a 1^{st} bit indicates whether a 1^{st} TCI field value in the P TCI field values corresponds to a TCI state group of a 1^{st} TRP. In the P bits of the third bitmap, a 1^{st} bit indicates whether the 1^{st} TCI field value in the P TCI field values corresponds to the TCI state group of the second TRP. By analogy, in the P bits of the second bitmap, a P^{th} bit indicates whether a P^{th} TCI field value in the P TCI field values corresponds to the TCI state group of the first TRP. In the P bits of the third bitmap, a P^{th} bit indicates whether the P^{th} TCI field value in the P TCI field values corresponds to the TCI state group of the second TRP.

2. The first field may be a bit of a TCI state byte in the first MAC CE. For example, the first field is a 1^{st} bit or a last bit of a specific TCI state byte in the first MAC CE. For example, the first field is a bit of a TCI state byte corresponding to the any TCI field value. The TCI state byte corresponding to the any TCI field value indicates a TCI state corresponding to the any TCI field value.

Optionally, for the any TCI field value, the first MAC CE further includes a second field. The second field indicates a quantity of TCI states of each TRP that correspond to the any TCI field value. In other words, the first MAC CE further includes a plurality of second fields, and the plurality of second fields are in one-to-one correspondence with the plurality of TCI field values. Each second field indicates a quantity of TCI states of each TRP that correspond to a corresponding TCI field value.

The second field may be a bit other than a TCI state byte in the first MAC CE or a bit of a TCI state byte in the first MAC CE. This is not specifically limited in this application.

For example, the TCI field in the DCI corresponds to eight TCI field values, and each TCI field value corresponds to one second field. As shown in FIG. 8, a 1^{st} TCI field value corresponds to a second field C1, and a 2^{nd} TCI field value corresponds to a second field C2. By analogy, an 8^{th} TCI field value corresponds to a second field C8. A length of each second field may be 2 bits, and the bits indicate a quantity of TCI states of each TRP that correspond to a TCI field value corresponding to the second field.

The following describes some possible cases of the second field with reference to an indication status of the first field.
1. When the first field indicates that the any TCI field value corresponds to one TCI state group, the second field indicates any one of the following:
   the any TCI field value corresponds to one TCI state of the first TRP;
   the any TCI field value corresponds to one TCI state of the second TRP;
   the any TCI field value corresponds to two TCI states of the first TRP; or
   the any TCI field value corresponds to two TCI states of the second TRP.

When the first field indicates that the any TCI field value corresponds to one TCI state group, the second field may indicate one of the foregoing four cases. For example, when a value of the second field is 00, it indicates that the any TCI field value corresponds to one TCI state of the first TRP. When a value of the second field is 01, it indicates that the any TCI field value corresponds to one TCI state of the second TRP. When a value of the second field is 10, it indicates that the any TCI field value corresponds to two TCI states of the first TRP. When a value of the second field is 11, it indicates that the any TCI field value corresponds to two TCI states of the second TRP.

Alternatively, when the first field indicates that the any TCI field value corresponds to one TCI state group, the second field indicates either of the following:
the any TCI field value corresponds to one TCI state of one TRP; or
the any TCI field value corresponds to two TCI states of one TRP.

To be specific, when the first field indicates that the any TCI field value corresponds to one TCI state group, the second field only needs to indicate whether the any TCI field value corresponds to a single TCI state of a single TRP or two TCI states of a single TRP, and which TRP the single TRP is does not need to be further identified.

2. When the first field indicates that the any TCI field value corresponds to two TCI state groups, the second field indicates any one of the following:
the any TCI field corresponds to one TCI state of the first TRP and one TCI state of the second TRP;
the any TCI field corresponds to one TCI state of the first TRP and two TCI states of the second TRP;
the any TCI field corresponds to two TCI states of the first TRP and one TCI state of the second TRP; or
the any TCI field corresponds to two TCI states of the first TRP and two TCI states of the second TRP.

When the first field indicates that the any TCI field value corresponds to two TCI state groups, the second field may indicate one of the foregoing four cases. For example, when a value of the second field is 00, it indicates that the any TCI field value corresponds to one TCI state of the first TRP and one TCI state of the second TRP. When a value of the second field is 01, it indicates that the any TCI field corresponds to one TCI state of the first TRP and two TCI states of the second TRP. When a value of the second field is 10, it indicates that the any TCI field corresponds to two TCI states of the first TRP and one TCI state of the second TRP. When a value of the second field is 11, it indicates that the any TCI field value corresponds to two TCI states of the first TRP and two TCI states of the second TRP.

It should be noted that, optionally, when the first field indicates that the any TCI field value corresponds to two TCI state groups, the two TCI state groups include the TCI state group corresponding to the first TRP and the TCI state group corresponding to the second TRP. In the first MAC CE, a TCI state in the TCI state group corresponding to the first TRP ranks before a TCI state in the TCI state group corresponding to the second TRP; or in the first MAC CE, a TCI state in the TCI state group corresponding to the first TRP ranks after a TCI state in the TCI state group corresponding to the second TRP.

For example, as shown in FIG. 8, the first field T1 indicates that the 1^{st} TCI field value corresponds to two TCI state groups, and the second field C1 indicates that the 1^{st} TCI field value corresponds to two TCI states of the first TRP and two TCI states of the second TRP. It can be learned from this that TCI state ID_{i,1} and TCI state ID_{i,2} are TCI state identifiers of the first TRP, and TCI state ID_{i,3} and TCI state ID_{i,4} are TCI state identifiers of the second TRP.

In a possible implementation, the any TCI field value corresponds to a maximum of 4 bytes in the first MAC CE; and in the 4 bytes, a 1^{st} byte corresponds to a first TCI state of the first TRP, a 2^{nd} byte corresponds to a second TCI state of the first TRP, a 3^{rd} byte corresponds to a first TCI state of the second TRP, and a 4^{th} byte corresponds to a second TCI state of the second TRP. Alternatively, the any TCI field value corresponds to a maximum of 4 bytes in the first MAC CE; and in the 4 bytes, a 1^{st} byte corresponds to a first TCI state of the second TRP, a 2^{nd} byte corresponds to a second TCI state of the second TRP, a 3^{rd} byte corresponds to a first TCI state of the first TRP, and a 4^{th} byte corresponds to a second TCI state of the first TRP.

For example, as enumerated in Table 1.2, in first four TCI states indicated by the first MAC CE, TCI-stateID_{i,1} and TCI-stateID_{i,2} are TCI state identifiers of a TRP 1 (namely, the first TRP), and TCI-stateID_{i,3} and TCI-stateID_{i,4} are TCI state identifiers of a TRP 2 (namely, the second TRP).

**Table 1.2**

| |
|---|
| TRP 1: TCI-stateID_{i,1} |
| TRP 1: TCI-stateID_{i,2} |
| TRP 2: TCI-stateID_{i,3} |
| TRP 2: TCI-stateID_{i,4} |

In another possible implementation, the terminal device determines, by using the foregoing first field and second field, that the any TCI field value corresponds to two TCI states of the first TRP and two TCI states of the second TRP. In this case, it can be learned that in the first MAC CE shown in FIG. 8, the any TCI field value corresponds to a maximum of 4 bytes in the first MAC CE, namely, first four TCI states indicated by the first MAC CE. In the four TCI states, it is specified by default that TCI state identifiers (namely, TCI-stateID_{i,1} and TCI-stateID_{i,2}) of the TRP 1 rank before TCI state identifiers (namely, TCI-stateID_{i,3} and TCI-stateID_{i,4}) of the TRP 2; TCI state identifiers (namely, TCI-stateID_{i,3} and TCI-stateID_{i,4}) of the TRP 2 rank after TCI state identifiers (namely, TCI-stateID_{i,1} and TCI-stateID_{i,2}) of the TRP 1; or a 1^{st} TCI state identifier and a 3^{rd} TCI state identifier (namely, TCI-stateID_{i,1} and TCI-stateID_{i,3}) are TCI state identifiers of the TRP 1, and a 2^{nd} TCI state identifier and a 4^{th} TCI state identifier (namely, TCI-stateID_{i,2} and TCI-stateID_{i,4}) are TCI state identifiers of the TRP 2.

It should be noted that the foregoing descriptions are provided by using an example in which all the 4 bytes in the first MAC CE that correspond to the any TCI field value exist, that is, each TRP corresponds to 2 bytes. During actual application, a part of the 4 bytes corresponding to the any TCI field value may be default.

Optionally, the terminal device determines a default byte in the 4 bytes based on the first field and the second field. For either TRP in the first TRP and the second TRP, if a quantity of TCI states of the either TRP that correspond to the any TCI field value is 0, 2 bytes in the first MAC CE that correspond to the either TRP are both default; or if a quantity of TCI states of the either TRP that correspond to the any TCI field value is 1, a 2^{nd} byte in 2 bytes in the first MAC CE that correspond to the either TRP is default.

The following describes two possible implementations in which the terminal device determines a type of a TCI state indicated by each of the 4 bytes corresponding to the any TCI field value.

Manner 1: A 1^{st} bit of the 1^{st} byte indicates a type of a TCI state indicated by last 7 bits of the 1^{st} byte, and a type of a TCI state indicated by the 2^{nd} byte is a type opposite to the type of the TCI state indicated by the last 7 bits of the 1^{st} byte; and a 1^{st} bit of the 3^{rd} byte indicates a type of a TCI state indicated by last 7 bits of the 3^{rd} byte, and a type of a TCI state indicated by the 4^{th} byte is a type opposite to the type of the TCI state indicated by the last 7 bits of the 3^{rd} byte.

It should be noted that the foregoing descriptions are provided by using an example in which last 7 bits of a byte indicate a TCI state. During actual application, a part of the last 7 bits of the byte may alternatively indicate the TCI state. This is not specifically limited in this application.

Optionally, the type of the TCI state includes at least one of the following: an uplink TCI state, a downlink TCI state, or a joint uplink/downlink TCI state. The uplink TCI state and the downlink TCI state are TCI states of two opposite types.

In an mTRP scenario, if the terminal device is in a joint uplink/downlink TCI mode, the terminal device uses the joint uplink/downlink TCI state. If the terminal device is in a separate uplink/downlink TCI mode, the terminal device uses the uplink TCI state and the downlink TCI state.

Specifically, if the TCI state indicated by the last 7 bits of the 1^{st} byte is an uplink TCI state, the TCI state indicated by the 2^{nd} byte is a downlink TCI state. If the TCI state indicated by the last 7 bits of the 1^{st} byte is a downlink TCI state, the TCI state indicated by the 2^{nd} byte is an uplink TCI state. In other words, the uplink TCI state and the downlink TCI state are TCI states of two opposite types. Similarly, if the TCI state indicated by the last 7 bits of the 3^{rd} byte is an uplink TCI state, the TCI state indicated by the 4^{th} byte is a downlink TCI state. If the TCI state indicated by the last 7 bits of the 3^{rd} byte is a downlink TCI state, the TCI state indicated by the 4^{th} byte is an uplink TCI state.

For example, the TCI field in the DCI corresponds to eight TCI field values, and each TCI field value corresponds to one first field and one second field. As shown in FIG. 8, the first field T1 indicates that a 1^{st} TCI field value corresponds to two TCI state groups, and the second field C1 indicates that the 1^{st} TCI field value corresponds to two TCI states of the first TRP and two TCI states of the second TRP. It can be learned from this that the 1^{st} TCI field value corresponds to first 4 bytes shown in FIG. 8, TCI-stateID_{i,1} and TCI-stateID_{i,2} are TCI state identifiers of the first TRP, and TCI-stateID_{i,3} and TCI-stateID_{i,4} are TCI state identifiers of the second TRP. A 1^{st} bit of a 1^{st} byte indicates a type of a TCI state indicated by TCI state ID_{i,1}. For example, if the type of the TCI state indicated by TCI-stateID_{i,1} is an uplink TCI state, a type of a TCI state indicated by TCI-stateID_{i,2} is a downlink TCI state. If the type of the TCI state indicated by TCI-stateID_{i,1} is a downlink TCI state, a type of a TCI state indicated by TCI-stateID_{i,2} is an uplink TCI state. Similarly, a 1^{st} bit of a 3^{rd} byte indicates a type of a TCI state indicated by TCI-stateID_{i,3}. For example, if the type of the TCI state indicated by TCI-stateID_{i,3} is an uplink TCI state, a type of a TCI state indicated by TCI-stateID_{i,4} is a downlink TCI state. If the type of the TCI state indicated by TCI-stateID_{i,3} is a downlink TCI state, a type of a TCI state indicated by TCI-stateID_{i,4} is an uplink TCI state.

Manner 2: A 1^{st} bit of each byte in the 4 bytes indicates a type of a TCI state indicated by last 7 bits of the byte.

Optionally, the type of the TCI state includes an uplink TCI state, a downlink TCI state, or a joint uplink/downlink TCI state. The uplink TCI state and the downlink TCI state are TCI states of two opposite types.

For example, the TCI field in the DCI corresponds to eight TCI field values, and each TCI field value corresponds to one first field and one second field. As shown in FIG. 8, the first field T1 indicates that a 1^{st} TCI field value corresponds to two TCI state groups, and the second field C1 indicates that the 1^{st} TCI field value corresponds to two TCI states of the first TRP and two TCI states of the second TRP. It can be learned from this that the 1^{st} TCI field value corresponds to first 4 bytes (also referred to as first 4 TCI state bytes) shown in FIG. 8. A 1^{st} bit of each byte in the first 4 bytes indicates a type of a TCI state indicated by last 7 bits of the byte. For example, if a 1^{st} bit of a 1^{st} byte indicates that a TCI state indicated by last 7 bits of the 1^{st} byte is an uplink TCI state, it can be learned that TCI-stateID_{i,1} is an identifier of the uplink TCI state. If a 1^{st} bit of a 1^{st} byte indicates that a TCI state indicated by last 7 bits of the 1^{st} byte is a downlink TCI state, it can be learned that TCI-stateID_{i,1} is an identifier of the downlink TCI state. Other bytes are in similar cases, and are not specifically described one by one herein.

It should be noted that the foregoing descriptions are provided by using an example in which last 7 bits of a byte indicate a TCI state. During actual application, a part of the last 7 bits of the byte may alternatively indicate the TCI state. This is not specifically limited in this application.

Manner 2: TCI states in each TCI state group belong to a same type of TCI states, and TCI states in different TCI state groups belong to different types of TCI states.

In this implementation, the TCI state group is obtained through classification at a granularity of a type of a TCI state. For example, if the first field indicates that the any TCI field value corresponds to one TCI state group, it indicates that the any TCI field value corresponds to a TCI state group of one type. For example, if the any TCI field value corresponds to two TCI state groups, it indicates that the any TCI field value corresponds to TCI state groups of two types. The type of the TCI state includes an uplink TCI state, a downlink TCI state, or a joint uplink/downlink TCI state.

The following describes two possible implementations of the first field.
1. The first field may be a bit other than a TCI state byte in the first MAC CE. For example, 1 separate bit in the first MAC CE indicates the quantity of TCI state groups corresponding to the any TCI field value.

For example, the TCI field corresponds to P TCI field values, the first MAC CE includes a fourth bitmap, and the fourth bitmap includes P bits, where P is an integer greater than or equal to 1. In the fourth bitmap, a 1^{st} bit indicates a quantity of TCI state groups corresponding to a 1^{st} TCI field value in the P TCI field values, and a 2^{nd} bit indicates a quantity of TCI state groups corresponding to a 2^{nd} TCI field value in the P TCI field values. By analogy, a P^{th} bit indicates a quantity of TCI state groups corresponding to a P^{th} TCI field value in the P TCI field values.

For example, the TCI field in the DCI corresponds to eight TCI field values, and each TCI field value corresponds to one first field. As shown in FIG. 9, a 1^{st} TCI field value corresponds to a first field T1, and a 2^{nd} TCI field value corresponds to a first field T2. By analogy, an 8^{th} TCI field value corresponds to a first field T8. A length of each first field is 1 bit, where the bit indicates a quantity of TCI state groups corresponding to a TCI field value corresponding to the first field. For example, if a value of the first field T1 is 0, it indicates that the first field corresponds to a TCI state group of one type. Alternatively, if a value of the first field T1 is 1, it indicates that the 1^{st} TCI field value corresponds to TCI state groups of two types.

For example, the TCI field corresponds to P TCI field values, and the first MAC CE includes a fifth bitmap and a sixth bitmap. The fifth bitmap includes P bits, and the sixth bitmap includes P bits, where P is an integer greater than or equal to 1. A 1^{st} bit of the fifth bitmap indicates whether a 1^{st} TCI field value in the P TCI field values corresponds to a TCI state group of a first type (for example, an uplink TCI state group or a downlink TCI state group), and a 1^{st} bit of the sixth bitmap indicates whether a 2^{nd} TCI field value in the P TCI field values corresponds to a TCI state group of a second type. By analogy, a P^{th} bit of the fifth bitmap indicates whether a P^{th} TCI field value in the P TCI field values corresponds to the TCI state group of the first type, and a P^{th} bit of the sixth bitmap indicates whether the P^{th} TCI field value in the P TCI field values corresponds to the TCI state group of the second type.

2. The first field may be a bit of a TCI state byte in the first MAC CE. For example, the first field is a 1^{st} bit or a last bit of a specific TCI state byte in the first MAC CE. For example, the first field is a bit of a TCI state byte corresponding to the any TCI field value.

Optionally, for the any TCI field value, the first MAC CE further includes a third field, and the third field indicates a quantity of TCI states of each type that correspond to the any TCI field value.

In other words, the first MAC CE further includes a plurality of third fields, and the plurality of third fields are in one-to-one correspondence with the plurality of TCI field values. Each third field indicates a quantity of TCI states of each type that correspond to a corresponding TCI field value.

Specifically, the third field may be a bit other than a TCI state byte in the first MAC CE or a bit of a TCI state byte in the first MAC CE. This is not specifically limited in this application.

For example, the TCI field in the DCI corresponds to eight TCI field values, and each TCI field value corresponds to one third field. As shown in FIG. 9, a 1^{st} TCI field value corresponds to a third field C1, and a 2^{nd} TCI field value corresponds to a third field C2. By analogy, an 8^{th} TCI field value corresponds to a third field C8. A length of each third field may be 2 bits, and the bits indicate a quantity of TCI states of each type that correspond to a TCI field value corresponding to the third field.

The following describes some possible cases of the third field with reference to an indication status of the first field.
1. When the first field indicates that the any TCI field value corresponds to one TCI state group, the third field indicates any one of the following:
   the any TCI field value corresponds to one uplink TCI state;
   the any TCI field value corresponds to one downlink TCI state;
   the any TCI field value corresponds to two uplink TCI states; or
   the any TCI field value corresponds to two downlink TCI states.

When the third field indicates that the any TCI field value corresponds to one TCI state group, the third field may indicate one of the foregoing four cases. For example, when a value of the third field is 00, it indicates that the any TCI field value corresponds to one uplink TCI state. When a value of the third field is 01, it indicates that the any TCI field value corresponds to one downlink TCI state. When a value of the third field is 10, it indicates that the any TCI field value corresponds to two uplink TCI states. When a value of the third field is 11, it indicates that the any TCI field value corresponds to two downlink TCI states.

2. When the first field indicates that the any TCI field value corresponds to two TCI state groups, the third field indicates any one of the following:
the any TCI field value corresponds to one uplink TCI state and one downlink TCI state;
the any TCI field value corresponds to one uplink TCI state and two downlink TCI states;
the any TCI field corresponds to two uplink TCI states and one downlink TCI state; or
the any TCI field value corresponds to two uplink TCI states and two downlink TCI states.

When the first field indicates that the any TCI field value corresponds to two TCI state groups, the third field may indicate one of the foregoing four cases. For example, when a value of the third field is 00, it indicates that the any TCI field value corresponds to one uplink TCI state and one downlink TCI state. When a value of the third field is 01, it indicates that the any TCI field value corresponds to one uplink TCI state and two downlink TCI states. When a value of the third field is 10, it indicates that the any TCI field corresponds to two uplink TCI states and one downlink TCI state. When a value of the third field is 11, it indicates that the any TCI field value corresponds to two uplink TCI states and two downlink TCI states.

It should be noted that, optionally, when the first field indicates that the any TCI field value corresponds to two TCI state groups, the two TCI state groups include the uplink TCI state group and the downlink TCI state group.

In the first MAC CE, an uplink TCI state in the uplink TCI state group ranks before a downlink TCI state in the downlink TCI state group. For example, as shown in FIG. 9, the first field T1 indicates that the 1^{st} TCI field value corresponds to two TCI state groups, and the third field C1 indicates that the 1^{st} TCI field value corresponds to two uplink TCI states and two downlink TCI states. It can be learned from this that TCI-stateID_{i,1} and TCI-stateID_{i,2} are TCI state identifiers in the uplink TCI state group, and TCI-stateID_{i,3} and TCI-stateID_{i,4} are TCI state identifiers in the downlink TCI state group. Alternatively, in the first MAC CE, an uplink TCI state in the uplink TCI state group ranks after a downlink TCI state in the downlink TCI state group. For example, as shown in FIG. 9, the first field T1 indicates that the 1^{st} TCI field value corresponds to two TCI state groups, and the third field C1 indicates that the 1^{st} TCI field value corresponds to two uplink TCI states and two downlink TCI states. It can be learned from this that TCI-stateID_{i,1} and TCI-stateID_{i,2} are TCI state identifiers in the downlink TCI state group, and TCI-stateID_{i,3} and TCI-stateID_{i,4} are TCI state identifiers in the uplink TCI state group.

In a possible implementation, the any TCI field value corresponds to a maximum of 4 bytes in the first MAC CE; and in the 4 bytes, a 1^{st} byte corresponds to a first uplink TCI state in the uplink TCI state group, a 2^{nd} byte corresponds to a second uplink TCI state in the uplink TCI state group, a 3^{rd} byte corresponds to a first downlink TCI state in the downlink TCI state group, and a 4^{th} byte corresponds to a second downlink TCI state in the downlink TCI state group. Alternatively, the any TCI field value corresponds to a maximum of 4 bytes in the first MAC CE; and in the 4 bytes, a 1^{st} byte corresponds to a first downlink TCI state in the downlink TCI state group, a 2^{nd} byte corresponds to a second downlink TCI state in the downlink TCI state group, a 3^{rd} byte corresponds to a first uplink TCI state in the uplink TCI state group, and a 4^{th} byte corresponds to a second uplink TCI state in the uplink TCI state group.

For example, as enumerated in Table 2, in first four TCI states indicated by the first MAC CE, TCI-stateID_{i,1} and TCI-stateID_{i,2} are TCI state identifiers in the uplink TCI state group, and TCI-stateID_{i,3} and TCI-stateID_{i,4} are TCI state identifiers in the downlink TCI state group.

**Table 2**

| |
|---|
| UL: TCI-stateID_{i,1} |
| UL: TCI-stateID_{i,2} |
| DL: TCI-stateID_{i,3} |
| DL: TCI-stateID_{i,4} |

In another possible implementation, the terminal device determines, by using the foregoing first field and third field, that the any TCI field value corresponds to two uplink TCI states and two downlink TCI states. In this case, it can be learned that as shown in FIG. 9, the any TCI field value corresponds to a maximum of 4 bytes in the first MAC CE, namely, first four TCI states indicated by the first MAC CE. In the four TCI states, it is specified by default that the TCI state identifier in the uplink TCI state group ranks before the TCI state identifier in the downlink TCI state group. Alternatively, it is specified by default that the TCI state identifier in the uplink TCI state group ranks after the TCI state identifier in the downlink TCI state group. Alternatively, it is specified by default that a 1^{st} TCI state identifier and a 3^{rd} TCI state identifier are TCI state identifiers in the uplink TCI state group, and a 2^{nd} TCI state identifier and a 4^{th} TCI state identifier are TCI state identifiers in the downlink TCI state group.

It should be noted that the foregoing descriptions are provided by using an example in which all the 4 bytes in the first MAC CE that correspond to the any TCI field value exist, that is, each TRP corresponds to 2 bytes. During actual application, a part of the 4 bytes corresponding to the any TCI field value may be default.

Optionally, the terminal device determines a default byte in the 4 bytes based on the first field and the third field. For either TCI state group in the uplink TCI state group and the downlink TCI state group, if a quantity of TCI states corresponding to the either TCI state group is 0, 2 bytes in the first MAC CE that correspond to the either TCI state group are both default; or if a quantity of TCI states corresponding to the either TCI state group is 1, a 2^{nd} byte that is in the first MAC CE and that corresponds to the either TCI state group is default.

The following describes two possible implementations in which the terminal device determines a TRP to which a TCI state indicated by each of the 4 bytes corresponding to the any TCI field value belongs.

Manner 1: A TCI state corresponding to the any TCI field value belongs to a first TRP and/or a second TRP. A 1^{st} bit of the 1^{st} byte indicates a TRP to which a TCI state indicated by last 7 bits of the 1^{st} byte belongs, and a TRP to which a TCI state indicated by the 2^{nd} byte belongs is a TRP, in the first TRP and the second TRP, other than the TRP to which the TCI state indicated by the last 7 bits of the 1^{st} byte belongs, and a 1^{st} bit of the 3^{rd} byte indicates a TRP to which a TCI state indicated by last 7 bits of the 3^{rd} byte belongs, and a TRP to which a TCI state indicated by the 4^{th} byte belongs is a TRP, in the first TRP and the second TRP, other than the TRP to which the TCI state indicated by the last 7 bits of the 3^{rd} byte belongs.

For example, the TCI field in the DCI corresponds to eight TCI field values, and each TCI field value corresponds to one first field and one third field. As shown in FIG. 9, the first field T1 indicates that a 1^{st} TCI field value corresponds to two TCI state groups, and the third field C1 indicates that the 1^{st} TCI field value corresponds to two uplink TCI states and two downlink TCI states. It can be learned from this that the 1^{st} TCI field value corresponds to first 4 bytes (also referred to as first 4 TCI state bytes) shown in FIG. 9. TCI-stateID_{i,1} and TCI-stateID_{i,2} are TCI state identifiers in the uplink TCI state group, and TCI-stateID_{i,3} and TCI-stateID_{i,4} are TCI state identifiers in the downlink TCI state group. A 1^{st} bit of a 1^{st} byte indicates a TRP to which a TCI state indicated by TCI-stateID_{i,1} belongs. In the 1^{st} bit of the 1^{st} byte in FIG. 9, F represents the first TRP, and S represents the second TRP. For example, if the TCI state indicated by TCI-stateID_{i,1} belongs to the first TRP, a TCI state indicated by TCI-stateID_{i,2} belongs to the second TRP. If the TCI state indicated by TCI-stateID_{i,1} belongs to the second TRP, a TCI state indicated by TCI-stateID_{i,2} belongs to the first TRP. Similarly, a 1^{st} bit of a 3^{rd} byte indicates a TRP to which a TCI state indicated by TCI-stateID_{i,3} belongs. For example, if the TCI state indicated by TCI-stateID_{i,3} belongs to the first TRP, a TCI state indicated by TCI-stateID_{i,4} belongs to the second TRP. If the TCI state indicated by TCI-stateID_{i,3} belongs to the second TRP, a TCI state indicated by TCI-stateID_{i,4} belongs to the first TRP.

Manner 2: A 1^{st} bit of each byte in the 4 bytes corresponding to the any TCI field value indicates a TRP to which a TCI state indicated by last 7 bits of the byte belongs.

For example, the TCI field in the DCI corresponds to eight TCI field values, and each TCI field value corresponds to one first field and one second field. As shown in FIG. 9, the first field T1 indicates that a 1^{st} TCI field value corresponds to two TCI state groups, and the third field C1 indicates that the 1^{st} TCI field value corresponds to two uplink TCI states and two downlink TCI states. It can be learned from this that the 1^{st} TCI field value corresponds to first 4 bytes (also referred to as first 4 TCI state bytes) shown in FIG. 9. A 1^{st} bit of each byte in the first 4 bytes indicates a TRP to which a TCI state indicated by last 7 bits of the byte belongs. For example, if a 1^{st} bit of a 1^{st} byte indicates that a TCI state indicated by last 7 bits of the 1^{st} byte belongs to the first TRP, it can be learned that TCI-stateID_{i,1} is an uplink TCI state of the first TRP. If a 1^{st} bit of a 1^{st} byte indicates that a TCI state indicated by last 7 bits of the 1^{st} byte belongs to the second TRP, it can be learned that TCI-stateID_{i,1} is an uplink TCI state of the second TRP. Other bytes are in similar cases, and are not specifically described one by one herein.

703: The terminal device determines, based on the first indication information, the TCI state corresponding to each TCI field value in the plurality of TCI field values.

In a possible implementation, for any TCI field value, the first MAC CE includes a first field and a second field. The terminal device determines, based on the first field and the second field that correspond to the any TCI field value, a TCI state corresponding to the any TCI field value.

For example, the TCI field in the DCI corresponds to eight TCI field values, and each TCI field value corresponds to one first field and one second field. As shown in FIG. 8, the first field T1 indicates that a 1^{st} TCI field value corresponds to two TCI state groups, and the second field C1 indicates that the 1^{st} TCI field value corresponds to two TCI states of the first TRP and two TCI states of the second TRP. It can be learned from this that the 1^{st} TCI field value corresponds to first 4 bytes (also referred to as first 4 TCI state bytes) shown in FIG. 8. The any TCI field value corresponds to a maximum of 4 bytes in the first MAC CE. In the 4 bytes, a 1^{st} byte corresponds to the first TCI state of the first TRP, a 2^{nd} byte corresponds to the second TCI state of the first TRP, a 3^{rd} byte corresponds to the first TCI state of the second TRP, and a 4^{th} byte corresponds to the second TCI state of the second TRP. TCI-stateID_{i,1} and TCI-stateID_{i,2} are TCI state identifiers of the first TRP. TCI-stateID_{i,3} and TCI-stateID_{i,4} are TCI state identifiers of the second TRP. The terminal device determines, based on a 1^{st} bit of the 1^{st} byte, that a TCI state indicated by TCI-stateID_{i,1} is an uplink TCI state. The terminal device determines, based on a 1^{st} bit of the 2^{nd} byte, that a TCI state indicated by TCI-stateID_{i,2} is a downlink TCI state. The terminal device determines, based on a 1^{st} bit of the 3^{rd} byte, that a TCI state indicated by TCI-stateID_{i,3} is a downlink TCI state. The terminal device determines, based on a 1^{st} bit of the 2^{nd} byte, that a TCI state indicated by TCI-stateID_{i,4} is an uplink TCI state.

In another possible implementation, for any TCI field value, the first MAC CE includes a first field and a third field. The terminal device determines, based on the first field and the third field that correspond to the any TCI field value, a TCI state corresponding to the any TCI field value.

For example, the TCI field in the DCI corresponds to eight TCI field values, and each TCI field value corresponds to one first field and one third field. As shown in FIG. 9, the first field T1 indicates that a 1^{st} TCI field value corresponds to two TCI state groups, and the third field C1 indicates that the 1^{st} TCI field value corresponds to two uplink TCI states and two downlink TCI states. It can be learned from this that the 1^{st} TCI field value corresponds to first 4 bytes (also referred to as first 4 TCI state bytes) shown in FIG. 9. In four TCI states respectively indicated by the first 4 bytes, it is specified by default that a TCI state identifier in the uplink TCI state group ranks before a TCI state identifier in the downlink TCI state group. That is, TCI-stateID_{i,1} and TCI-stateID_{i,2} are TCI state identifiers in the uplink TCI state group, and TCI-stateID_{i,3} and TCI-stateID_{i,4} are TCI state identifiers in the downlink TCI state group. A 1^{st} bit of each byte in the first 4 bytes indicates a TRP to which a TCI state indicated by last 7 bits of the byte belongs. The terminal device determines, based on a 1^{st} bit of a 1^{st} byte, that an uplink TCI state indicated by TCI state ID_{i,1} belongs to the first TRP. The terminal device determines, based on a 1^{st} bit of a 2^{nd} byte, that an uplink TCI state indicated by TCI-stateID_{i,2} belongs to the second TRP. The terminal device determines, based on a 1^{st} bit of a 3^{rd} byte, that a downlink TCI state indicated by TCI-stateID_{i,3} belongs to the first TRP. The terminal device determines, based on a 1^{st} bit of a 4^{th} byte, that a downlink TCI state indicated by TCI-stateID_{i,4} belongs to the second TRP.

After the terminal device determines, based on the first indication information, the TCI state corresponding to each TCI field value in the plurality of TCI field values, the terminal device determines, by using a field value of the TCI field (which may also be referred to as a TCI field value) in the DCI, a TCI state corresponding to the field value of the TCI field. If a TCI state indicated by the network device this time is different from a TCI state indicated last time, the terminal device uses the TCI state corresponding to the field value of the TCI field. If a TCI state indicated by the network device this time is the same as a TCI state indicated last time, the terminal device still uses the TCI state indicated last time.

In a possible implementation, when the field value of the TCI field in the DCI indicates a TCI state of a single TRP, the terminal device may replace, with the TCI state of the single TRP, a TCI state previously used by the terminal device and the TRP. For the other TRP, the terminal device still uses a TCI state that is of the other TRP and that is previously indicated by the network device to the terminal device. For example, the terminal device still uses a TCI state that is of the other TRP and that is indicated by the network device to the terminal device last time.

In another possible implementation, when the network device indicates the terminal device to perform single-TRP transmission by only using a TCI state of a single TRP, a TCI of the other TRP is no longer used. In other words, the terminal device performs single-TRP transmission by using a TCI state of a single TRP, and previously used TCI states of the two TRPs are no longer used.

In the 1^{st} implementation, the network device may indicate, in the following manner 1 or manner 2, the terminal device to switch from an mTRP mode to a single-TRP mode.

Manner 1: The network device configures, by using RRC signaling, the terminal device to fall back from the mTRP mode to the single-TRP mode, that is, configures the terminal device to perform transmission by only using the TCI state of the single TRP.

Manner 2: When a first condition is met, the terminal device performs transmission by only using the TCI state of the single TRP, where the first condition includes either of the following:
1. The terminal device receives a second MAC CE from the network device, where the second MAC CE indicates a TCI state that is of a single TRP and that corresponds to each TCI field value.
   Specifically, a format of the second MAC CE may be shown in FIG. 6. In other words, the format of the second MAC CE is a conventional MAC CE format. To be specific, after the terminal device receives one second MAC CE, each TCI field value corresponds to a TCI state of a single TRP. In this case, if the terminal device receives DCI, a TCI state indicated by the DCI is a TCI state of the single TRP. In this case, the terminal device performs transmission by using the TCI state that is of the single TRP and that is indicated by the DCI, instead of using previously used TCI states of two TRPs. That is, when the terminal device receives DCI, if all current TCI field values are associated with TCI states of a same TRP, the terminal device falls back to single-TRP transmission, in other words, performs transmission by only using the TCI state that is of the single TRP and that is indicated by the DCI.
2. The terminal device receives the first MAC CE from the network device, where a TCI state of a same TRP is activated in the first MAC CE. In other words, TCI states of only one TRP are activated by using the foregoing first MAC CE, that is, TCI states corresponding to all the TCI field values are TCI states of a same TRP. In this case, if the terminal device receives DCI, the DCI indicates a TCI state of the single TRP. In this case, the terminal device performs transmission by using the TCI state that is of the single TRP and that is indicated by the DCI, instead of using previously used TCI states of two TRPs. That is, when the terminal device receives DCI, if all current TCI field values are associated with TCI states of a same TRP, the terminal device falls back to single-TRP transmission, in other words, performs transmission by only using the TCI state that is of the single TRP and that is indicated by the DCI. Alternatively, the terminal device does not need to receive DCI. After the terminal device receives the foregoing first MAC CE indicating TCI states of a same TRP, the terminal device needs to fall back to single-TRP transmission. In this case, the terminal device selects, for transmission from currently used TCI states of two TRPs, a TCI state that belongs to the same TRP, and does not use a TCI state that belongs to the other TRP.

It should be noted that, that the terminal device performs transmission by using a TCI state of a single TRP means: The terminal device does not maintain TCI states of two TRPs. That is, the terminal device no longer maintains TCI states that are of a plurality of TRPs and that are indicated by the network device to the terminal device before the first MAC CE. The terminal device maintains only the TCI state that is of the single TRP and that is indicated by the first MAC CE or the second MAC CE.

In this embodiment of this application, the terminal device receives the first MAC CE from the network device. The terminal device receives the DCI from the network device. The DCI includes the TCI field, the TCI field corresponds to the plurality of TCI field values, any TCI field value in the plurality of TCI field values corresponds to one or two TCI state groups, and each TCI state group includes one or two TCI states. For the any TCI field value, the first MAC CE includes a first field, and the first field indicates a quantity of TCI state groups corresponding to the any TCI field value. The terminal device determines, based on the first MAC CE, the TCI state corresponding to each TCI field value in the plurality of TCI field values. It can be learned from this that, for the any TCI field value, the first MAC CE includes the first field, and the first field indicates the quantity of TCI state groups corresponding to the any TCI field value. In this way, the terminal device determines, based on the first MAC CE, the TCI state corresponding to each TCI field value in the plurality of TCI field values, so that the network device indicates the TCI state to the terminal device by using the TCI field value in the DCI; and the TCI state corresponds to a corresponding beam, so that the network device indicates the beam to the terminal device. Moreover, according to the technical solution in this application, in the mTRP scenario, the network device may indicate, to the terminal device, TCI states corresponding to a plurality of TRPs, to implement transmission between the terminal device and the plurality of TRPs.

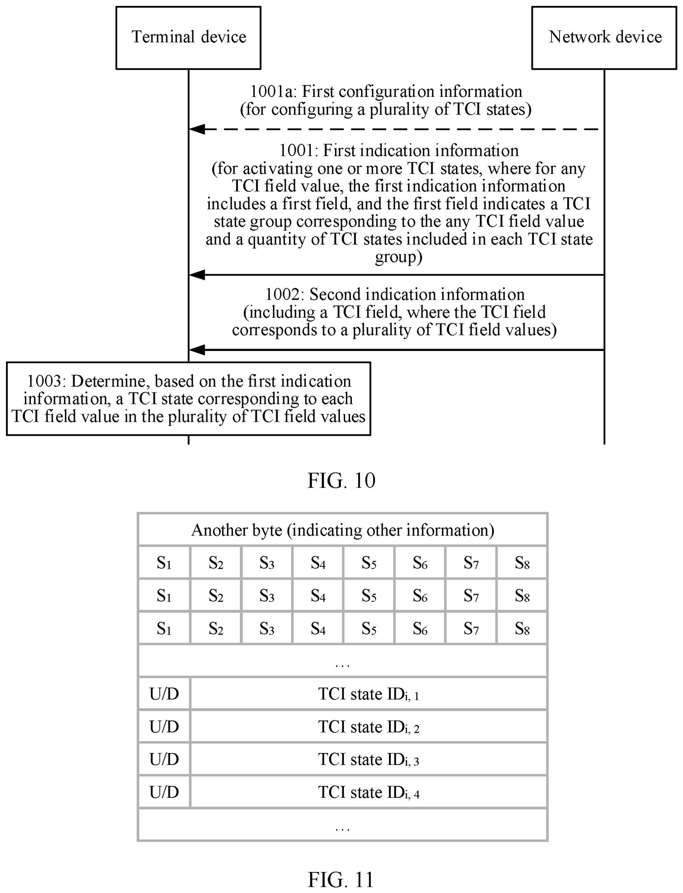

FIG. 10 is a diagram of another embodiment of a beam indication method according to embodiments of this application. Refer to FIG. 10. The method includes the following steps.

1001: A network device sends first indication information to a terminal device, where the first indication information is for activating one or more TC states; and for any TCI field value, the first indication information includes a first field, and the first field indicates a TCI state group corresponding to the any TCI field value and a quantity of TCI states included in each TCI state group. Correspondingly, the terminal device receives the first indication information from the network device.

Optionally, the first indication information is a first MAC CE.

Optionally, the embodiment shown in FIG. 10 further includes step 1001a, and step 1001a may be performed before step 1001.

1001a: The network device sends first configuration information to the terminal device, where the first configuration information is for configuring a plurality of TCI states. Correspondingly, the terminal device receives the first configuration information from the network device.

Optionally, the first configuration information is carried in RRC signaling.

Step 1001a is similar to step 701a in the embodiment shown in FIG. 7. For details, refer to related descriptions of step 701a in the embodiment shown in FIG. 7.

1002: The network device sends second indication information to the terminal device, where the second indication information includes a TCI field, and the TCI field corresponds to a plurality of TCI field values. Correspondingly, the terminal device receives the second indication information from the network device.

Optionally, the second indication information is DCI.

Specifically, the network device sends the first MAC CE to the terminal device, and establishes, by using the first MAC CE, a mapping relationship between a TCI field value in the DCI and a TCI state. For example, a length of the TCI field in the DCI is 3 bits, and the bits respectively correspond to eight possible TCI field values that are specifically 000, 001, 010, 011, 100, 101, 110, and 111. The first MAC CE may indicate a TCI state corresponding to each TCI field value, so that the network device indicates the TCI state to the terminal device by using the TCI field in the DCI. It should be noted that the TCI field in the DCI may alternatively have another length. For example, the length of the TCI field is equal to 4 bits. In the following method, an example in which the terminal device performs transmission with two TRPs is used to describe the technical solution in this application. A solution in which the terminal device performs transmission with more than two TRPs is similar, and adaptive extension may be specifically performed.

Any TCI field value in the plurality of TCI field values corresponds to one or two TCI state groups, and each TCI state group includes one or two TCI states.

For the any TCI field value, the first MAC CE includes a first field, and the first field indicates a TCI state group corresponding to the any TCI field value and a quantity of TCI states included in each TCI state group. In other words, the first MAC CE includes a plurality of first fields, and the plurality of first fields are in one-to-one correspondence with the plurality of TCI field values. Each first field indicates a quantity of TCI state groups corresponding to a corresponding TCI field value.

It should be noted that the first field may be a bit other than a TCI state byte in the first MAC CE or a bit of a TCI state byte in the first MAC CE. This is not specifically limited in this application. For example, the TCI field in the DCI corresponds to eight TCI field values.

The following describes two possible manners of obtaining the TCI state group through classification.

Classification manner 1: Each TCI state group corresponds to one TRP, and different TCI state groups correspond to different TRPs.

In this implementation, the TCI state group is obtained through classification at a TRP granularity. For example, if the first field indicates that the any TCI field value corresponds to one TCI state group, it indicates that the any TCI field value corresponds to a TCI state group of one TRP. For example, the any TCI field value corresponds to a TCI state group of a first TRP or a TCI state group of a second TRP. Alternatively, if the first field indicates that the any TCI field value corresponds to two TCI state groups, it indicates that the any TCI field value corresponds to TCI state groups of two TRPs (a first TRP and a second TRP).

In the manner 1, optionally, the first field indicates any one of the following:
the any TCI field value corresponds to one TCI state of the first TRP;
the any TCI field value corresponds to one TCI state of the second TRP;
the any TCI field value corresponds to two TCI states of the first TRP;
the any TCI field value corresponds to two TCI states of the second TRP;
the any TCI field value corresponds to one TCI state of the first TRP and one TCI state of the second TRP;
the any TCI field value corresponds to one TCI state of the first TRP and two TCI states of the second TRP;
the any TCI field value corresponds to two TCI states of the first TRP and one TCI state of the second TRP; or
the any TCI field value corresponds to two TCI states of the first TRP and two TCI states of the second TRP.

It can be learned from the foregoing that the first field indicates one of the foregoing eight cases. A length of the first field may be 8 bits. For example, when a value of the first field is 000, it indicates that the any TCI field value corresponds to one TCI state of the first TRP. When a value of the first field is 001, it indicates that the any TCI field value corresponds to one TCI state of the second TRP. When a value of the first field is 010, it indicates that the any TCI field value corresponds to two TCI states of the first TRP. When a value of the first field is 011, it indicates that the any TCI field value corresponds to two TCI states of the second TRP. When a value of the first field is 100, it indicates that the any TCI field value corresponds to one TCI state of the first TRP and one TCI state of the second TRP. When a value of the first field is 101, it indicates that the any TCI field value corresponds to one TCI state of the first TRP and two TCI states of the second TRP. When a value of the first field is 110, it indicates that the any TCI field value corresponds to two TCI states of the first TRP and one TCI state of the second TRP. When a value of the first field is 111, it indicates that the any TCI field value corresponds to two TCI states of the first TRP and two TCI states of the second TRP.

For example, the TCI field in the DCI corresponds to eight TCI field values. Each TCI field value corresponds to one first field. As shown in FIG. 11, a 1^{st} TCI field value corresponds to a first field S1, a 2^{nd} TCI field value corresponds to a first field S2, a 3^{rd} TCI field value corresponds to a first field S3, a 4^{th} TCI field value corresponds to a first field S4, a 5^{th} TCI field value corresponds to a first field S5, a 6^{th} TCI field value corresponds to a first field S6, a 7^{th} TCI field value corresponds to a first field S7, and an 8^{th} TCI field value corresponds to a first field S8. For example, the first field S1 indicates that the 1^{st} TCI field value corresponds to two TCI state groups and each TCI state group includes two TCI states. To be specific, the first field S1 indicates that the any TCI field value corresponds to two TCI states of the first TRP and two TCI states of the second TRP. Other first fields are in similar cases, and are not specifically described one by one herein.

Alternatively, the first field indicates any one of the following:
the any TCI field value corresponds to one TCI state of one TRP;
the any TCI field value corresponds to two TCI states of one TRP;
the any TCI field value corresponds to one TCI state of the first TRP and one TCI state of the second TRP;
the any TCI field value corresponds to one TCI state of the first TRP and two TCI states of the second TRP;
the any TCI field value corresponds to two TCI states of the first TRP and one TCI state of the second TRP; or
the any TCI field value corresponds to two TCI states of the first TRP and two TCI states of the second TRP.

In other words, when the any TCI field value corresponds to one TCI state group, whether the any TCI field value corresponds to a single TCI state of a single TRP or two TCI states of a single TRP needs to be identified, and which TRP the single TRP is does not need to be further identified.

In an implementation, S1 includes a 1^{st} bit of 3 bytes, S2 includes a 2^{nd} bit of the 3 bytes, and the rest can be deduced by analogy.

It should be noted that, optionally, when the first field indicates that the any TCI field value corresponds to two TCI state groups, the two TCI state groups include a TCI state group corresponding to the first TRP and a TCI state group corresponding to the second TRP.

In the first MAC CE, a TCI state in the TCI state group corresponding to the first TRP ranks before a TCI state in the TCI state group corresponding to the second TRP; or in the first MAC CE, a TCI state in the TCI state group corresponding to the first TRP ranks after a TCI state in the TCI state group corresponding to the second TRP.

For example, as shown in FIG. 11, the first field S1 indicates that the any TCI field value corresponds to two TCI states of the first TRP and two TCI states of the second TRP. It can be learned from this that TCI-stateID_{i,1} and TCI-stateID_{i,2} are TCI state identifiers of the first TRP, and TCI-stateID_{i,3} and TCI-stateID_{i,4} are TCI state identifiers of the second TRP.

In a possible implementation, the any TCI field value corresponds to a maximum of 4 bytes in the first MAC CE. In the 4 bytes, a 1^{st} byte corresponds to a first TCI state of the first TRP, a 2^{nd} byte corresponds to a second TCI state of the first TRP, a 3^{rd} byte corresponds to a first TCI state of the second TRP, and a 4^{th} byte corresponds to a second TCI state of the second TRP. Alternatively, the any TCI field value corresponds to a maximum of 4 bytes in the first MAC CE; and in the 4 bytes, a 1^{st} byte corresponds to a first TCI state of the second TRP, a 2^{nd} byte corresponds to a second TCI state of the second TRP, a 3^{rd} byte corresponds to a first TCI state of the first TRP, and a 4^{th} byte corresponds to a second TCI state of the first TRP.

For example, as enumerated in Table 1.2, in first four TCI states indicated by the first MAC CE, TCI-stateID_{i,1} and TCI-stateID_{i,2} are TCI state identifiers of a TRP 1, and TCI-stateID_{i,3} and TCI-stateID_{i,4} are TCI state identifiers of a TRP 2.

In another possible implementation, the terminal device determines, by using the third field above, that the any TCI field value corresponds to two TCI states of the first TRP and two TCI states of the second TRP. In this case, it can be learned that, in the first MAC CE shown in FIG. 11, the any TCI field value corresponds to a maximum of 4 bytes in the first MAC CE (also referred to as first 4 TCI state bytes in the first MAC CE), namely, first four TCI states indicated by the first MAC CE. In the four TCI states, it is specified by default that TCI state identifiers (namely, TCI-stateID_{i,1} and TCI-stateID_{i,2}) of the TRP 1 rank before TCI state identifiers (namely, TCI-stateID_{i,3} and TCI-stateID_{i,4}) of the TRP 2; TCI state identifiers (namely, TCI-stateID_{i,3} and TCI-stateID_{i,4}) of the TRP 2 rank after TCI state identifiers (namely, TCI-stateID_{i,1} and TCI-stateID_{i,2}) of the TRP 1; or a 1^{st} TCI state identifier and a 3^{rd} TCI state identifier (namely, TCI-stateID_{i,1} and TCI-stateID_{i,3}) are TCI state identifiers of the TRP 1, and a 2^{nd} TCI state identifier and a 4^{th} TCI state identifier (namely, TCI-stateID_{i,2} and TCI-stateID_{i,4}) are TCI state identifiers of the TRP 2.

It should be noted that the foregoing descriptions are provided by using an example in which all the 4 bytes in the first MAC CE that correspond to the any TCI field value exist, that is, each TRP corresponds to 2 bytes. During actual application, a part of the 4 bytes corresponding to the any TCI field value may be default.

Optionally, the terminal device determines a default byte in the 4 bytes based on the first field. For either TRP in the first TRP and the second TRP, if a quantity of TCI states of the either TRP that correspond to the any TCI field value is 0, 2 bytes in the first MAC CE that correspond to the either TRP are both default; or if a quantity of TCI states of the either TRP that correspond to the any TCI field value is 1, a 2^{nd} byte in 2 bytes in the first MAC CE that correspond to the either TRP is default.

The following describes two possible implementations in which the terminal device determines a type of a TCI state indicated by each of the 4 bytes corresponding to the any TCI field value.

Manner 1: A 1^{st} bit of the 1^{st} byte indicates a type of a TCI state indicated by last 7 bits of the 1^{st} byte, and a type of a TCI state indicated by the 2^{nd} byte is a type opposite to the type of the TCI state indicated by the last 7 bits of the 1^{st} byte; and a 1^{st} bit of the 3^{rd} byte indicates a type of a TCI state indicated by last 7 bits of the 3^{rd} byte, and a type of a TCI state indicated by the 4^{th} byte is a type opposite to the type of the TCI state indicated by the last 7 bits of the 3^{rd} byte.

The manner 1 is similar to related descriptions in the embodiment shown in FIG. 7. For details, refer to the related descriptions in the embodiment shown in FIG. 7.

Manner 2: A 1^{st} bit of each byte in the 4 bytes indicates a type of a TCI state indicated by last 7 bits of the byte, where the type of the TCI state includes an uplink TCI state, a downlink TCI state, or a joint uplink/downlink TCI state.

The manner 2 is similar to related descriptions in the embodiment shown in FIG. 7. For details, refer to the related descriptions in the embodiment shown in FIG. 7.

Classification manner 2: TCI states in each TCI state group belong to a same type of TCI states, and TCI states in different TCI state groups belong to different types of TCI states.

In this implementation, the TCI state group is obtained through classification at a granularity of a type of a TCI state. For example, if the first field indicates that the any TCI field value corresponds to one TCI state group, it indicates that the any TCI field value corresponds to a TCI state group of one type. For example, if the any TCI field value corresponds to two TCI state groups, it indicates that the any TCI field value corresponds to TCI state groups of two types. The type of the TCI state includes an uplink TCI state, a downlink TCI state, or a joint uplink/downlink TCI state.

In the manner 2, optionally, the first field indicates any one of the following:
the any TCI field value corresponds to one uplink TCI state group, and the uplink TCI state group includes one uplink TCI state;
the any TCI field value corresponds to one downlink TCI state group, and the downlink TCI state group includes one downlink TCI state;
the any TCI field value corresponds to one uplink TCI state group, and the uplink TCI state group includes two uplink TCI states;
the any TCI field value corresponds to one downlink TCI state group, and the downlink TCI state group includes two downlink TCI states;
the any TCI field value corresponds to one uplink TCI state group and one downlink TCI state group, the uplink TCI state group includes one uplink TCI state, and the downlink TCI state group includes one downlink TCI state;
the any TCI field value corresponds to one uplink TCI state group and one downlink TCI state group, the uplink TCI state group includes one uplink TCI state, and the downlink TCI state group includes two downlink TCI states;
the any TCI field value corresponds to one uplink TCI state group and one downlink TCI state group, the uplink TCI state group includes two uplink TCI states, and the downlink TCI state group includes one downlink TCI state; or
the any TCI field value corresponds to one uplink TCI state group and one downlink TCI state group, the uplink TCI state group includes two uplink TCI states, and the downlink TCI state group includes two downlink TCI states.

It can be learned from the foregoing that the first field indicates one of the foregoing eight cases. A length of the first field may be 8 bits. For example, when a value of the first field is 000, it indicates that the any TCI field value corresponds to one uplink TCI state group, and the uplink TCI state group includes one uplink TCI state. When a value of the first field is 001, it indicates that the any TCI field value corresponds to one downlink TCI state group, and the downlink TCI state group includes one downlink TCI state. When a value of the first field is 010, it indicates that the any TCI field value corresponds to one uplink TCI state group, and the uplink TCI state group includes two uplink TCI states. When a value of the first field is 011, it indicates that the any TCI field value corresponds to one downlink TCI state group, and the downlink TCI state group includes two downlink TCI states. When a value of the first field is 100, it indicates that the any TCI field value corresponds to one uplink TCI state group and one downlink TCI state group, the uplink TCI state group includes one uplink TCI state, and the downlink TCI state group includes one downlink TCI state. When a value of the first field is 101, it indicates that the any TCI field value corresponds to one uplink TCI state group and one downlink TCI state group, the uplink TCI state group includes one uplink TCI state, and the downlink TCI state group includes two downlink TCI states. When a value of the first field is 110, it indicates that the any TCI field value corresponds to one uplink TCI state group and one downlink TCI state group, the uplink TCI state group includes two uplink TCI states, and the downlink TCI state group includes one downlink TCI state. When a value of the first field is 111, it indicates that the any TCI field value corresponds to one uplink TCI state group and one downlink TCI state group, the uplink TCI state group includes two uplink TCI states, and the downlink TCI state group includes two downlink TCI states.

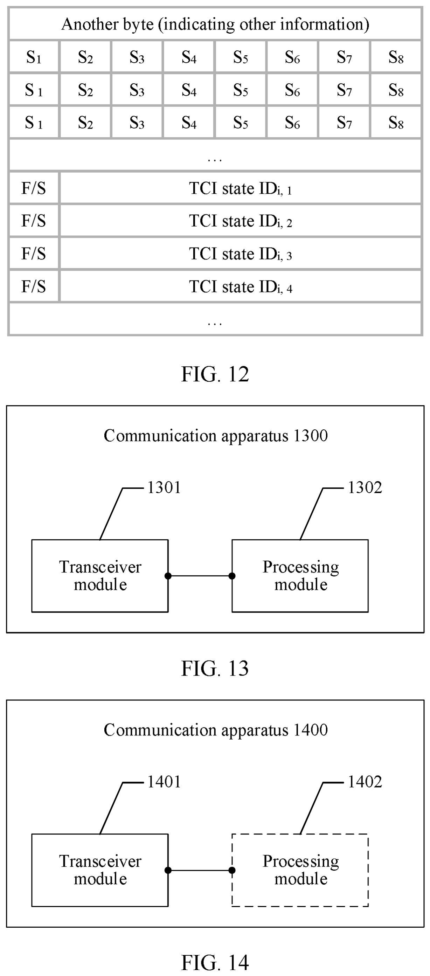

For example, the TCI field in the DCI corresponds to eight TCI field values. Each TCI field value corresponds to one first field. As shown in FIG. 12, a 1^{st} TCI field value corresponds to a first field S1, a 2^{nd} TCI field value corresponds to a first field S2, a 3^{rd} TCI field value corresponds to a first field S3, a 4^{th} TCI field value corresponds to a first field S4, a 5^{th} TCI field value corresponds to a first field S5, a 6^{th} TCI field value corresponds to a first field S6, a 7^{th} TCI field value corresponds to a first field S7, and an 8^{th} TCI field value corresponds to a first field S8. For example, the first field S1 indicates that the 1^{st} TCI field value corresponds to one uplink TCI state group and one downlink TCI state group, the uplink TCI state group includes two uplink TCI states, and the downlink TCI state group includes two downlink TCI states. Other first fields are in similar cases, and are not specifically described one by one herein.

In an implementation, S1 includes a 1^{st} bit of 3 bytes, S2 includes a 2^{nd} bit of the 3 bytes, and the rest can be deduced by analogy.

It should be noted that, optionally, when the first field indicates that the any TCI field value corresponds to one uplink TCI state group and one downlink TCI state group:
In the first MAC CE, an uplink TCI state in the uplink TCI state group ranks before a downlink TCI state in the downlink TCI state group. For example, as shown in FIG. 12, the first field S1 indicates that the 1^{st} TCI field value corresponds to one uplink TCI state group and one downlink TCI state group. The uplink TCI state group includes two uplink TCI states, and the downlink TCI state group includes two downlink TCI states. It can be learned from this that TCI-stateID_{i,1} and TCI-stateID_{i,2} are TCI state identifiers in the uplink TCI state group, and TCI-stateID_{i,3} and TCI-stateID_{i,4} are TCI state identifiers in the downlink TCI state group. Alternatively, in the first MAC CE, an uplink TCI state in the uplink TCI state group ranks after a downlink TCI state in the downlink TCI state group. For example, as shown in FIG. 12, the first field S1 indicates that the 1^{st} TCI field value corresponds to one uplink TCI state group and one downlink TCI state group. The uplink TCI state group includes two uplink TCI states, and the downlink TCI state group includes two downlink TCI states. It can be learned from this that TCI-stateID_{i,1} and TCI-stateID_{i,2} are TCI state identifiers in the downlink TCI state group, and TCI-stateID_{i,3} and TCI-stateID_{i,4} are TCI state identifiers in the uplink TCI state group.

In a possible implementation, the any TCI field value corresponds to a maximum of 4 bytes in the first MAC CE; and in the 4 bytes, a 1^{st} byte corresponds to a first uplink TCI state in the uplink TCI state group, a 2^{nd} byte corresponds to a second uplink TCI state in the uplink TCI state group, a 3^{rd} byte corresponds to a first downlink TCI state in the downlink TCI state group, and a 4^{th} byte corresponds to a second downlink TCI state in the downlink TCI state group. Alternatively, the any TCI field value corresponds to a maximum of 4 bytes in the first MAC CE; and in the 4 bytes, a 1^{st} byte corresponds to a first downlink TCI state in the downlink TCI state group, a 2^{nd} byte corresponds to a second downlink TCI state in the downlink TCI state group, a 3^{rd} byte corresponds to a first uplink TCI state in the uplink TCI state group, and a 4^{th} byte corresponds to a second uplink TCI state in the uplink TCI state group.

For example, as enumerated in Table 2, in first four TCI states indicated by the first MAC CE, TCI-stateID_{i,1} and TCI-stateID_{i,2} are TCI state identifiers in the uplink TCI state group, and TCI-stateID_{i,3} and TCI-stateID_{i,4} are TCI state identifiers in the downlink TCI state group.

In another possible implementation, the terminal device determines, by using the first field, that the any TCI field value corresponds to one uplink TCI state group and one downlink TCI state group, the uplink TCI state group includes two uplink TCI states, and the downlink TCI state group includes two downlink TCI states, namely, first four TCI states indicated by the first MAC CE. In the four TCI states, it is specified by default that a TCI state identifier in the uplink TCI state group ranks before a TCI state identifier in the downlink TCI state group. Alternatively, it is specified by default that a TCI state identifier in the uplink TCI state group ranks after a TCI state identifier in the downlink TCI state group. Alternatively, it is specified by default that a 1^{st} TCI state identifier and a 3^{rd} TCI state identifier are TCI state identifiers in the uplink TCI state group, and a 2^{nd} TCI state identifier and a 4^{th} TCI state identifier are TCI state identifiers in the downlink TCI state group.

It should be noted that the foregoing descriptions are provided by using an example in which all the 4 bytes in the first MAC CE that correspond to the any TCI field value exist, that is, each TRP corresponds to 2 bytes. During actual application, a part of the 4 bytes corresponding to the any TCI field value may be default.

Optionally, the terminal device determines a default byte in the 4 bytes based on the first field. For either TCI state group in the uplink TCI state group and the downlink TCI state group, if a quantity of TCI states corresponding to the either TCI state group is 0, 2 bytes in the first MAC CE that correspond to the either TCI state group are both default; or if a quantity of TCI states corresponding to the either TCI state group is 1, a 2^{nd} byte that is in the first MAC CE and that corresponds to the either TCI state group is default.

The following describes two possible implementations in which the terminal device determines a TRP to which a TCI state indicated by each of the 4 bytes corresponding to the any TCI field value belongs.

Manner 1: A TCI state corresponding to the any TCI field value belongs to a first TRP and/or a second TRP. A 1^{st} bit of the 1^{st} byte indicates a TRP to which a TCI state indicated by last 7 bits of the 1^{st} byte belongs, and a TRP to which a TCI state indicated by the 2^{nd} byte belongs is a TRP, in the first TRP and the second TRP, other than the TRP to which the TCI state indicated by the last 7 bits of the 1^{st} byte belongs; and a 1^{st} bit of the 3^{rd} byte indicates a TRP to which a TCI state indicated by last 7 bits of the 3^{rd} byte belongs, and a TRP to which a TCI state indicated by the 4^{th} byte belongs is a TRP, in the first TRP and the second TRP, other than the TRP to which the TCI state indicated by the last 7 bits of the 3^{rd} byte belongs.

For the manner 1, refer to related descriptions in the embodiment shown in FIG. 7. Details are not described herein again.

Manner 2: A 1^{st} bit of each byte in the 4 bytes corresponding to the any TCI field value indicates a TRP to which a TCI state indicated by last 7 bits of the byte belongs.

For the manner 2, refer to related descriptions in the embodiment shown in FIG. 7. Details are not described herein again.

Optionally, the terminal device determines a default byte in the 4 bytes based on the first field. For either TRP in the first TRP and the second TRP, if a quantity of TCI states of the either TRP that correspond to the any TCI field is 0, 2 bytes corresponding to the either TRP are both default.

1003: The terminal device determines, based on the first indication information, the TCI state corresponding to each TCI field value in the plurality of TCI field values.

In a possible implementation, for the any TCI field value, the first MAC CE includes the first field. The terminal device determines, based on the first field corresponding to the any TCI field value, the TCI state corresponding to the any TCI field value.

For example, the TCI field in the DCI corresponds to eight TCI field values, and each TCI field value corresponds to one first field. As shown in FIG. 11, the first field T1 indicates that a 1^{st} TCI field value corresponds to two TCI states of the first TRP and two TCI states of the second TRP. It can be learned from this that the 1^{st} TCI field value corresponds to first 4 bytes (also referred to as first 4 TCI state bytes) shown in FIG. 11. The any TCI field value corresponds to a maximum of 4 bytes in the first MAC CE. In the 4 bytes, a 1^{st} byte corresponds to a first TCI state of the first TRP, a 2^{nd} byte corresponds to a second TCI state of the first TRP, a 3^{rd} byte corresponds to a first TCI state of the second TRP, and a 4^{th} byte corresponds to a second TCI state of the second TRP. TCI-stateID_{i,1} and TCI-stateID_{i,2} are TCI state identifiers of the first TRP. TCI-stateID_{i,3} and TCI-stateID_{i,4} are TCI state identifiers of the second TRP. The terminal device determines, based on a 1^{st} bit of a 1^{st} byte, that a TCI state indicated by TCI-stateID_{i,1} is an uplink TCI state. The terminal device determines, based on a 1^{st} bit of a 2^{nd} byte, that a TCI state indicated by TCI-stateID_{i,2} is a downlink TCI state. The terminal device determines, based on a 1^{st} bit of a 3^{rd} byte, that a TCI state indicated by TCI-stateID_{i,3} is a downlink TCI state. The terminal device determines, based on a 1^{st} bit of a 4^{th} byte, that a TCI state indicated by TCI-stateID_{i,4} is an uplink TCI state.

For example, the TCI field in the DCI corresponds to eight TCI field values, and each TCI field value corresponds to one first field. As shown in FIG. 12, the first field T1 indicates that a 1^{st} TCI field value corresponds to one uplink TCI state group and one downlink TCI state group. The uplink TCI state group includes two uplink TCI states, and the downlink TCI state group includes two downlink TCI states. It can be learned from this that the 1^{st} TCI field value corresponds to first 4 bytes (also referred to as first 4 TCI state bytes) shown in FIG. 12. In four TCI states respectively indicated by the first 4 bytes, it is specified by default that a TCI state identifier in the uplink TCI state group ranks before a TCI state identifier in the downlink TCI state group. That is, TCI-stateID_{i,1} and TCI-stateID_{i,2} are TCI state identifiers in the uplink TCI state group, and TCI-stateID_{i,3} and TCI-stateID_{i,4} are TCI state identifiers in the downlink TCI state group. A 1^{st} bit of each byte in the first 4 bytes indicates a TRP to which a TCI state indicated by last 7 bits of the byte belongs. The terminal device determines, based on a 1^{st} bit of a 1^{st} byte, that an uplink indicated by TCI-stateID_{i,1} belongs to the first TRP. The terminal device determines, based on a 1^{st} bit of a 2^{nd} byte, that an uplink TCI state indicated by TCI-stateID_{i,2} belongs to the second TRP. The terminal device determines, based on a 1^{st} bit of a 3^{rd} byte, that a downlink TCI state indicated by TCI-stateID_{i,3} belongs to the first TRP. The terminal device determines, based on a 1^{st} bit of a 4^{th} byte, that a downlink TCI state indicated by TCI-stateID_{i,4} belongs to the second TRP.

After the terminal device determines, based on the first indication information, the TCI state corresponding to each TCI field value in the plurality of TCI fields, the terminal device determines, by using a field value of the TCI field (which may also be referred to as a TCI field value) in the DCI, a TCI state corresponding to the field value of the TCI field. If a TCI state indicated by the network device this time is different from a TCI state indicated last time, the terminal device uses the TCI state corresponding to the field value of the TCI field. If a TCI state indicated by the network device this time is the same as a TCI state indicated last time, the terminal device still uses the TCI state indicated last time.

In a possible implementation, when the field value of the TCI field in the DCI indicates a TCI state of a single TRP, the terminal device may replace, with the TCI state of the single TRP, a TCI state previously used by the terminal device and the TRP. For the other TRP, the terminal device still uses a TCI state that is of the other TRP and that is previously indicated by the network device to the terminal device. For example, the terminal device still uses a TCI state that is of the other TRP and that is indicated by the network device to the terminal device last time.

In another possible implementation, when the network device indicates the terminal device to perform single-TRP transmission by only using a TCI state of a single TRP, a TCI of the other TRP is no longer used. In other words, the terminal device performs single-TRP transmission by using a TCI state of a single TRP, and previously used TCI states of the two TRPs are no longer used.

In the 1^{st} implementation, the network device may indicate, in the following manner 1 or manner 2, the terminal device to switch from an mTRP mode to a single-TRP mode.

Manner 1: The network device configures, by using RRC signaling, the terminal device to fall back from the mTRP mode to the single-TRP mode, that is, configures the terminal device to perform transmission by only using the TCI state of the single TRP.

Manner 2: When a first condition is met, the terminal device performs transmission by only using the TCI state of the single TRP, where the first condition includes either of the following:
1. The terminal device receives a second MAC CE from the network device, where the second MAC CE indicates a TCI state that is of a single TRP and that corresponds to each TCI field value.
   Specifically, a format of the second MAC CE may be shown in FIG. 6. In other words, the format of the second MAC CE is a conventional MAC CE format. To be specific, after the terminal device receives one second MAC CE, each TCI field value corresponds to a TCI state of a single TRP. In this case, if the terminal device receives DCI, a TCI state indicated by the DCI is a TCI state of the single TRP. In this case, the terminal device performs transmission by using the TCI state that is of the single TRP and that is indicated by the DCI, instead of using previous TCI states of two TRPs. That is, when the terminal device receives DCI, if all current TCI field values are associated with TCI states of a same TRP, the terminal device falls back to single-TRP transmission, in other words, performs transmission by only using the TCI state that is of the single TRP and that is indicated by the DCI.
2. The terminal device receives the first MAC CE from the network device, where a TCI state of a same TRP is activated in the first MAC CE. In other words, TCI states of only one TRP are activated by using the foregoing first MAC CE, that is, TCI states corresponding to all the TCI field values are TCI states of a same TRP. In this case, if the terminal device receives DCI, the DCI indicates a TCI state of the single TRP. In this case, the terminal device performs transmission by using the TCI state that is of the single TRP and that is indicated by the DCI, instead of using previous TCI states of two TRPs. That is, when the terminal device receives DCI, if all current TCI field values are associated with TCI states of a same TRP, the terminal device falls back to single-TRP transmission, in other words, performs transmission by only using the TCI state that is of the single TRP and that is indicated by the DCI. Alternatively, the terminal device does not need to receive DCI. After the terminal device receives the foregoing first MAC CE indicating TCI states of a same TRP, the terminal device needs to fall back to single-TRP transmission. In this case, the terminal device selects, for transmission from currently used TCI states of two TRPs, a TCI state that belongs to the same TRP, and does not use a TCI state that belongs to the other TRP.

In this embodiment of this application, the terminal device receives the first MAC CE from the network device. The terminal device receives the DCI from the network device. The DCI includes the TCI field, the TCI field corresponds to the plurality of TCI field values, any TCI field value in the plurality of TCI field values corresponds to one or two TCI state groups, and each TCI state group includes one or two TCI states. For the any TCI field value, the first MAC CE includes a first field, and the first field indicates a TCI state group corresponding to the any TCI field value and a quantity of TCI states included in each TCI state group. In this way, the terminal device determines, based on the first MAC CE, the TCI state corresponding to each TCI field value in the plurality of TCI field values, so that the network device indicates the TCI state to the terminal device by using the TCI field value in the DCI; and the TCI state corresponds to a corresponding beam, so that the network device indicates the beam to the terminal device. Moreover, according to the technical solution in this application, in an mTRP scenario, the network device may indicate, to the terminal device, TCI states corresponding to a plurality of TRPs, to implement transmission between the terminal device and the plurality of TRPs.

This application further provides Embodiment A. Embodiment A is similar to the embodiment shown in FIG. 10, and a difference lies in: In step 1001, for any TCI field value, the first indication information includes a first field, and the first field indicates a quantity of TCI state groups corresponding to the any TCI field value.

Optionally, the first indication information is a first MAC CE.

In other words, the first MAC CE includes a plurality of first fields, and the plurality of first fields are in one-to-one correspondence with the plurality of TCI field values. Each first field indicates a quantity of TCI state groups corresponding to a corresponding TCI field value.

The following describes two manners of obtaining the TCI state group through classification.

Manner 1: Each TCI state group corresponds to one TRP, and different TCI state groups correspond to different TRPs.

In this implementation, the TCI state group is obtained through classification at a TRP granularity. For example, if the first field indicates that the any TCI field value corresponds to one TCI state group, it indicates that the any TCI field value corresponds to a TCI state group of one TRP. For example, the any TCI field value corresponds to a TCI state group of a first TRP or a TCI state group of a second TRP. Alternatively, if the first field indicates that the any TCI field value corresponds to two TCI state groups, it indicates that the any TCI field value corresponds to TCI state groups of two TRPs (a first TRP and a second TRP). In other words, the first field indicates a quantity of TRPs whose TCI states correspond to the any TCI field value, that is, indicates whether a TCI state of a single TRP or TCI states of two TRPs correspond to the any TCI field value. In other words, the first field indicates a quantity of TCI state groups corresponding to the any TCI field value, that is, indicates whether the any TCI field value corresponds to a single TCI state group or two TCI state groups.

The following describes two possible implementations of the first field.
1. The first field may be a bit other than a TCI state byte in the first MAC CE.

Optionally, 1 bit or 2 bits in the first MAC CE indicate the quantity of TCI state groups corresponding to the any TCI field value.

For example, the TCI field corresponds to P TCI field values, where P is an integer greater than or equal to 1. The first MAC CE includes a first bitmap. The first bitmap includes P bits. A 1^{st} bit indicates a quantity of TCI state groups corresponding to a 1^{st} TCI field value in the P TCI field values, and a 2^{nd} bit indicates a quantity of TCI state groups corresponding to a 2^{nd} TCI field value in the P TCI field values. By analogy, a P^{th} bit indicates a quantity of TCI state groups corresponding to a P^{th} TCI field value in the P TCI field values.

For example, the TCI field corresponds to P TCI field values, where P is an integer greater than or equal to 1. The first MAC CE includes a second bitmap and a third bitmap. The second bitmap includes P bits, and the third bitmap includes P bits. A 1^{st} bit of the second bitmap indicates whether a 1^{st} TCI field value in the P TCI field values corresponds to the TCI state group of the first TRP. A 1^{st} bit of the third bitmap indicates whether the 1^{st} TCI field value in the P TCI field values corresponds to the TCI state group of the second TRP. By analogy, a P^{th} bit of the second bitmap indicates whether a P^{th} TCI field value in the P TCI field values corresponds to the TCI state group of the first TRP. A P^{th} bit of the third bitmap indicates whether the P^{th} TCI field value in the P TCI field values corresponds to the TCI state group of the second TRP.

2. The first field may be a bit of a TCI state byte in the first MAC CE. For example, the first field is a 1^{st} bit or a last bit of a specific TCI state byte in the first MAC CE. For example, the first field is a bit of a TCI state byte corresponding to the any TCI field value. It should be noted that the TCI state byte corresponding to the any TCI field indicates a TCI state corresponding to the any TCI field value.

Optionally, for the any TCI field value, the first MAC CE further includes a second field. The second field indicates a TRP to which a TCI state group corresponding to the any TCI field value belongs. In other words, the first MAC CE further includes a plurality of second fields, and the plurality of second fields are in one-to-one correspondence with the plurality of TCI field values. Each second field indicates a TRP to which a TCI state group corresponding to a corresponding TCI field value belongs.

For example, when the any TCI field value corresponds to a single TCI state group, the second field indicates a TRP to which the TCI state group belongs. When the any TCI field value corresponds to two TCI state groups, the second field indicates TRPs to which the two TCI state groups respectively belong.

It should be noted that, optionally, when the any TCI field value corresponds to a single TCI state group, the first MAC CE may not include the second field, in other words, a TRP to which the TCI state group belongs does not need to be indicated. Specifically, the terminal device may perform transmission by using a default TRP by default.

The following describes two possible implementations of the second field.

1. The second field may be a bit other than a TCI state byte in the first MAC CE.

For example, 2 bits in the first MAC CE respectively indicate the TRPs to which the two TCI state groups corresponding to the any TCI field value respectively belong.

For example, 1 bit in the first MAC CE indicates a TRP to which a first TCI state group corresponding to the any TCI field value belongs. If the any TCI field value corresponds to a second TCI state group, the second TCI state group belongs to a TRP, in the first TRP and the second TRP, other than the TRP to which the first TCI state group belongs.

For example, the TCI field corresponds to P TCI field values, where P is an integer greater than or equal to 1. The first MAC CE includes a first bitmap, and the first bitmap includes P bits. A 1^{st} bit indicates a TRP to which a first TCI state group corresponding to a 1^{st} TCI field value in the P TCI field values belongs. A 2^{nd} bit indicates a TRP to which a first TCI state group corresponding to a 2^{nd} TCI field value in the P TCI field values belongs. By analogy, a P^{th} bit indicates a TRP to which a first TCI state group corresponding to a P^{th} TCI field value in the P TCI field values belongs. If a corresponding second TCI state group exists, the second TCI state group belongs to a TRP, in the first TRP and the second TRP, other than the TRP to which the first TCI state group belongs.

2. The second field may be a bit of a TCI state byte in the first MAC CE. For example, the second field may be a 1^{st} bit or a last bit of the TCI state byte.

For example, the second field may be a bit in each TCI state byte group that corresponds to the any TCI field value and that is in the first MAC CE. For example, the second field may be a 1^{st} bit or a last bit of a first TCI state byte or a second TCI state byte in each TCI state byte group that corresponds to the any TCI field value and that is in the first MAC CE, to indicate a TRP to which a TCI state indicated by the TCI state byte group belongs.

For example, the second field may be a bit in the first TCI state group that corresponds to the any TCI field value and that is in the first MAC CE. For example, the second field is a bit of the first TCI state byte corresponding to the any TCI field value in the first MAC CE. For example, the second field is a 1^{st} bit or a last bit of the first TCI state byte (corresponding to the first TCI state group) corresponding to the any TCI field value in the first MAC CE, to indicate the TRP to which the first TCI state group belongs. If the second TCI state group exists, the second TCI state group belongs to a TRP, in the first TRP and the second TRP, other than the TRP to which the first TCI state group belongs.

It should be noted that, optionally, if the any TCI field value corresponds to a single TCI state group, the first MAC CE may not include the second field, that is, a TRP to which the TCI state group belongs is default.

It should be noted that, optionally, if the any TCI field value corresponds to two TCI state groups, the TCI state group corresponding to the first TRP ranks before the TCI state group corresponding to the second TRP, or the TCI state group corresponding to the second TRP ranks before the TCI state group corresponding to the first TRP.

Optionally, for the any TCI field value, the first MAC CE further includes a third field, and the third field indicates a quantity of TCI states included in each TCI state group corresponding to the any TCI field value. In other words, the third field indicates whether each TCI state group corresponding to the any TCI field value includes one TCI state or two TCI states.

In other words, the first MAC CE further includes a plurality of third fields, and the plurality of third fields are in one-to-one correspondence with the plurality of TCI field values. Each third field indicates a quantity of TCI states included in each TCI state group corresponding to a corresponding TCI field value.

The following describes two possible implementations of the third field.
1. The third field may be a bit other than a TCI state byte in the first MAC CE.

For example, 2 bits in the first MAC CE respectively indicate quantities of TCI states respectively included in the two TCI state groups corresponding to the any TCI field value, that is, indicate whether each TCI state group includes a single TCI state or two TCI states.

For example, the first MAC CE includes a second bitmap, and every two bits of the second bitmap correspond to one TCI field value, and indicate quantities of TCI states included in two TCI state groups corresponding to the TCI field value. Optionally, when a specific TCI field value corresponds to a single TCI state group, a 2^{nd} bit of 2 bits corresponding to the TCI field value may be ignored, skipped, or default.

For example, the TCI field in the DCI corresponds to P TCI field values, where P is an integer greater than or equal to 1. The first MAC CE includes a third bitmap and a fourth bitmap. The third bitmap includes P bits. In the third bitmap, a 1^{st} bit indicates a quantity of TCI states included in a first TCI state group corresponding to a 1^{st} TCI field value, and a 2^{nd} bit indicates a quantity of TCI states included in a first TCI state group corresponding to a 2^{nd} TCI field value. By analogy, a P^{th} bit indicates a quantity of TCI states included in a first TCI state group corresponding to a P^{th} TCI field value. The fourth bitmap includes P bits, where P is an integer greater than or equal to 1. In the fourth bitmap, a 1^{st} bit indicates a quantity of TCI states included in a second TCI state group corresponding to the 1^{st} TCI field value, and a 2^{nd} bit indicates a quantity of TCI states included in a second TCI state group corresponding to the 2^{nd} TCI field value. By analogy, a P^{th} bit indicates a quantity of TCI states included in a second TCI state group corresponding to the P^{th} TCI field value. It should be noted that when a specific TCI field value corresponds to a single TCI state group, a corresponding bit of the fourth bitmap may be ignored, skipped, or default.

2. The third field may be a bit of a TCI state byte in the first MAC CE. For example, the third field may be a 1^{st} bit or a last bit of the TCI state byte. For example, the third field may be a 1^{st} bit or a last bit of a first TCI state byte in each TCI state byte group (corresponding to a TCI state group) corresponding to the any TCI field value, to indicate a quantity of TCI states included in each TCI state group.

Optionally, for the any TCI field value, the first MAC CE further includes a fourth field, and the fourth field indicates a type of a TCI state in each TCI state group corresponding to the any TCI field value. That is, when a specific TCI state group includes a single TCI state, the fourth field indicates a type of the TCI state. When a specific TCI state group includes two TCI states, the fourth field indicates types respectively corresponding to the two TCI states.

The type of the TCI state includes an uplink TCI state, a downlink TCI state, or a joint uplink/downlink TCI state.

In other words, the first MAC CE further includes a plurality of fourth fields, and the plurality of fourth fields are in one-to-one correspondence with the plurality of TCI field values. Each fourth field indicates a type of a TCI state in each TCI state group corresponding to a corresponding TCI field value.

The following describes two possible implementations of the fourth field.
1. The fourth field may be a bit other than a TCI state byte in the first MAC CE.

For example, 2 bits in the first MAC CE respectively indicate types of TCI states in the two TCI state groups corresponding to the any TCI field value. It should be noted that the fourth field may alternatively indicate only a type of a first TCI state in the TCI state group. If the TCI state group further includes a second TCI state, a type of the second TCI state and the type of the first TCI state are opposite. The uplink TCI state and the downlink TCI state are two opposite TCI states. For example, if a type of a first TCI state in a TCI state group is an uplink TCI state, a type of a second TCI state is a downlink TCI state. Alternatively, if a type of a first TCI state in a TCI state group is a downlink TCI state, a type of a second TCI state is an uplink TCI state.

For example, the first MAC CE includes a fifth bitmap, and every two bits of the fifth bitmap correspond to one TCI field value, and indicate types respectively corresponding to TCI states in the two TCI state groups corresponding to the TCI field value. Optionally, when a specific TCI field value corresponds to a single TCI state group, a 2^{nd} bit corresponding to the TCI field value may be ignored, skipped, or default.

For example, the TCI field in the DCI corresponds to P TCI field values, where P is an integer greater than or equal to 1. The first MAC CE includes a sixth bitmap and a seventh bitmap. The sixth bitmap includes P bits. In the sixth bitmap, a 1^{st} bit indicates a type of a TCI state in a first TCI state group corresponding to a 1^{st} TCI field value, and a 2^{nd} bit indicates a type of a TCI state in a first TCI state group corresponding to a 2^{nd} TCI field value. By analogy, a P^{th} bit indicates a type of a TCI state in a first TCI state group corresponding to a P^{th} TCI field value. The seventh bitmap includes P bits. In the seventh bitmap, a 1^{st} bit indicates a type of a TCI state in a second TCI state group corresponding to the 1^{st} TCI field value, and a 2^{nd} bit indicates a type of a TCI state in a second TCI state group corresponding to the 2^{nd} TCI field value. By analogy, a P^{th} bit indicates a type of a TCI state in a second TCI state group corresponding to the P^{th} TCI field value. It should be noted that, when a specific TCI field value corresponds to a single TCI state group, a bit that corresponds to the TCI field value and that is in the seventh bitmap may be ignored, skipped, or default.

2. The fourth field may be a bit of a TCI state byte in the first MAC CE. For example, the fourth field may be a 1^{st} bit or a last bit of the TCI state byte. For example, the fourth field may be a 1^{st} bit or a last bit of a first TCI state byte in each TCI state byte group (corresponding to a TCI state group) corresponding to the any TCI field value, to indicate a type of a TCI state included in each TCI state group.

It should be noted that the fourth field may be a 1^{st} bit or a last bit in a 1^{st} TCI state byte group (corresponding to the first TCI state group). The 1^{st} bit or the last bit indicates a type of a TCI state in the first TCI state TCI group corresponding to the any TCI field value. If the any TCI field value further corresponds to the second TCI state group, a type of a TCI state in the second TCI state group is a type opposite to the type of the TCI state in the first TCI state TCI group. For example, the any TCI field value corresponds to the first TCI state group and the second TCI state group. If the first TCI state group is an uplink TCI state group, the second TCI state group is a downlink TCI state group.

Optionally, for the any TCI field value, the first MAC CE further includes a fifth field, and the fifth field indicates an index (or an identifier) of a TCI state corresponding to the any TCI field value. The index of the TCI state uniquely identifies the TCI state. In other words, the first MAC CE includes a plurality of fifth fields, and the plurality of fifth fields are in one-to-one correspondence with the plurality of TCI field values. Each fifth field indicates an index of a TCI state corresponding to a corresponding TCI field value.

Generally, each TCI state identifier is in 1 byte in the first MAC CE. The byte carrying the TCI state identifier may be referred to as a TCI state byte for short. One TCI field value may correspond to a single TCI state byte or a plurality of TCI state bytes. One TCI state identifier may occupy 7 bits. Therefore, the TCI state byte further includes one bit, and the bit may indicate other information. For example, the bit may indicate a type of a TCI state corresponding to the TCI state identifier.

It can be learned from this that one TCI state identifier is carried in 1 byte. The network device uses, based on a quantity of TCI states corresponding to the any TCI field value, a corresponding quantity of TCI state bytes to carry a TCI state identifier corresponding to the any TCI field value. For example, if the any TCI field value corresponds to two TCI states, 2 TCI state bytes are needed to respectively carry identifiers of the two TCI states.

In a possible implementation, the any TCI field value corresponds to a maximum of 4 TCI state bytes (indicating four TCI state identifiers). First two TCI state bytes are used as one TCI state byte group, and last two TCI state bytes are used as another TCI state byte group. Each TCI state byte group corresponds to one TRP, to be specific, includes two TCI states of the TRP. Optionally, as enumerated in Table 1.2, it is specified by default that a first TCI state byte group corresponds to the first TRP, and a second TCI state byte group corresponds to the second TRP. Alternatively, a first TCI state byte group corresponds to the second TRP, and the first TCI state byte group corresponds to the first TRP. Alternatively, TRPs respectively corresponding to a first TCI state byte group and a second TCI state byte group are determined in another manner.

Optionally, a type of a TCI state corresponding to each TRP may be indicated by 1 bit of a TCI state byte. Alternatively, it is specified by default that a first TCI state identifier in each TCI state byte group is an identifier of an uplink TCI state, and a second TCI state identifier is an identifier of a downlink TCI state.

The terminal device determines, based on the first field, the second field, the third field, and the fourth field, TRPs and types respectively corresponding to the four TCI state identifiers. Then, the terminal device determines, by using Table 1.2, an identifier of each TCI state indicated by the any TCI field value.

Optionally, the terminal device determines a default byte in the 4 TCI state bytes based on the first field, the third field, and the fourth field.

To be specific, a part of the 4 TCI state bytes corresponding to the any TCI field value may be default, in other words, the first MAC CE actually does not include the part of TCI state bytes. After the terminal device determines the TRP to which the TCI state corresponding to the any TCI field value belongs and the type corresponding to the TCI state, the terminal device may determine the default TCI state byte in the 4 TCI state bytes. For example, when the any TCI field value corresponds only to two TCI states of a TRP 1, first two TCI state bytes in the 4 TCI state bytes exist, and last two TCI state bytes do not exist. It can be learned from this that the terminal device may determine that the any TCI field value actually corresponds only to two TCI state bytes and the two TCI state bytes correspond to two TCI states of the first TRP, and determine identifiers of the TCI states of the first TRP by using the two TCI state bytes. The foregoing manner of determining the default TCI state byte helps reduce bit overheads for the first MAC CE.

In another possible implementation, the terminal device first determines a quantity K of TCI state bytes corresponding to each TCI field value. Then, starting from a TCI field value 0, K TCI state bytes are sequentially selected, based on the quantity K of TCI state bytes corresponding to each TCI field value, from TCI state bytes from top to bottom as TCI state bytes corresponding to the TCI field value. Further, the terminal device determines TRPs to which K TCI states indicated by the K TCI state bytes respectively belong and types of the TCI states. Then, the terminal device may read an identifier of a TCI state of each type and each TRP from the first MAC CE.

Manner 2: TCI states in each TCI state group belong to a same type of TCI states, and TCI states in different TCI state groups belong to different types of TCI states.

In this implementation, the TCI state group is obtained through classification at a granularity of a type of a TCI state. For example, if the first field indicates that the any TCI field value corresponds to one TCI state group, it indicates that the any TCI field value corresponds to a TCI state group of one type. For example, if the any TCI field value corresponds to two TCI state groups, it indicates that the any TCI field value corresponds to TCI state groups of two types.

For example, the any TCI field value corresponds to one TCI state group, and the TCI state group may be an uplink TCI state group, a downlink TCI state group, or a joint uplink/downlink TCI state group. Alternatively, when the any TCI field value corresponds to two TCI state groups, TCI states in the two TCI state groups are TCI states of two opposite types. An uplink TCI state and a downlink TCI state are TCI states of two opposite types.

The following describes two possible implementations of the first field.
1. The first field may be a bit other than a TCI state byte in the first MAC CE.

For example, 1 separate bit in the first MAC CE indicates the quantity of TCI state groups corresponding to the any TCI field value, namely, a quantity of types of TCI state groups corresponding to the any TCI field value.

For example, the TCI field corresponds to P TCI field values, where P is an integer greater than or equal to 1. The first MAC CE includes a bitmap 1, and the bitmap 1 includes P bits. A 1^{st} bit indicates a quantity of TCI state groups corresponding to a 1^{st} TCI field value in the P TCI field values, and a 2^{nd} bit indicates a quantity of TCI state groups corresponding to a 2^{nd} TCI field value in the P TCI field values. By analogy, a P^{th} bit indicates a quantity of TCI state groups corresponding to a P^{th} TCI field value in the P TCI field values. Alternatively, the bitmap 1 includes 2P bits, 1 bit in every 2 bits indicates whether a TCI field value corresponds to a TCI state group of a first type, and the other bit indicates whether the TCI field value corresponds to a TCI state group of a second type.

For example, the TCI field corresponds to P TCI field values, where P is an integer greater than or equal to 1. The first MAC CE includes a bitmap 2 and a bitmap 3. The bitmap 2 includes P bits, and the bitmap 3 includes P bits. In the bitmap 2, a 1^{st} bit indicates whether a 1^{st} TCI field value in the P TCI field values corresponds to a TCI state group of a first type, and a 2^{nd} bit indicates whether a 2^{nd} TCI field value in the P TCI field values corresponds to a TCI state group of the first type. By analogy, a P^{th} bit indicates whether a P^{th} TCI field value in the P TCI field values corresponds to a TCI state group of the first type. The bitmap 3 includes P bits. In the bitmap 3, a 1^{st} bit indicates whether the 1^{st} TCI field value in the P TCI field values corresponds to a TCI state group of a second type, and a 2^{nd} bit indicates whether the 2^{nd} TCI field value in the P TCI field values corresponds to a TCI state group of the second type. By analogy, a P^{th} bit indicates whether the P^{th} TCI field value in the P TCI field values corresponds to a TCI state group of the second type.

2. The first field may be a bit of a TCI state byte in the first MAC CE. For example, the first field is a 1^{st} bit or a last bit of a specific TCI state byte in the first MAC CE. For example, the first field is a bit of a TCI state byte in a 1^{st} TCI state byte group or a 2^{nd} TCI state byte corresponding to the any TCI field value, for example, a 1^{st} bit or a last bit of a first TCI state byte in the 1^{st} TCI state byte group or the 2^{nd} TCI state byte group.

Optionally, for the any TCI field value, the first MAC CE further includes a sixth field. The sixth field indicates a type of each TCI state group corresponding to the any TCI field value. For example, the any TCI field value corresponds to one TCI state group, and the sixth field indicates a type of the TCI state group. For example, the any TCI field value corresponds to two TCI state groups that are respectively a first TCI state group and a second TCI state group. The sixth field indicates a type of the first TCI state group and a type of the second TCI state group. The type of the TCI state group includes an uplink TCI state group, a downlink TCI state group, or a joint uplink/downlink TCI state group.

In other words, the first MAC CE further includes a plurality of sixth fields, and the plurality of sixth fields are in one-to-one correspondence with the plurality of TCI field values. Each sixth field indicates a type of a TCI state group corresponding to a corresponding TCI field value.

The following describes two possible implementations of the sixth field.
1. The sixth field may be a bit other than a TCI state byte in the first MAC CE.

For example, 2 bits in the first MAC CE respectively indicate types of the two TCI state groups corresponding to the any TCI field value.

For example, 1 bit in the first MAC CE indicates a type of the first TCI state group corresponding to the any TCI field value. If the any TCI field value further corresponds to the second TCI state group, a type of the second TCI state group and the type of the first TCI state group are opposite types of TCI state groups. The uplink TCI state group and the downlink TCI state group are TCI state groups of opposite types.

For example, the TCI field corresponds to P TCI field values, where P is an integer greater than or equal to 1. The first MAC CE includes a bitmap 4, and the bitmap 4 includes P bits. A 1^{st} bit indicates a type of a first TCI state group corresponding to a 1^{st} TCI field value in the P TCI field values, and a 2^{nd} bit indicates a type of a first TCI state group corresponding to a 2^{nd} TCI field value in the P TCI field values. By analogy, a P^{th} bit indicates a type of a first TCI state group corresponding to a P^{th} TCI field value in the P TCI field values. If a specific TCI field value further corresponds to a second TCI state group, a type of the second TCI state group and a type of a first TCI state group are opposite types of TCI state groups.

2. The sixth field may be a bit of a TCI state byte in the first MAC CE. For example, the second field may be a 1^{st} bit or a last bit of the TCI state byte.

For example, the sixth field may be a bit in each TCI state byte group that corresponds to the any TCI field value and that is in the first MAC CE. For example, the sixth field may be a 1^{st} bit or a last bit of a first TCI state byte or a second TCI state byte in each TCI state byte group that corresponds to the any TCI field value and that is in the first MAC CE, to indicate a type of a TCI state indicated by the TCI state byte group.

For example, the sixth field may be a bit in a 1^{st} TCI state byte group that corresponds to the any TCI field value and that is in the first MAC CE. For example, the sixth field is a 1^{st} bit or a last bit in the 1^{st} TCI state byte group (corresponding to the first TCI state group) corresponding to the any TCI field value, to indicate the type of the first TCI state group. If the any TCI field value corresponds to the second TCI state group, the type of the second TCI state group and the type of the first TCI state group are opposite types of TCI state groups. Alternatively, the sixth field is a 1^{st} bit or a last bit in a 2^{nd} TCI state byte group corresponding to the any TCI field value. If the any TCI field value corresponds to the first TCI state group, the type of the first TCI state group and the type of the second TCI state group are opposite types of TCI state groups.

It should be noted that, optionally, if the any TCI field value corresponds to two TCI state groups, in the first MAC CE, a TCI state in the uplink TCI state group always ranks before a TCI state in the downlink TCI state group. Alternatively, if
the any TCI field value corresponds to two TCI state groups, in the first MAC CE, a TCI state in the downlink TCI state group always ranks before a TCI state in the uplink TCI state group.

Optionally, for the any TCI field value, the first MAC CE further includes a seventh field, and the seventh field indicates a quantity of TCI states included in each TCI state group corresponding to the any TCI field value. In other words, the seventh field indicates whether each TCI state group corresponding to the any TCI field value includes one TCI state or two TCI states. In other words, the first MAC CE includes a plurality of seventh fields, and the plurality of seventh fields are in one-to-one correspondence with the plurality of TCI field values. Each seventh field indicates a quantity of TCI state groups included in each TCI state group corresponding to a corresponding TCI field value.

For the seventh field, refer to related descriptions of the third field in this embodiment. Details are not described herein again.

Optionally, for the any TCI field value, the first MAC CE further includes an eighth field, and the eighth field indicates a TRP to which a TCI state in each TCI state group corresponding to the any TCI field value belongs. For example, the any TCI field value corresponds to one TCI state group, the TCI state group includes one TCI state, and the eighth field indicates a TRP to which the TCI state belongs. When the TCI state group includes two TCI states, the eighth field indicates TRPs to which the two TCI states respectively belong.

In other words, the first MAC CE includes a plurality of eighth fields, and the plurality of eighth fields are in one-to-one correspondence with the plurality of TCI field values. Each eighth field indicates a TRP to which a TCI state in each TCI state group corresponding to a corresponding TCI field value belongs.

It should be noted that when the any TCI field value corresponds to a single TCI state group, and the TCI state group includes one TCI state, the first MAC CE may not include the eighth field. In other words, a TRP to which the TCI state belongs does not need to be indicated. Specifically, the terminal device may determine that the TCI state belongs to a default TRP.

The following describes two possible implementations of the eighth field.
1. The eighth field may be a bit other than a TCI state byte in the first MAC CE.

For example, 2 bits in the first MAC CE respectively indicate TRPs to which TCI states in the two TCI state groups corresponding to the any TCI field value belong. For one TCI state group, only a TRP to which a first TCI state in the TCI state group belongs may be indicated, and a second TCI state belongs to a TRP, in the first TRP and the second TRP, other than the TRP to which the first TCI state belongs. For example, for one TCI state group, if a first TCI state in the TCI state group corresponds to the first TRP, a second TCI state in the TCI state group corresponds to the second TRP. Alternatively, for one TCI state group, if a first TCI state in the TCI state group corresponds to the second TRP, a second TCI state in the TCI state group corresponds to the first TRP.

For example, the TCI field corresponds to P TCI field values, where P is an integer greater than or equal to 1. The first MAC CE includes a bitmap 5, and the bitmap 5 includes 2P bits. Every 2 bits correspond to one TCI field value, and respectively indicate TRPs to which TCI states in two TCI state groups corresponding to the TCI field value belong. Optionally, when a specific TCI field value corresponds to one TCI state group, a 2^{nd} bit corresponding to the TCI field value may be ignored, skipped, or default.

For example, the TCI field corresponds to P TCI field values, where P is an integer greater than or equal to 1. The first MAC CE includes a bitmap 6 and a bitmap 7. The bitmap 6 includes P bits. A 1^{st} bit indicates a TRP to which a TCI state in a first TCI state group corresponding to a 1^{st} TCI field value in the P TCI field values belongs, and a 2^{nd} bit indicates a TRP to which a TCI state in a first TCI state group corresponding to a 2^{nd} TCI field value in the P TCI field values belongs. By analogy, a P^{th} bit indicates a TRP to which a TCI state in a first TCI state group corresponding to a P^{th} TCI field value in the P TCI field values belongs. The bitmap 7 includes P bits. A 1^{st} bit indicates a TRP to which a TCI state in a second TCI state group corresponding to the 1^{st} TCI field value in the P TCI field values belongs, and a 2^{nd} bit indicates a TRP to which a TCI state in a second TCI state group corresponding to the 2^{nd} TCI field value in the P TCI field values belongs. By analogy, a P^{th} bit indicates a TRP to which a TCI state in a second TCI state group corresponding to the P^{th} TCI field value in the P TCI field values belongs. Optionally, when a specific TCI field value corresponds to one TCI state group, a bit that corresponds to the TCI field value and that is in the bitmap 7 may be ignored, skipped, or default.

2. The eighth field may be a bit of a TCI state byte in the first MAC CE. For example, the eighth field may be a 1^{st} bit or a last bit of the TCI state byte.

For example, the eighth field may be a bit in each TCI state byte group that corresponds to the any TCI field value and that is in the first MAC CE. For example, the eighth field may be a 1^{st} bit or a last bit of a first TCI state byte or a second TCI state byte in each TCI state byte group that corresponds to the any TCI field value and that is in the first MAC CE, to indicate a TRP to which a TCI state indicated by the TCI state byte group belongs.

Optionally, for the any TCI field value, the first MAC CE further includes a ninth field. The ninth field indicates an index (or an identifier) of a TCI state corresponding to the any TCI field value, and the index of the TCI state uniquely identifies the TCI state. In other words, the first MAC CE includes a plurality of ninth fields, and the plurality of ninth fields are in one-to-one correspondence with the plurality of TCI field values. Each ninth field indicates an index of a TCI state corresponding to a corresponding TCI field value.

The ninth field is similar to the fifth field in this embodiment. For details, refer to related descriptions of the fifth field in this embodiment, and the details are not described herein again.

For related descriptions of indicating, by the network device, the terminal device to perform transmission by using a single TRP, refer to related descriptions in the embodiment shown in FIG. 7. Details are not described herein again.

It can be learned from this that, for any TCI field value, the first MAC CE includes a first field, and the first field indicates a quantity of TCI state groups corresponding to the any TCI field value. In this way, the terminal device determines, based on the first MAC CE, the TCI state corresponding to each TCI field value in the plurality of TCI field values, so that the network device indicates the TCI state to the terminal device; and the TCI state corresponds to a corresponding beam, so that the network device indicates the beam to the terminal device. Moreover, according to the technical solution in this application, in an mTRP scenario, the network device may indicate, to the terminal device, TCI states corresponding to a plurality of TRPs, to implement transmission between the terminal device and the plurality of TRPs.

This application further provides Embodiment B. Embodiment B is similar to the embodiment shown in FIG. 10, and a difference lies in: In step 1001, for any TCI field value, the first indication information includes a first field, and the first field indicates a quantity of TCI state groups corresponding to the any TCI field value and a TRP to which a corresponding TCI state group belongs.

Optionally, the first indication information is a first MAC CE.

In other words, the first MAC CE includes a plurality of first fields, and the plurality of first fields are in one-to-one correspondence with the plurality of TCI field values. Each first field indicates a quantity of TCI state groups corresponding to a corresponding TCI field and a TRP to which a corresponding TCI state group belongs.

Each TCI state group corresponds to one TRP, and different TCI state groups correspond to different TRPs.

It should be noted that, optionally, the first field may be a bit other than a TCI state byte in the first MAC CE or a bit of a TCI state byte in the first MAC CE. This is not specifically limited in this application.

In a possible implementation, the first field indicates any one of the following:
the any TCI field value corresponds to one TCI state group of a first TRP;
the any TCI field value corresponds to one TCI state group of a second TRP;
the any TCI field value corresponds to a first TCI state group and a second TCI state group, the first TCI state group belongs to a first TRP, and the second TCI state group belongs to a second TRP; or
the any TCI field value corresponds to a first TCI state group and a second TCI state group, the first TCI state group belongs to a second TRP, and the second TCI state group belongs to a first TRP.

It can be learned from this that the first field indicates one of the foregoing eight cases. A length of the first field may be 2 bits. The 2 bits may be 2 consecutive bits, or may be 2 bits of different bytes in the first MAC CE.

In another possible implementation, the first field indicates either of the following:
the any TCI field value corresponds to one TCI state group of one TRP; or
the any TCI field value corresponds to one TCI state group corresponding to each of two TRPs.

In this implementation, the first field is for identifying whether the any TCI field value corresponds to a TCI state group of a single TRP or TCI state groups of a plurality of TRPs, and a TRP to which each TCI state group belongs does not need to be further identified.

In this implementation, the first field may be 1 bit.

Optionally, for the any TCI field value, the first MAC CE further includes a second field, and the second field indicates a quantity of TCI states included in each TCI state group corresponding to the any TCI field value. In other words, the first MAC CE further includes a plurality of second fields, and the plurality of second fields are in one-to-one correspondence with the plurality of TCI field values. Each second field indicates a quantity of TCI states included in each TCI state group corresponding to a corresponding TCI field value.

For the second field, refer to related descriptions of the third field in Embodiment A. Details are not described herein again.

Optionally, for the any TCI field value, the first MAC CE further includes a third field, and the third field indicates a type of a TCI state in each TCI state group corresponding to the any TCI field value. The type of the TCI state includes an uplink TCI state, a downlink TCI state, or a joint uplink/downlink TCI state. In other words, the first MAC CE further includes a plurality of third fields, and the plurality of third fields are in one-to-one correspondence with the plurality of TCI field values. Each third field indicates a type of a TCI state in each TCI state group corresponding to a corresponding TCI field value.

For the third field, refer to related descriptions of the fourth field in Embodiment A. Details are not described herein again.

Optionally, for the any TCI field value, the first MAC CE further includes a fourth field, the fourth field indicates an index (or an identifier) of a TCI state corresponding to the any TCI field value, and the index of the TCI state uniquely identifies the TCI state. In other words, the first MAC CE includes a plurality of fourth fields, and the plurality of fourth fields are in one-to-one correspondence with the plurality of TCI field values. Each fourth field indicates an index of a TCI state corresponding to a corresponding TCI field value.

For the fourth field, refer to related descriptions of the fifth field in Embodiment A. Details are not described herein again.

It can be learned from this that, for any TCI field value, the first MAC CE includes a first field, and the first field indicates a quantity of TCI state groups corresponding to the any TCI field value and a TRP to which a corresponding TCI state group belongs. In this way, the terminal device determines, based on the first MAC CE, the TCI state corresponding to each TCI field value in the plurality of TCI field values, so that the network device indicates the TCI state to the terminal device by using the TCI field value in the DCI; and the TCI state corresponds to a corresponding beam, so that the network device indicates the beam to the terminal device. Moreover, according to the technical solution in this application, in an mTRP scenario, the network device may indicate, to the terminal device, TCI states corresponding to a plurality of TRPs, to implement transmission between the terminal device and the plurality of TRPs.

This application further provides Embodiment C. Embodiment C is similar to the embodiment shown in FIG. 10, and a difference lies in: In step 1001, for any TCI field value, the first indication information includes a first field, and the first field indicates a quantity of TCI state groups corresponding to the any TCI field value and a quantity of TCI states included in each TCI state group.

Optionally, the first indication information is a first MAC CE.

In other words, the first MAC CE includes a plurality of first fields, and the plurality of first fields are in one-to-one correspondence with the plurality of TCI field values. Each first field indicates a quantity of corresponding TCI state groups and a quantity of TCI states included in each TCI state group. Each TCI state group corresponds to one TRP, and different TCI state groups correspond to different TRPs.

It should be noted that, optionally, the first field may be a bit other than a TCI state byte in the first MAC CE or a bit of a TCI state byte in the first MAC CE. This is not specifically limited in this application.

In a possible implementation, the first field indicates any one of the following:
the any TCI field value corresponds to one TCI state group, and the TCI state group includes one TCI state;
the any TCI field value corresponds to one TCI state group, and the TCI state group includes two TCI states;
the any TCI field value corresponds to two TCI state groups, the two TCI state groups include a first TCI state group and a second TCI state group, the first TCI state group includes one TCI state, and the second TCI state group includes one TCI state;
the any TCI field value corresponds to two TCI state groups, the two TCI state groups include a first TCI state group and a second TCI state group, the first TCI state group includes one TCI state, and the second TCI state group includes two TCI states;
the any TCI field value corresponds to two TCI state groups, the two TCI state groups include a first TCI state group and a second TCI state group, the first TCI state group includes two TCI states, and the second TCI state group includes one TCI state; or
the any TCI field value corresponds to two TCI state groups, the two TCI state groups include a first TCI state group and a second TCI state group, the first TCI state group includes two TCI states, and the second TCI state group includes two TCI states.

It can be learned from this that the first field indicates one of the foregoing five cases. A length of the first field may be 3 bits. The 3 bits may be 3 consecutive bits, or may be 3 bits of different bytes in the first MAC CE.

In another possible implementation, the first field indicates any one of the following:
the any TCI field value corresponds to one TCI state of one TRP;
the any TCI field value corresponds to two TCI states of one TRP; or
the any TCI field value corresponds to one TCI state of one TRP and two TCI states of the other TRP.

In this implementation, the first field is for identifying whether the any TCI field value corresponds to one or more TCI states of a single TRP or one or more TCI states corresponding to each of a plurality of TRPs, and a TRP to which each TCI state belongs does not need to be further identified.

In this implementation, the first field may be 2 bits.

Optionally, for the any TCI field value, the first MAC CE further includes a second field, and the second field indicates a TRP to which a TCI state group corresponding to the any TCI field value belongs. In other words, the first MAC CE further includes a plurality of second fields, and the plurality of second fields are in one-to-one correspondence with the plurality of TCI field values. Each second field indicates a TRP to which a TCI state group corresponding to a corresponding TCI field value belongs.

For the second field, refer to related descriptions of the second field in Embodiment A. Details are not described herein again.

Optionally, for the any TCI field value, the first MAC CE further includes a third field, and the third field indicates a type of a TCI state in each TCI state group corresponding to the any TCI field value. That is, when a specific TCI state group includes a single TCI state, the third field indicates a type of the TCI state. When a specific TCI state group includes two TCI states, the third field indicates types respectively corresponding to the two TCI states. In other words, the first MAC CE further includes a plurality of third fields, and the plurality of third fields are in one-to-one correspondence with the plurality of TCI field values. Each third field indicates a type of a TCI state in each TCI state group corresponding to a corresponding TCI field value.

For the third field, refer to related descriptions of the third field in Embodiment A. Details are not described herein again.

Optionally, for the any TCI field value, the first MAC CE further includes a fourth field, the fourth field indicates an index (or an identifier) of a TCI state corresponding to the any TCI field value, and the index of the TCI state uniquely identifies the TCI state. In other words, the first MAC CE further includes a plurality of fourth fields, and the plurality of fourth fields are in one-to-one correspondence with the plurality of TCI field values. Each fourth field indicates an index of a TCI state corresponding to a corresponding TCI field value.

For the fourth field, refer to related descriptions of the fifth field in Embodiment A. Details are not described herein again.

It can be learned from this that, for any TCI field value, the first MAC CE includes a first field, and the first field indicates a quantity of TCI state groups corresponding to the any TCI field value and a quantity of TCI states included in each TCI state group. In this way, the terminal device determines, based on the first MAC CE, the TCI state corresponding to each TCI field value in the plurality of TCI field values, so that the network device indicates the TCI state to the terminal device by using the TCI field value in the DCI; and the TCI state corresponds to a corresponding beam, so that the network device indicates the beam to the terminal device. Moreover, according to the technical solution in this application, in an mTRP scenario, the network device may indicate, to the terminal device, TCI states corresponding to a plurality of TRPs, to implement transmission between the terminal device and the plurality of TRPs.

This application further provides Embodiment D. Embodiment D is similar to the embodiment shown in FIG. 10, and a difference lies in: In step 1001, for any TCI field value, the first indication information includes a first field, and the first field indicates a quantity of TCI state groups corresponding to the any TCI field value and a type of a TCI state in each TCI state group.

Optionally, the first indication information is a first MAC CE.

In other words, the first MAC CE includes a plurality of first fields, and the plurality of first fields are in one-to-one correspondence with the plurality of TCI field values. Each first field indicates a quantity of TCI state groups corresponding to a corresponding TCI field value and a type of a TCI state in each TCI state group.

Each TCI state group corresponds to one TRP, and different TCI state groups correspond to different TRPs.

It should be noted that, optionally, the first field may be a bit other than a TCI state byte in the first MAC CE or a bit of a TCI state byte in the first MAC CE. This is not specifically limited in this application.

Optionally, the first field indicates any one of the following:
the any TCI field value corresponds to one TCI state group, and a first TCI state in the TCI state group is an uplink TCI state;
the any TCI field value corresponds to one TCI state group, and a first TCI state in the TCI state group is a downlink TCI state;
the any TCI field value corresponds to two TCI state groups, and a first TCI state in each of the two TCI state groups is an uplink TCI state;
the any TCI field value corresponds to two TCI state groups, and a first TCI state in each of the two TCI state groups is a downlink TCI state;
the any TCI field value corresponds to two TCI state groups, a first TCI state in a first TCI state group in the two TCI state groups is an uplink TCI state, and a first TCI state in a second TCI state group is a downlink TCI state; or
the any TCI field value corresponds to two TCI state groups, a first TCI state in a first TCI state group in the two TCI state groups is a downlink TCI state, and a first TCI state in a second TCI state group is an uplink TCI state.

It can be learned from this that the first field indicates one of the foregoing six cases. A length of the first field may be 3 bits. The 3 bits may be 3 consecutive bits, or may be 3 bits of different bytes in the first MAC CE.

Optionally, for the any TCI field value, the first MAC CE further includes a second field, and the second field indicates a TRP to which a TCI state group corresponding to the any TCI field value belongs. In other words, the first MAC CE further includes a plurality of second fields, and the plurality of second fields are in one-to-one correspondence with the plurality of TCI field values. Each second field indicates a TRP to which a TCI state group corresponding to a corresponding TCI field value belongs.

For the second field, refer to related descriptions of the second field in Embodiment A. Details are not described herein again.

Optionally, for the any TCI field value, the first MAC CE further includes a third field, and the third field indicates a quantity of TCI states included in each TCI state group corresponding to the any TCI field value. In other words, the third field indicates whether each TCI state group corresponding to the any TCI field value includes one TCI state or two TCI states. In other words, the first MAC CE further includes a plurality of third fields, and the plurality of third fields are in one-to-one correspondence with the plurality of TCI field values. Each third field indicates a quantity of TCI states included in each TCI state group corresponding to a corresponding TCI field value.

For the third field, refer to related descriptions of the third field in Embodiment A. Details are not described herein again.

Optionally, for the any TCI field value, the first MAC CE further includes a fourth field, the fourth field indicates an index (or an identifier) of a TCI state corresponding to the any TCI field value, and the index of the TCI state uniquely identifies the TCI state. In other words, the first MAC CE further includes a plurality of fourth fields, and the plurality of fourth fields are in one-to-one correspondence with the plurality of TCI field values. Each fourth field indicates an index of a TCI state corresponding to a corresponding TCI field value.

For the fourth field, refer to related descriptions of the fifth field in Embodiment A. Details are not described herein again.

It can be learned from this that, for any TCI field value, the first MAC CE includes a first field, and the first field indicates a quantity of TCI state groups corresponding to the any TCI field value and a type of a TCI state in each TCI state group. In this way, the terminal device determines, based on the first MAC CE, the TCI state corresponding to each TCI field value in the plurality of TCI field values, so that the network device indicates the TCI state to the terminal device by using the TCI field value in the DCI; and the TCI state corresponds to a corresponding beam, so that the network device indicates the beam to the terminal device. Moreover, according to the technical solution in this application, in an mTRP scenario, the network device may indicate, to the terminal device, TCI states corresponding to a plurality of TRPs, to implement transmission between the terminal device and the plurality of TRPs.

This application further provides Embodiment E. Embodiment E is similar to the embodiment shown in FIG. 7, and a difference lies in: In step 1001, for any TCI field value, the first indication information includes a first field, and the first field indicates a quantity of TCI state groups corresponding to the any TCI field value.

Optionally, the first indication information is a first MAC CE.

For the first field, refer to related descriptions of the first field in step 703 in the embodiment shown in FIG. 7.

Optionally, for the any TCI field value, the first MAC CE further includes a second field, and the second field indicates a TRP to which each TCI state group corresponding to the any TCI field value belongs and a type of a TCI state in each TCI state group.

In other words, the first MAC CE includes a plurality of second fields, and the plurality of second fields are in one-to-one correspondence with the plurality of TCI field values. Each second field indicates a TRP to which each TCI state group corresponding to a corresponding TCI field value belongs and a type of a TCI state in each TCI state group.

Each TCI state group corresponds to one TRP, and different TCI state groups correspond to different TRPs.

It should be noted that, optionally, the second field may be a bit other than a TCI state byte in the first MAC CE or a bit of a TCI state byte in the first MAC CE. This is not specifically limited in this application.

In a possible implementation, if the first field indicates that the any TCI field value corresponds to one TCI state group, the second field indicates any one of the following:
the any TCI field value corresponds to one TCI state group of a first TRP, and a first TCI state in the TCI state group is an uplink TCI state; and if the TCI state group includes a second TCI state, the second TCI state is a downlink TCI state;
the any TCI field value corresponds to one TCI state group of a first TRP, and a first TCI state in the TCI state group is a downlink TCI state; and if the TCI state group includes a second TCI state, the second TCI state is a downlink TCI state;
the any TCI field value corresponds to one TCI state group of a second TRP, and a first TCI state in the TCI state group is a downlink TCI state; and if the TCI state group includes a second TCI state, the second TCI state is an uplink TCI state; or
the any TCI field value corresponds to one TCI state group of a second TRP, and a first TCI state in the TCI state group is an uplink TCI state; and if the TCI state group includes a second TCI state, the second TCI state is a downlink TCI state.

It can be learned from this that when the first field indicates that the any TCI field value corresponds to one TCI state group, the second field indicates one of the foregoing four cases. A length of the second field may be 2 bits.

In another possible implementation, if the first field indicates that the any TCI field value corresponds to one TCI state group, the second field indicates either of the following:
the any TCI field value corresponds to one TCI state group, and a first TCI state in the TCI state group is an uplink TCI state; and if the TCI state group includes a second TCI state, the second TCI state is a downlink TCI state; or
the any TCI field value corresponds to one TCI state group, and a first TCI state in the TCI state group is a downlink TCI state; and if the TCI state group includes a second TCI state, the second TCI state is an uplink TCI state.

In this implementation, the first field indicates one TCI state group corresponding to the any TCI field value and a type of each TCI state in the TCI state group, and a TRP to which the TCI state group belongs does not need to be further identified.

In this implementation, a length of the first field may be 1 bit.

In a possible implementation, if the first field indicates that the any TCI field value corresponds to two TCI state groups, the second field indicates any one of the following:
the any TCI field value corresponds to one TCI state group of a first TRP and one TCI state group of a second TRP, and a first TCI state in each of the two TCI state groups is an uplink TCI state; and if each TCI state group includes a second TCI state, the second TCI state is a downlink TCI state;
the any TCI field value corresponds to one TCI state group of a first TRP and one TCI state group of a second TRP, and a first TCI state in each of the two TCI state groups is a downlink TCI state; and if each TCI state group includes a second TCI state, the second TCI state is an uplink TCI state;
the any TCI field value corresponds to one TCI state group of a first TRP and one TCI state group of a second TRP, and first TCI states in the two TCI state groups are respectively an uplink TCI state and a downlink TCI state; and if second TCI states exist, the second TCI states are respectively a downlink TCI state and an uplink TCI state; or
the any TCI field value corresponds to one TCI state group of a first TRP and one TCI state group of a second TRP, and first TCI states in the two TCI state groups are respectively a downlink TCI state and an uplink TCI state; and if second TCI states exist, the second TCI states are respectively an uplink TCI state and a downlink TCI state.

It can be learned from this that when the first field indicates that the any TCI field value corresponds to two TCI state groups, the second field indicates one of the foregoing four cases. A length of the second field may be 2 bits. The 2 bits may be 2 consecutive bits, or may be 2 bits of different bytes. This is not specifically limited in this application.

In another possible implementation, if the first field indicates that the any TCI field value corresponds to two TCI state groups, optionally, the second field indicates either of the following:
the any TCI field value corresponds to two TCI state groups, and a first TCI state in each of the two TCI state groups is an uplink TCI state; and if each TCI state group includes a second TCI state, the second TCI state is a downlink TCI state; or
the any TCI field value corresponds to two TCI state groups, and a first TCI state in each of the two TCI state groups is a downlink TCI state; and if each TCI state group includes a second TCI state, the second TCI state is an uplink TCI state.

In this implementation, the first field indicates two TCI state groups corresponding to the any TCI field value and a type of each TCI state in the two TCI state groups, and a TRP to which the TCI state group belongs does not need to be further identified.

It should be noted that, optionally, it may be specified that the TCI state group corresponding to the first TRP always ranks before the TCI state group corresponding to the second TRP. Alternatively, it is specified that the TCI state group corresponding to the second TRP always ranks before the TCI state group corresponding to the first TRP. Therefore, an additional field in the first MAC CE is not needed to indicate the TRP to which the TCI state group belongs.

Optionally, for the any TCI field value, the first MAC CE further includes a third field, and the third field indicates a quantity of TCI states included in each TCI state group corresponding to the any TCI field value. In other words, the third field indicates whether each TCI state group corresponding to the any TCI field value includes one TCI state or two TCI states.

In other words, the first MAC CE further includes a plurality of third fields, and the plurality of third fields are in one-to-one correspondence with the plurality of TCI field values. Each third field indicates a quantity of TCI states included in each TCI state group corresponding to a corresponding TCI field value.

For the third field, refer to related descriptions of the third field in Embodiment A. Details are not described herein again.

Optionally, for the any TCI field value, the first MAC CE further includes a fourth field, the fourth field indicates an index (or an identifier) of a TCI state corresponding to the any TCI field value, and the index of the TCI state uniquely identifies the TCI state. In other words, the first MAC CE further includes a plurality of fourth fields, and the plurality of fourth fields are in one-to-one correspondence with the plurality of TCI field values. Each fourth field indicates an index of a TCI state corresponding to a corresponding TCI field value.

For the fourth field, refer to related descriptions of the fifth field in Embodiment A. Details are not described herein again.

It can be learned from this that, for any TCI field value, the first MAC CE includes a first field, and the first field indicates a quantity of TCI state groups corresponding to the any TCI field value. In this way, the terminal device determines, based on the first MAC CE, the TCI state corresponding to each TCI field value in the plurality of TCI field values, so that the network device indicates the TCI state to the terminal device by using the TCI field value in the DCI; and the TCI state corresponds to a corresponding beam, so that the network device indicates the beam to the terminal device. Moreover, according to the technical solution in this application, in an mTRP scenario, the network device may indicate, to the terminal device, TCI states corresponding to a plurality of TRPs, to implement transmission between the terminal device and the plurality of TRPs.

This application further provides Embodiment F. Embodiment F is similar to the embodiment shown in FIG. 7, and a difference lies in: In step 1001, for any TCI field value, the first indication information includes a first field, and the first field indicates a quantity of TCI state groups corresponding to the any TCI field value.

Optionally, the first indication information is a first MAC CE.

Each TCI state group corresponds to one TRP, and different TCI state groups correspond to different TRPs.

For the first field, refer to related descriptions of the first field in step 703 in the embodiment shown in FIG. 7.

Optionally, for the any TCI field value, the first MAC CE further includes a second field, and the second field indicates a TRP to which a TCI state group corresponding to the any TCI field value belongs. In other words, the first MAC CE further includes a plurality of second fields, and the plurality of second fields are in one-to-one correspondence with the plurality of TCI field values. Each second field indicates a TRP to which a TCI state group corresponding to a corresponding TCI field value belongs.

For the second field, refer to related descriptions of the second field in Embodiment A. For details, refer to the related descriptions of the second field in Embodiment A.

Optionally, for any TCI field value, the first MAC CE further includes a third field, and the third field indicates a quantity of TCI states included in each TCI state group corresponding to the any TCI field value and a type of a TCI state in each TCI state group. In other words, the first MAC CE includes a plurality of third fields, the plurality of third fields correspond to the plurality of TCI field values, and each third field indicates a quantity of TCI states included in each TCI state group corresponding to a corresponding TCI field value and a type of a TCI state in each TCI state group. When one TCI field value corresponds to one TCI state group, the TCI field value corresponds to one third field, and the third field indicates information about a TCI state included in the TCI state group corresponding to the TCI field value. When one TCI field value corresponds to two TCI state groups, the TCI field value corresponds to two third fields, and each third field corresponds to one TCI state group and indicates information about a TCI state included in the TCI state group.

In a possible implementation, for each TCI state group corresponding to the any TCI field value, the third field indicates any one of the following:
the TCI state group includes one uplink TCI state;
the TCI state group includes one downlink TCI state;
the TCI state group includes two TCI states; and in the two TCI states, a first TCI state is an uplink TCI state, and a second TCI state is a downlink TCI state; or
the TCI state group includes two TCI states; and in the two TCI states, a first TCI state is a downlink TCI state, and a second TCI state is an uplink TCI state.

In another possible implementation, for each TCI state group corresponding to the any TCI field value, the third field indicates any one of the following:
the TCI state group includes one uplink TCI state;
the TCI state group includes one downlink TCI state; or
the TCI state group includes two TCI states, and the two TCI states include one uplink TCI state and one downlink TCI state.

Optionally, it may be specified that when one TCI state group includes two TCI states, a first TCI state is an uplink TCI state, and a second TCI state is a downlink TCI state; or it may be specified that when one TCI state group includes two TCI states, a first TCI state is a downlink TCI state, and a second TCI state is an uplink TCI state. In this case, the first MAC CE does not need to include the third field.

Optionally, for the any TCI field value, the first MAC CE further includes a fourth field, the fourth field indicates an index (or an identifier) of a TCI state corresponding to the any TCI field value, and the index of the TCI state uniquely identifies the TCI state. In other words, the first MAC CE further includes a plurality of fourth fields, and the plurality of fourth fields are in one-to-one correspondence with the plurality of TCI field values. Each fourth field indicates an index of a TCI state corresponding to a corresponding TCI field value.

For the fourth field, refer to related descriptions of the fifth field in Embodiment A. Details are not described herein again.

It can be learned from this that, for any TCI field value, the first MAC CE includes a first field, and the first field indicates a quantity of TCI state groups corresponding to the any TCI field value. In this way, the terminal device determines, based on the first MAC CE, the TCI state corresponding to each TCI field value in the plurality of TCI field values, so that the network device indicates the TCI state to the terminal device by using the TCI field value in the DCI; and the TCI state corresponds to a corresponding beam, so that the network device indicates the beam to the terminal device. Moreover, according to the technical solution in this application, in an mTRP scenario, the network device may indicate, to the terminal device, TCI states corresponding to a plurality of TRPs, to implement transmission between the terminal device and the plurality of TRPs.

This application further provides Embodiment H. Embodiment H is similar to the embodiment shown in FIG. 10, and a difference lies in: In step 1001, for any TCI field value, the first indication information includes a first field, and the first field indicates a quantity of TCI state groups corresponding to the any TCI field value, a TRP to which each TCI state group belongs, and a type of a TCI state in each TCI state group.

Optionally, the first indication information is a first MAC CE.

In other words, the first MAC CE includes a plurality of first fields, and the plurality of first fields are in one-to-one correspondence with the plurality of TCI field values. Each first field indicates a quantity of TCI state groups corresponding to a corresponding TCI field value, a TRP to which each TCI state group belongs, and a type of a TCI state in each TCI state group.

Each TCI state group corresponds to one TRP, and different TCI state groups correspond to different TRPs.

In a possible implementation, the first field indicates any one of the following:
the any TCI field value corresponds to one TCI state group of a first TRP, and a first TCI state in the TCI state group is an uplink TCI state; and if the TCI state group includes a second TCI state, the second TCI state is a downlink TCI state;
the any TCI field value corresponds to one TCI state group of a second TRP, and a first TCI state in the TCI state group is an uplink TCI state; and if the TCI state group includes a second TCI state, the second TCI state is a downlink TCI state;
the any TCI field value corresponds to one TCI state group of a first TRP, and a first TCI state in the TCI state group is a downlink TCI state; and if the TCI state group includes a second TCI state, the second TCI state is an uplink TCI state;
the any TCI field value corresponds to one TCI state group of a second TRP, and a first TCI state in the TCI state group is a downlink TCI state; and if the TCI state group includes a second TCI state, the second TCI state is an uplink TCI state;
the any TCI field value corresponds to one TCI state group of a first TRP and one TCI state group of a second TRP, a first TCI state in the TCI state group of the first TRP is an uplink TCI state, and a first TCI state in the TCI state group of the second TRP is an uplink TCI state; and if a TCI state of the first TRP and/or a TCI state of the second TRP include/includes a second TCI state, the second TCI state is a downlink TCI state;
the any TCI field value corresponds to one TCI state group of a first TRP and one TCI state group of a second TRP, a first TCI state in the TCI state group of the first TRP is a downlink TCI state, and a first TCI state in the TCI state group of the second TRP is a downlink TCI state; and if a TCI state of the first TRP and/or a TCI state of the second TRP include/includes a second TCI state, the second TCI state is an uplink TCI state;
the any TCI field value corresponds to one TCI state group of a first TRP and one TCI state group of a second TRP, a first TCI state in the TCI state group of the first TRP is an uplink TCI state, and a first TCI state in the TCI state group of the second TRP is a downlink state; if the TCI state group of the first TRP includes a second TCI state, the second TCI state is a downlink TCI state; and if the TCI state group of the second TRP includes a second TCI state, the second TCI state is an uplink TCI state; or
the any TCI field value corresponds to one TCI state group of a first TRP and one TCI state group of a second TRP, a first TCI state in the TCI state group of the first TRP is a downlink TCI state, and a first TCI state in the TCI state group of the second TRP is an uplink TCI state; if the TCI state group of the first TRP includes a second TCI state, the second TCI state is an uplink TCI state; and if the TCI state group of the second TRP includes a second TCI state, the second TCI state is a downlink TCI state.

In another possible implementation, the first field indicates any one of the following:
the any TCI field value corresponds to one TCI state group, and a first TCI state in the TCI state group is an uplink TCI state; and if the TCI state group includes a second TCI state, the second TCI state is a downlink TCI state;
the any TCI field value corresponds to one TCI state group, and a first TCI state in the TCI state group is a downlink TCI state; and if the TCI state group includes a second TCI state, the second TCI state is an uplink TCI state;
the any TCI field corresponds to one TCI state group of a first TRP and one TCI state group of a second TRP, a first TCI state in the TCI state group of the first TRP is an uplink TCI state, and a first TCI state in the TCI state group of the second TRP is an uplink TCI state; and if a TCI state of the first TRP and/or a TCI state of the second TRP include/includes a second TCI state, the second TCI state is a downlink TCI state;
the any TCI field corresponds to one TCI state group of a first TRP and one TCI state group of a second TRP, a first TCI state in the TCI state group of the first TRP is a downlink TCI state, and a first TCI state in the TCI state group of the second TRP is a downlink TCI state; and if a TCI state of the first TRP and/or a TCI state of the second TRP include/includes a second TCI state, the second TCI state is an uplink TCI state;
the any TCI field corresponds to one TCI state group of a first TRP and one TCI state group of a second TRP, a first TCI state in the TCI state group of the first TRP is an uplink TCI state, and a first TCI state in the TCI state group of the second TRP is a downlink state; if the TCI state group of the first TRP includes a second TCI state, the second TCI state is a downlink TCI state; and if the TCI state group of the second TRP includes a second TCI state, the second TCI state is an uplink TCI state; or
the any TCI field corresponds to one TCI state group of a first TRP and one TCI state group of a second TRP, a first TCI state in the TCI state group of the first TRP is a downlink TCI state, and a first TCI state in the TCI state group of the second TRP is an uplink TCI state; if the TCI state group of the first TRP includes a second TCI state, the second TCI state is an uplink TCI state; and if the TCI state group of the second TRP includes a second TCI state, the second TCI state is a downlink TCI state.

In this implementation, when the any TCI field value corresponds to one TCI state group, only a type of each TCI state in the TCI state group corresponding to the any TCI field value needs to be identified, and a TRP to which the TCI state group belongs does not need to be further identified.

Optionally, for the any TCI field value, the first MAC CE further includes a second field, and the second field indicates a quantity of TCI states included in each TCI state group corresponding to the any TCI field value. In other words, the second field indicates whether each TCI state group corresponding to the any TCI field value includes one TCI state or two TCI states.

In other words, the first MAC CE further includes a plurality of second fields, and the plurality of second fields are in one-to-one correspondence with the plurality of TCI field values. Each second field indicates a quantity of TCI states included in each TCI state group corresponding to a corresponding TCI field value.

For the second field, refer to related descriptions of the third field in Embodiment A. Details are not described herein again.

Optionally, for the any TCI field value, the first MAC CE further includes a third field, the third field indicates an index (or an identifier) of a TCI state corresponding to the any TCI field value, and the index of the TCI state uniquely identifies the TCI state. In other words, the first MAC CE includes a plurality of third fields, and the plurality of third fields are in one-to-one correspondence with the plurality of TCI field values. Each third field indicates an index of a TCI state corresponding to a corresponding TCI field value.

For the third field, refer to related descriptions of the fifth field in Embodiment A. Details are not described herein again.

It can be learned from this that, for any TCI field value, the first MAC CE includes a first field, and the first field indicates a quantity of TCI state groups corresponding to the any TCI field value, a TRP to which each TCI state group belongs, and a type of a TCI state in each TCI state group. In this way, the terminal device determines, based on the first MAC CE, the TCI state corresponding to each TCI field value in the plurality of TCI field values, so that the network device indicates the TCI state to the terminal device by using the TCI field value in the DCI; and the TCI state corresponds to a corresponding beam, so that the network device indicates the beam to the terminal device. Moreover, according to the technical solution in this application, in an mTRP scenario, the network device may indicate, to the terminal device, TCI states corresponding to a plurality of TRPs, to implement transmission between the terminal device and the plurality of TRPs.

This application further provides Embodiment I. Embodiment I is similar to the embodiment shown in FIG. 10, and a difference lies in: In step 1001, for any TCI field value, the first indication information includes a first field, and the first field indicates a quantity and types of TCI state groups corresponding to the any TCI field value.

Optionally, the first indication information is a first MAC CE.

In other words, the first MAC CE includes a plurality of first fields, and the plurality of first fields are in one-to-one correspondence with the plurality of TCI field values. Each first field indicates a quantity and types of TCI state groups corresponding to a corresponding TCI field value.

TCI states in each TCI state group belong to a same type of TCI states, and TCI states in different TCI state groups belong to different types of TCI states.

It should be noted that, optionally, the first field may be a bit other than a TCI state byte in the first MAC CE or a bit of a TCI state byte in the first MAC CE. This is not specifically limited in this application.

In a possible implementation, the first field indicates any one of the following:
the any TCI field value corresponds to one TCI state group, and a TCI state in the TCI state group is an uplink TCI state;
the any TCI field value corresponds to one TCI state group, and a TCI state in the TCI state group is a downlink TCI state;
the any TCI field value corresponds to two TCI state groups, a TCI state in a first TCI state group in the two TCI state groups is an uplink TCI state, and a TCI state in a second TCI state group is a downlink TCI state; or
the any TCI field value corresponds to two TCI state groups, a TCI state in a first TCI state group in the two TCI state groups is a downlink TCI state, and a TCI state in a second TCI state group is an uplink TCI state.

It can be learned from this that the first field indicates one of the foregoing four cases. A length of the first field may be 2 bits. The 2 bits may be 2 consecutive bits, or may be 2 bits of different bytes in the first MAC CE.

In another possible implementation, the first field indicates any one of the following:
the any TCI field value corresponds to one TCI state group, and a TCI state in the TCI state group is an uplink TCI state;
the any TCI field value corresponds to one TCI state group, and a TCI state in the TCI state group is a downlink TCI state; or
the any TCI field value corresponds to two TCI state groups, and the two TCI state groups include an uplink TCI state group and a downlink TCI state group.

In this implementation, the first field is for identifying whether the any TCI field value corresponds to one TCI state group or two TCI state groups. When the any TCI field value corresponds to two TCI state groups, a type of a specific TCI state group in the two TCI state groups does not need to be further identified.

Optionally, for the any TCI field value, the first MAC CE further includes a second field, and the second field indicates a quantity of TCI states included in each TCI state group corresponding to the any TCI field value. In other words, the first MAC CE further includes a plurality of second fields, and the plurality of second fields are in one-to-one correspondence with the plurality of TCI field values. Each second field indicates a quantity of TCI states included in each TCI state group corresponding to a corresponding TCI field value.

For the second field, refer to related descriptions of the seventh field in Embodiment A. Details are not described herein again.

Optionally, for the any TCI field value, the first MAC CE further includes a third field, and the third field indicates a TRP to which a TCI state in each TCI state group corresponding to the any TCI field value belongs.

In other words, the first MAC CE includes a plurality of third fields, and the plurality of third fields are in one-to-one correspondence with the plurality of TCI field values. Each third field indicates a TRP to which a TCI state in each TCI state group corresponding to a corresponding TCI field value belongs.

For the third field, refer to related descriptions of the eighth field in Embodiment A. Details are not described herein again.

Optionally, for the any TCI field value, the first MAC CE further includes a fourth field, the fourth field indicates an index (or an identifier) of a TCI state corresponding to the any TCI field value, and the index of the TCI state uniquely identifies the TCI state. In other words, the first MAC CE includes a plurality of fourth fields, and the plurality of fourth fields are in one-to-one correspondence with the plurality of TCI field values. Each fourth field indicates an index of a TCI state corresponding to a corresponding TCI field value.

For the fourth field, refer to related descriptions of the ninth field in Embodiment A. Details are not described herein again.

It can be learned from this that, for any TCI field value, the first MAC CE includes a first field, and the first field indicates a quantity and types of TCI state groups corresponding to the any TCI field value. In this way, the terminal device determines, based on the first MAC CE, the TCI state corresponding to each TCI field value in the plurality of TCI field values, so that the network device indicates the TCI state to the terminal device by using the TCI field value in the DCI; and the TCI state corresponds to a corresponding beam, so that the network device indicates the beam to the terminal device. Moreover, according to the technical solution in this application, in an mTRP scenario, the network device may indicate, to the terminal device, TCI states corresponding to a plurality of TRPs, to implement transmission between the terminal device and the plurality of TRPs.

This application further provides Embodiment J. Embodiment J is similar to the embodiment shown in FIG. 10, and a difference lies in: In step 1001, for any TCI field value, the first indication information includes a first field, and the first field indicates a quantity of TCI state groups corresponding to the any TCI field value and a quantity of TCI states included in each TCI state group.

Optionally, the first indication information is a first MAC CE.

In other words, the first MAC CE includes a plurality of first fields, and the plurality of first fields are in one-to-one correspondence with the plurality of TCI field values. Each first field indicates a quantity of TCI state groups corresponding to a corresponding TCI field value and a quantity of TCI states included in each TCI state group.

TCI states in each TCI state group belong to a same type of TCI states, and TCI states in different TCI state groups belong to different types of TCI states.

It should be noted that, optionally, the first field may be a bit other than a TCI state byte in the first MAC CE or a bit of a TCI state byte in the first MAC CE. This is not specifically limited in this application.

In a possible implementation, the first field indicates any one of the following:
the any TCI field value corresponds to a TCI state group of one type, and the TCI state group includes one TCI state;
the any TCI field value corresponds to a TCI state group of one type, and the TCI state group includes two TCI states;
the any TCI field value corresponds to TCI state groups of two types, a TCI state group of a first type includes one TCI state, and a TCI state group of a second type includes one TCI state;
the any TCI field value corresponds to TCI state groups of two types, a TCI state group of a first type includes one TCI state, and a TCI state group of a second type includes two TCI states;
the any TCI field value corresponds to TCI state groups of two types, a TCI state group of a first type includes two TCI states, and a TCI state group of a second type includes one TCI state; or
the any TCI field value corresponds to TCI state groups of two types, a TCI state group of a first type includes two TCI states, and a TCI state group of a second type includes two TCI states.

It can be learned from this that the first field indicates one of the foregoing four cases. A length of the first field may be 2 bits, and the 2 bits may be 2 consecutive bits or 2 bits of different bytes.

In another possible implementation, the first field indicates any one of the following:
the any TCI field value corresponds to a TCI state group of one type, and the TCI state group includes one TCI state;
the any TCI field value corresponds to a TCI state group of one type, and the TCI state group includes two TCI states; or
the any TCI field value corresponds to TCI state groups of two types, a TCI state group of one of the two types includes one TCI state, and a TCI state group of the other type includes two TCI states.

It can be learned from this that, when the any TCI field value corresponds to TCI state groups of two types, a quantity of TCI states included in a TCI state group of each type does not need to be further identified.

Optionally, for the any TCI field value, the first MAC CE further includes a second field, and the second field indicates a type of each TCI state group corresponding to the any TCI field value. In other words, the first MAC CE further includes a plurality of second fields, and the plurality of second fields are in one-to-one correspondence with the plurality of TCI field values. Each second field indicates a type of a TCI state group corresponding to a corresponding TCI field value.

For the second field, refer to related descriptions of the sixth field in Embodiment A. Details are not described herein again.

Optionally, for the any TCI field value, the first MAC CE further includes a third field, and the third field indicates a TRP to which a TCI state in each TCI state group corresponding to the any TCI field value belongs. In other words, the first MAC CE further includes a plurality of third fields, and the plurality of third fields are in one-to-one correspondence with the plurality of TCI field values. Each third field indicates a TRP to which a TCI state in each TCI state group corresponding to a corresponding TCI field value belongs.

For the third field, refer to related descriptions of the eighth field in Embodiment A. Details are not described herein again.

Optionally, for the any TCI field value, the first MAC CE further includes a fourth field, the fourth field indicates an index (or an identifier) of a TCI state corresponding to the any TCI field value, and the index of the TCI state uniquely identifies the TCI state. In other words, the first MAC CE includes a plurality of fourth fields, and the plurality of fourth fields are in one-to-one correspondence with the plurality of TCI field values. Each fourth field indicates an index of a TCI state corresponding to a corresponding TCI field value.

For the fourth field, refer to related descriptions of the ninth field in Embodiment A. Details are not described herein again.

It can be learned from this that, for any TCI field value, the first MAC CE includes a first field, and the first field indicates a quantity of TCI state groups corresponding to the any TCI field value and a quantity of TCI states included in each TCI state group. In this way, the terminal device determines, based on the first MAC CE, the TCI state corresponding to each TCI field value in the plurality of TCI field values, so that the network device indicates the TCI state to the terminal device by using the TCI field value in the DCI; and the TCI state corresponds to a corresponding beam, so that the network device indicates the beam to the terminal device. Moreover, according to the technical solution in this application, in an mTRP scenario, the network device may indicate, to the terminal device, TCI states corresponding to a plurality of TRPs, to implement transmission between the terminal device and the plurality of TRPs.

This application further provides Embodiment K. Embodiment K is similar to the embodiment shown in FIG. 10, and a difference lies in: In step 1001, for any TCI field value, the first indication information includes a first field, and the first field indicates a quantity of TCI state groups corresponding to the any TCI field value and a TRP to which a TCI state in each corresponding TCI state group belongs.

Optionally, the first indication information is a first MAC CE.

In other words, the first MAC CE includes a plurality of first fields, and the plurality of first fields are in one-to-one correspondence with the plurality of TCI field values. Each first field indicates a quantity of TCI state groups corresponding to a corresponding TCI field value and a TRP to which a TCI state in each corresponding TCI state group belongs.

TCI states in each TCI state group belong to a same type of TCI states, and TCI states in different TCI state groups belong to different types of TCI states.

It should be noted that, optionally, the first field may be a bit other than a TCI state byte in the first MAC CE or a bit of a TCI state byte in the first MAC CE. This is not specifically limited in this application.

Optionally, the first field indicates any one of the following:
the any TCI field value corresponds to one TCI state group, and a first TCI state in the TCI state group belongs to a first TRP;
the any TCI field value corresponds to one TCI state group, and a first TCI state in the TCI state group belongs to a second TRP;
the any TCI field value corresponds to two TCI state groups, and first TCI states in the two TCI state groups both belong to a first TRP;
the any TCI field value corresponds to two TCI state groups, and first TCI states in the two TCI state groups both belong to a second TRP;
the any TCI field value corresponds to two TCI state groups, a first TCI state in a first TCI state group in the two TCI state groups belongs to a first TRP, and a first TCI state in a second TCI state group belongs to a second TRP; or
the any TCI field value corresponds to two TCI state groups, a second TCI state in a first TCI state group in the two TCI state groups belongs to a second TRP, and a first TCI state in a second TCI state group belongs to a first TRP.

It can be learned from this that the first field indicates one of the foregoing six cases. A length of the first field may be 3 bits, and the 3 bits may be 3 consecutive bits or 3 bits of different bytes.

Optionally, for the any TCI field value, the first MAC CE further includes a second field, and the second field indicates a type of each TCI state group corresponding to the any TCI field value. In other words, the first MAC CE further includes a plurality of second fields, and the plurality of second fields are in one-to-one correspondence with the plurality of TCI field values. Each second field indicates a type of each TCI state group corresponding to a corresponding TCI field value.

For the second field, refer to related descriptions of the sixth field in Embodiment A. Details are not described herein again.

Optionally, for the any TCI field value, the first MAC CE further includes a third field, and the third field indicates a quantity of TCI states included in each TCI state group corresponding to the any TCI field value. In other words, the first MAC CE further includes a plurality of third fields, and the plurality of third fields are in one-to-one correspondence with the plurality of TCI field values. Each third field indicates a quantity of TCI states included in each TCI state group corresponding to a corresponding TCI field value.

For the second field, refer to related descriptions of the seventh field in Embodiment A. Details are not described herein again.

Optionally, for the any TCI field value, the first MAC CE further includes a fourth field, the fourth field indicates an index (or an identifier) of a TCI state corresponding to the any TCI field value, and the index of the TCI state uniquely identifies the TCI state. In other words, the first MAC CE includes a plurality of fourth fields, and the plurality of fourth fields are in one-to-one correspondence with the plurality of TCI field values. Each fourth field indicates an index of a TCI state corresponding to a corresponding TCI field value.

For the fourth field, refer to related descriptions of the ninth field in Embodiment A. Details are not described herein again.

It can be learned from this that, for any TCI field value, the first MAC CE includes a first field, and the first field indicates a quantity of TCI state groups corresponding to the any TCI field value and a TRP to which a TCI state in each corresponding TCI state group belongs. In this way, the terminal device determines, based on the first MAC CE, the TCI state corresponding to each TCI field value in the plurality of TCI field values, so that the network device indicates the TCI state to the terminal device by using the TCI field value in the DCI; and the TCI state corresponds to a corresponding beam, so that the network device indicates the beam to the terminal device. Moreover, according to the technical solution in this application, in an mTRP scenario, the network device may indicate, to the terminal device, TCI states corresponding to a plurality of TRPs, to implement transmission between the terminal device and the plurality of TRPs.

This application further provides Embodiment L. Embodiment L is similar to the embodiment shown in FIG. 10, and a difference lies in: In step 1001, for any TCI field value, the first indication information includes a first field, and the first field indicates a quantity of TCI state groups corresponding to the any TCI field value.

Optionally, the first indication information is a first MAC CE.

In other words, the first MAC CE includes a plurality of first fields, and the plurality of first fields are in one-to-one correspondence with the plurality of TCI field values. Each first field indicates a quantity of TCI state groups corresponding to a corresponding TCI field value.

TCI states in each TCI state group belong to a same type of TCI states, and TCI states in different TCI state groups belong to different types of TCI states.

For the first field, refer to related descriptions of the first field in Embodiment A. Details are not described herein again.

Optionally, for the any TCI field value, the first MAC CE further includes a second field. The second field indicates a type of each TCI state group corresponding to the any TCI field value and a TRP to which a TCI state in each TCI state group belongs.

In other words, the first MAC CE includes a plurality of second fields, and the plurality of second fields are in one-to-one correspondence with the plurality of TCI field values. Each second field indicates a type of each TCI state group corresponding to a corresponding TCI field value and a TRP to which a TCI state in each TCI state group belongs.

It should be noted that, optionally, the second field may be a bit other than a TCI state byte in the first MAC CE or a bit of a TCI state byte in the first MAC CE. This is not specifically limited in this application.

In a possible implementation, if the first field indicates that the any TCI field value corresponds to one TCI state group, the second field indicates any one of the following:
the any TCI field value corresponds to one uplink TCI state group, and a first TCI state in the uplink TCI state group belongs to a first TRP; and if the uplink TCI state group includes a second TCI state, the second TCI state belongs to a second TRP;
the any TCI field value corresponds to one downlink TCI state group, and a first TCI state in the downlink TCI state group belongs to a first TRP; and if the downlink TCI state group includes a second TCI state, the second TCI state belongs to a second TRP;
the any TCI field value corresponds to one uplink TCI state group, and a first TCI state in the uplink TCI state group belongs to a second TRP; and if the uplink TCI state group includes a second TCI state, the second TCI state belongs to a first TRP; or
the any TCI field value corresponds to one downlink TCI state group, and a first TCI state in the downlink TCI state group belongs to a second TRP; and if the downlink TCI state group includes a second TCI state, the second TCI state belongs to a first TRP.

It can be learned from this that when the first field indicates that the any TCI field value corresponds to one TCI state group, the second field indicates one of the foregoing four cases. A length of the second field may be 2 bits, and the 2 bits may be 2 consecutive bits or 2 bits of different bytes in the first MAC CE. This is not specifically limited in this application.

In another possible implementation, if the first field indicates that the any TCI field value corresponds to one TCI state group, the second field indicates either of the following:
the any TCI field value corresponds to one TCI state group, and a first TCI state in the TCI state group belongs to a first TRP; and if the TCI state group includes a second TCI state, the second TCI state belongs to a second TRP; or
the any TCI field value corresponds to one TCI state group, and a first TCI state in the TCI state group belongs to a second TRP; and if the TCI state group includes a second TCI state, the second TCI state belongs to a first TRP.

In this implementation, the first field indicates one TCI state group corresponding to the any TCI field value and a TRP to which each TCI state in the TCI state group belongs, and a type of the TCI state group does not need to be further identified.

In this implementation, a length of the second field may be 1 bit.

In a possible implementation, if the first field indicates that the any TCI field value corresponds to two TCI state groups, the second field indicates any one of the following:
the any TCI field value corresponds to one uplink TCI state group and one downlink TCI state group, and corresponding first TCI states in the uplink TCI state group and the downlink TCI state group belong to a first TRP; and if the uplink TCI state group and/or the downlink TCI state group include/includes a corresponding second TCI state, the second TCI state belongs to a second TRP;
the any TCI field value corresponds to one uplink TCI state group and one downlink TCI state group, and corresponding first TCI states in the uplink TCI state group and the downlink TCI state group belong to a second TRP; and if the uplink TCI state group and/or the downlink TCI state group include/includes a corresponding second TCI state, the second TCI state belongs to the second TRP;
the any TCI field value corresponds to one uplink TCI state group and one downlink TCI state group, a first TCI state in the uplink TCI state group belongs to a first TRP, and a second TCI state belongs to a second TRP; if the uplink TCI state group includes a corresponding second TCI state, the second TCI state belongs to the second TRP; and if the downlink TCI state group includes a corresponding second TCI state, the second TCI state belongs to the first TRP; or
the any TCI field value corresponds to one uplink TCI state group and one downlink TCI state group, a first TCI state in the uplink TCI state group belongs to a second TRP, and a second TCI state belongs to a first TRP; if the uplink TCI state group includes a corresponding second TCI state, the second TCI state belongs to the first TRP; and if the downlink TCI state group includes a corresponding second TCI state, the second TCI state belongs to the second TRP.

It can be learned from this that when the first field indicates that the any TCI field value corresponds to two TCI state groups, the second field indicates one of the foregoing four cases. A length of the second field may be 2 bits, and the 2 bits may be 2 consecutive bits or 2 bits of different bytes. This is not specifically limited in this application.

In another possible implementation, if the first field indicates that the any TCI field value corresponds to two TCI state groups, the second field indicates either of the following:
the any TCI field value corresponds to two TCI state groups, and a first TCI state in a first TCI state group in the two TCI state groups and a first TCI state in a second TCI state group belong to a first TRP; and if the first TCI state group and/or the second TCI state group include/includes a second TCI state, the second TCI state belongs to a second TRP; or
the any TCI field value corresponds to two TCI state groups, and a first TCI state in a first TCI state group in the two TCI state groups and a first TCI state in a second TCI state group belong to a second TRP; and if the first TCI state group and/or the second TCI state group include/includes a second TCI state, the second TCI state belongs to a first TRP.

In this implementation, the first field indicates two TCI state groups corresponding to the any TCI field value and a TRP to which each TCI state in the two TCI state groups belongs, and a type of the TCI state group does not need to be further identified.

It should be noted that, it may be specified that in the first MAC CE, an uplink TCI state always ranks before a downlink TCI state; or it may be specified that in the first MAC CE, a downlink TCI state always ranks before an uplink TCI state. In this case, the first MAC CE does not need to additionally indicate a type of a TCI state in the first TCI state group and a type of a TCI state in the second TCI state group.

Optionally, for the any TCI field value, the first indication information further includes a third field, and the third field indicates a quantity of TCI states included in each TCI state group corresponding to the any TCI field value. In other words, the third field indicates whether each TCI state group corresponding to the any TCI field value includes one TCI state or two TCI states.

In other words, the first MAC CE includes a plurality of third fields, and the plurality of third fields are in one-to-one correspondence with the plurality of TCI field values. Each third field indicates a quantity of TCI states included in each TCI state group corresponding to a corresponding TCI field value.

For the third field, refer to related descriptions of the seventh field in Embodiment A. Details are not described herein again.

Optionally, for the any TCI field value, the first indication information further includes a fourth field, the fourth field indicates an index (or an identifier) of a TCI state corresponding to the any TCI field value, and the index of the TCI state uniquely identifies the TCI state. In other words, the first MAC CE includes a plurality of fourth fields, and the plurality of fourth fields are in one-to-one correspondence with the plurality of TCI field values. Each fourth field indicates an index of a TCI state corresponding to a corresponding TCI field value.

For the fourth field, refer to related descriptions of the ninth field in Embodiment A. Details are not described herein again.

It can be learned from this that, for any TCI field value, the first MAC CE includes a first field, and the first field indicates a quantity of TCI state groups corresponding to the any TCI field value. In this way, the terminal device determines, based on the first MAC CE, the TCI state corresponding to each TCI field value in the plurality of TCI field values, so that the network device indicates the TCI state to the terminal device by using the TCI field value in the DCI; and the TCI state corresponds to a corresponding beam, so that the network device indicates the beam to the terminal device. Moreover, according to the technical solution in this application, in an mTRP scenario, the network device may indicate, to the terminal device, TCI states corresponding to a plurality of TRPs, to implement transmission between the terminal device and the plurality of TRPs.

This application further provides Embodiment M. Embodiment M is similar to the embodiment shown in FIG. 10, and a difference lies in: In step 1001, for any TCI field value, the first indication information includes a first field, and the first field indicates a quantity of TCI state groups corresponding to the any TCI field value.

Optionally, the first indication information is a first MAC CE.

In other words, the first MAC CE includes a plurality of first fields, and the plurality of first fields are in one-to-one correspondence with the plurality of TCI field values. Each first field indicates a quantity of TCI state groups corresponding to a corresponding TCI field value.

TCI states in each TCI state group belong to a same type of TCI states, and TCI states in different TCI state groups belong to different types of TCI states.

For the first field, refer to related descriptions of the first field in Embodiment A. Details are not described herein again.

Optionally, for the any TCI field value, the first MAC CE further includes a second field, and the second field indicates a type of each TCI state group corresponding to the any TCI field value. In other words, the first MAC CE includes a plurality of second fields, and the plurality of second fields are in one-to-one correspondence with the plurality of TCI field values. Each second field indicates a type of each TCI state group corresponding to a corresponding TCI field value.

For the second field, refer to related descriptions of the sixth field in Embodiment A. Details are not described herein again.

Optionally, for the any TCI field value, the first MAC CE further includes a third field, and the third field indicates a quantity of TCI states included in each TCI state group corresponding to the any TCI field value and a TRP to which each TCI state group belongs. In other words, the first MAC CE includes a plurality of third fields, and the plurality of third fields correspond to the plurality of TCI field values. Each third field indicates a quantity of TCI states included in each TCI state group corresponding to a corresponding TCI state group and a TRP to which each TCI state group belongs. When one TCI field value corresponds to one TCI state group, the TCI field value corresponds to one third field, and the third field indicates information about a TCI state included in the TCI state group corresponding to the TCI field value. When one TCI field value corresponds to two TCI state groups, the TCI field value corresponds to two third fields, and each third field corresponds to one TCI state group and indicates information about a TCI state included in the TCI state group.

It should be noted that, optionally, the third field may be a bit other than a TCI state byte in the first MAC CE or a bit of a TCI state byte in the first MAC CE. This is not specifically limited in this application.

In a possible implementation, for each TCI state group corresponding to the any TCI field value, the third field indicates any one of the following:
the TCI state group includes one TCI state of a first TRP;
the TCI state group includes one TCI state of a second TRP;
the TCI state group includes a first TCI state and a second TCI state, the first TCI state belongs to a first TRP, and the second TCI state belongs to a second TRP; or
the TCI state group includes a first TCI state and a second TCI state, the first TCI state belongs to a second TRP, and the second TCI state belongs to a first TRP.

In another possible implementation, for each TCI state group corresponding to the any TCI field value, the third field indicates any one of the following:
the TCI state group includes one TCI state of a first TRP;
the TCI state group includes one TCI state of a second TRP; or
the TCI state group includes two TCI states, one TCI state in the two TCI states belongs to a first TRP, and the other TCI state belongs to a second TRP.

Optionally, it is specified that when one TCI state group includes two TCI states, a first TCI state belongs to the first TRP, and a second TCI state belongs to the second TRP; or it is specified that when one TCI state group includes two TCI states, a first TCI state belongs to the second TRP, and a second TCI state belongs to the first TRP. In this case, the first MAC CE does not need to additionally indicate a TRP to which each TCI state belongs.

Optionally, for the any TCI field value, the first indication information further includes a fourth field, the fourth field indicates an index (or an identifier) of a TCI state corresponding to the any TCI field value, and the index of the TCI state uniquely identifies the TCI state. In other words, the first MAC CE includes a plurality of fourth fields, and the plurality of fourth fields are in one-to-one correspondence with the plurality of TCI field values. Each fourth field indicates an index of a TCI state corresponding to a corresponding TCI field value.

For the fourth field, refer to related descriptions of the ninth field in Embodiment A. Details are not described herein again.

It can be learned from this that, for any TCI field value, the first MAC CE includes a first field, and the first field indicates a quantity of TCI state groups corresponding to the any TCI field value. In this way, the terminal device determines, based on the first MAC CE, the TCI state corresponding to each TCI field value in the plurality of TCI field values, so that the network device indicates the TCI state to the terminal device by using the TCI field value in the DCI; and the TCI state corresponds to a corresponding beam, so that the network device indicates the beam to the terminal device. Moreover, according to the technical solution in this application, in an mTRP scenario, the network device may indicate, to the terminal device, TCI states corresponding to a plurality of TRPs, to implement transmission between the terminal device and the plurality of TRPs.

This application further provides Embodiment N. This embodiment N is similar to the embodiment shown in FIG. 10, and a difference lies in: In step 1001, for any TCI field value, the first indication information includes a first field, and the first field indicates a quantity of TCI state groups corresponding to the any TCI field value, a type of each TCI state group, and a TRP to which a TCI state in each TCI state group belongs.

Optionally, the first indication information is a first MAC CE.

In other words, the first MAC CE includes a plurality of first fields, and the plurality of first fields are in one-to-one correspondence with the plurality of TCI field values. Each first field indicates a quantity of TCI state groups corresponding to a corresponding TCI field value, a type of each TCI state group, and a TRP to which a TCI state in each TCI state group belongs.

TCI states in each TCI state group belong to a same type of TCI states, and TCI states in different TCI state groups belong to different types of TCI states.

In a possible implementation, the first field indicates any one of the following:
the any TCI field value corresponds to one uplink TCI state group, and a first TCI state in the uplink TCI state group belongs to a first TRP; and if the uplink TCI state group includes a second TCI state, the second TCI state belongs to a second TRP;
the any TCI field value corresponds to one downlink TCI state group, and a first TCI state in the downlink TCI state group belongs to a first TRP; and if the downlink TCI state group includes a second TCI state, the second TCI state belongs to a second TRP;
the any TCI field value corresponds to one uplink TCI state group, and a first TCI state in the uplink TCI state group belongs to a second TRP; and if the uplink TCI state group includes a second TCI state, the second TCI state belongs to a first TRP;
the any TCI field value corresponds to one downlink TCI state group, and a first TCI state in the downlink TCI state group belongs to a second TRP; and if the downlink TCI state group includes a second TCI state, the second TCI state belongs to a first TRP;
the any TCI field value corresponds to one uplink TCI state group and one downlink TCI state group, and corresponding first TCI states in the uplink TCI state group and the downlink TCI state group belong to a first TRP; and if the uplink TCI state group and/or the downlink TCI state group include/includes a corresponding second TCI state, the second TCI state belongs to a second TRP;
the any TCI field value corresponds to one uplink TCI state group and one downlink TCI state group, and corresponding first TCI states in the uplink TCI state group and the downlink TCI state group belong to a second TRP; and if the uplink TCI state group and/or the downlink TCI state group include/includes a corresponding second TCI state, the second TCI state belongs to a first TRP;
the any TCI field value corresponds to one uplink TCI state group and one downlink TCI state group, a first TCI state in the uplink TCI state group belongs to a first TRP, and a first TCI state in the downlink TCI state group belongs to a second TRP; if the uplink TCI state group includes a second TCI state, the second TCI state belongs to the second TRP; and if the downlink TCI state group includes a second TCI state, the second TCI state belongs to the first TRP; or
the any TCI field value corresponds to one uplink TCI state group and one downlink TCI state group, a first TCI state in the uplink TCI state group belongs to a second TRP, and a first TCI state in the downlink TCI state group belongs to a first TRP; if the uplink TCI state group includes a second TCI state, the second TCI state belongs to the first TRP; and if the downlink TCI state group includes a second TCI state, the second TCI state belongs to the second TRP.

It can be learned from this that the first field indicates one of the foregoing eight cases. A length of the first field may be 3 bits. The 3 bits may be 3 consecutive bits or may be 3 bits of different bytes in the first MAC CE. This is not specifically limited in this application.

In another possible implementation, the first field indicates any one of the following:
the any TCI field value corresponds to one TCI state group, and a first TCI state in the TCI state group belongs to a first TRP; and if the TCI state group includes a second TCI state, the second TCI state belongs to a second TRP;
the any TCI field value corresponds to one TCI state group, and a first TCI state in the TCI state group belongs to a first TRP; and if the TCI state group includes a second TCI state, the second TCI state belongs to a second TRP;
the any TCI field value corresponds to one uplink TCI state group and one downlink TCI state group, and corresponding first TCI states in the uplink TCI state group and the downlink TCI state group belong to a first TRP; and if the uplink TCI state group and/or the downlink TCI state group include/includes a corresponding second TCI state, the second TCI state belongs to a second TRP;
the any TCI field value corresponds to one uplink TCI state group and one downlink TCI state group, and corresponding first TCI states in the uplink TCI state group and the downlink TCI state group belong to a second TRP; and if the uplink TCI state group and/or the downlink TCI state group include/includes a corresponding second TCI state, the second TCI state belongs to a first TRP;
the any TCI field value corresponds to one uplink TCI state group and one downlink TCI state group, a first TCI state in the uplink TCI state group belongs to a first TRP, and a first TCI state in the downlink TCI state group belongs to a second TRP; if the uplink TCI state group includes a second TCI state, the second TCI state belongs to the second TRP; and if the downlink TCI state group includes a second TCI state, the second TCI state belongs to the first TRP; or
the any TCI field value corresponds to one uplink TCI state group and one downlink TCI state group, a first TCI state in the uplink TCI state group belongs to a second TRP, and a first TCI state in the downlink TCI state group belongs to a first TRP; if the uplink TCI state group includes a second TCI state, the second TCI state belongs to the first TRP; and if the downlink TCI state group includes a second TCI state, the second TCI state belongs to the second TRP.

In this implementation, when the any TCI field value corresponds to one TCI state group, only a TRP to which each TCI state in the TCI state group belongs needs to be identified, and a type of the TCI state group does not need to be further identified.

Optionally, it may be specified that when the any TCI field value corresponds to two TCI state groups, the uplink TCI state group always ranks before the downlink TCI state group; or it may be specified that when the any TCI field value corresponds to two TCI state groups, the downlink TCI state group always ranks before the uplink TCI state group. In this case, when the any TCI field value corresponds to two TCI state groups, the terminal device may determine a type of each TCI state in the two TCI state groups. In this way, the first MAC CE does not need to additionally indicate the type of each TCI state in the two TCI state groups. Whether each TCI state group includes a second TCI state may be indicated by 1 bit of a first TCI state byte corresponding to the TCI state group.

Optionally, for the any TCI field value, the first MAC CE further includes a second field, and the second field indicates a quantity of TCI states included in each TCI state group corresponding to the any TCI field value. In other words, the first MAC CE further includes a plurality of second fields, the plurality of second fields are in one-to-one correspondence with the plurality of TCI field values, and each second field indicates a quantity of TCI states included in each TCI state group corresponding to a corresponding TCI field value.

For the second field, refer to related descriptions of the seventh field in Embodiment A. Details are not described herein again.

Optionally, for the any TCI field value, the first MAC CE further includes a third field, the third field indicates an index (or an identifier) of a TCI state corresponding to the any TCI field value, and the index of the TCI state uniquely identifies the TCI state. In other words, the first MAC CE further includes a plurality of third fields, and the plurality of third fields are in one-to-one correspondence with the plurality of TCI field values. Each third field indicates an index of a TCI state corresponding to a corresponding TCI field value.

For the third field, refer to related descriptions of the ninth field in Embodiment A. Details are not described herein again.

It can be learned from this that, for any TCI field value, the first MAC CE includes a first field, and the first field indicates a quantity of TCI state groups corresponding to the any TCI field value, a type of each TCI state group, and a TRP to which a TCI state in each TCI state group belongs. In this way, the terminal device determines, based on the first MAC CE, the TCI state corresponding to each TCI field value in the plurality of TCI field values, so that the network device indicates the TCI state to the terminal device by using the TCI field value in the DCI; and the TCI state corresponds to a corresponding beam, so that the network device indicates the beam to the terminal device. Moreover, according to the technical solution in this application, in an mTRP scenario, the network device may indicate, to the terminal device, TCI states corresponding to a plurality of TRPs, to implement transmission between the terminal device and the plurality of TRPs.

According to the foregoing embodiments, the network device may indicate, to the terminal device, two TCI states for downlink transmission, namely, two downlink TCI states or two joint uplink/downlink TCI states. A PDCCH corresponding to a CORESET may be sent by using a 1^{st} TCI state, a 2^{nd} TCI state, or both of the foregoing two TCI states. Alternatively, the foregoing two TCI states may not be used, but a to-be-used TCI state is separately indicated by other signaling, for example, MAC CE signaling. Whether and how the foregoing two TCI states are used for a PDCCH corresponding to a CORESET may be configured by using RRC signaling. There are two manners:

Manner 1: For a CORESET, whether the foregoing TCI state is used for a PDCCH corresponding to the CORESET is configured by using a first parameter, and a specific TCI state in the foregoing two TCI states that is to be used for the CORESE is configured by using a second parameter. The first parameter may be set to two optional values: a first value and a second value. The first value indicates to use, for the PDCCH corresponding to the CORESET, the downlink TCI state or the joint uplink/downlink TCI state that is indicated by the network device and that is for downlink transmission, and the second value indicates not to use, for the PDCCH corresponding to the CORESET, the downlink TCI state or the joint uplink/downlink TCI state that is indicated by the network device and that is for downlink transmission. The second parameter includes at least three optional values: a first value, a second value, and a third value. The first value indicates to use the 1^{st} TCI state in the foregoing two TCI states for the PDCCH corresponding to the CORESET. The second value indicates to use the 2^{nd} state in the foregoing two TCI states for the PDCCH corresponding to the CORESET. The third value indicates to use the foregoing two TCI states for the PDCCH corresponding to the CORESET. The foregoing optional values also include a default value, to be specific, when the first parameter or the second parameter is not configured, the first parameter or the second parameter may have a default value, and the default value is also included in the foregoing optional values.

Manner 2: For a CORESET, whether and how the foregoing two TCI states are used for a PDCCH corresponding to the CORESET are directly indicated by a second parameter. The second parameter may include four optional values: a first value, a second value, a third value, and a fourth value. The first value indicates to use the 1^{st} TCI state in the foregoing two TCI states for the PDCCH corresponding to the CORESET. The second value indicates to use the 2^{nd} TCI state in the foregoing two TCI states for the PDCCH corresponding to the CORESET. The third value indicates to use the foregoing two TCI states for the PDCCH corresponding to the CORESET. The fourth value indicates not to use either of the two TCI states for the PDCCH corresponding to the CORESET. The foregoing optional values also include a default value, to be specific, when a first parameter or the second parameter is not configured, the first parameter or the second parameter may have a default value, and the default value is also included in the foregoing optional values. The terminal device sometimes switches from an mTRP mode back to a single-TRP mode. In the single-TRP mode, the network device indicates, to the terminal device, only a single TCI state for downlink transmission, namely, one uplink/downlink TCI state or one downlink TCI state. In this case, for a CORESET, whether the TCI state is used for a PDCCH corresponding to the CORESET may be indicated by a first parameter. A specific value of the first parameter is in a similar case. For details, refer to related descriptions in the foregoing manner 1.

If the manner 2 is adopted, when a transmission mode is switched from the mTRP mode to the single-TRP mode, for a CORESET, the network device needs to configure a first parameter for the CORESET, and release a second parameter corresponding to the CORESET. Furthermore, the network device needs to indicate a single TCI status for downlink transmission to the terminal device, to notify the terminal device to subsequently use the single TCI state. Time for the foregoing two actions (namely, RRC configuration and TCI state indication) may not be completely aligned. In a case, the TCI state indication has been completed, but the RRC configuration has not been completed. The second parameter is used for the CORESET, but there is only the single TCI state for downlink transmission. In this case, an RRC configuration parameter (where the second parameter is used in a multi-TRP scenario) is incompatible with a quantity of actually indicated TCI states (where the single TCI state is used in a single-TRP scenario). Some methods are needed for compatibility. For example, regardless of whether a value of the second parameter is the first value, the second value, or the third value, only the single TCI state for downlink transmission is used for the CORESET. For another example, the second parameter indicates the fourth value, and the single TCI state for downlink transmission is not used for the CORESET. In another case, the TCI state indication has been completed, but the RRC configuration has not been completed. The first parameter is used for the CORESET, but there are two TCI states for downlink transmission. In this case, an RRC configuration parameter (where the first parameter is used in a single-TRP scenario) is incompatible with a quantity of actually indicated TCI states (where the two TCI states are used in a multi-TRP scenario). Some methods are needed for compatibility. For example, when a value of the first parameter is the first value, the 1^{st} TCI state in the foregoing two TCI states for downlink transmission is used for the CORESET by default, the 2^{nd} TCI state in the foregoing two TCI states for downlink transmission is used for the CORESET by default, or the foregoing two TCI states for downlink transmission are used for the CORESET by default. For another example, when a value of the first parameter is the second value, neither of the foregoing two TCI states for downlink transmission is used for the CORESET.

The following describes a communication apparatus provided in embodiments of this application.

FIG. 13 is a diagram of a structure of a communication apparatus according to an embodiment of this application. Refer to FIG. 13. The communication apparatus may be configured to perform the embodiment shown in FIG. 7, the embodiment shown in FIG. 13, and processes performed by the terminal device in Embodiment A to Embodiment N. For details, refer to related descriptions in the foregoing method embodiments.

The communication apparatus 1300 includes a transceiver module 1301 and a processing module 1302.

The processing module 1302 is configured to process data. The transceiver module 1301 may implement a corresponding communication function. The transceiver module 1301 may also be referred to as a communication interface or a communication module.

Optionally, the communication apparatus 1300 may further include a storage module. The storage module may be configured to store instructions and/or data. The processing module 1302 may read the instructions and/or the data in the storage module, so that the communication apparatus implements the foregoing method embodiments.

The communication apparatus module 1300 may be configured to perform an action performed by the terminal device in the foregoing method embodiments. The communication apparatus 1300 may be a terminal device or a component that may be disposed in the terminal device. The processing module 1302 is configured to perform a processing-related operation on a terminal device side in the foregoing method embodiments. The transceiver module 1301 is configured to perform a receiving-related operation on the terminal device side in the foregoing method embodiments.

Optionally, the transceiver module 1301 may include a sending module and a receiving module. The sending module is configured to perform a sending operation in the foregoing method embodiments. The receiving module is configured to perform a receiving operation in the foregoing method embodiments.

It should be noted that the communication apparatus 1300 may include a sending module, but does not include a receiving module. Alternatively, the communication apparatus 1300 may include a receiving module, but does not include a sending module. This may specifically depend on whether the foregoing solution executed by the communication apparatus 1300 includes a sending action and a receiving action.

Optionally, the communication apparatus 1300 is configured to perform an action performed by the terminal device in the embodiment shown in FIG. 7, the embodiment shown in FIG. 10, or any one of Embodiment A to Embodiment N.

For example, the communication apparatus 1300 is configured to perform the action performed by the terminal device in the embodiment shown in FIG. 7.

The transceiver module 1031 is configured to receive a first MAC CE from a network device, and receive DCI from the network device, where the DCI includes a TCI field, the TCI field corresponds to a plurality of TCI field values, any TCI field value in the plurality of TCIfield values corresponds to one or two TCI state groups, and each TCI state group includes one or two TCI states; and for the any TCI field value, the first MAC CE includes a first field, and the first field indicates a quantity of TCI state groups corresponding to the any TCI field value.

The processing module 1302 is configured to determine, based on the first MAC CE, a TCI state corresponding to each TCI field value in the plurality of TCI field values.

For example, the communication apparatus 1300 is configured to perform the action performed by the terminal device in the embodiment shown in FIG. 10.

The transceiver module 1301 is configured to receive a first MAC CE from a network device, and receive DCI from the network device, where the DCI includes a TCI field, the TCI field corresponds to a plurality of TCIfield values, any TCI field value in the plurality of TCIfield values corresponds to one or two TCI state groups, and each TCI state group includes one or two TCI states; and for the any TCI field value, the first MAC CE includes a first field, and the first field indicates a TCI state group corresponding to the any TCI field value and a quantity of TCI states included in each TCI state group.

The processing module 1302 is configured to determine, based on the first MAC CE, a TCI state corresponding to each TCI field value in the plurality of TCI field values.

It should be understood that a specific process in which the modules perform the foregoing corresponding processes has been described in detail in the foregoing method embodiments. For brevity, details are not described herein again.

The processing module 1302 in the foregoing embodiment may be implemented by at least one processor or a processor-related circuit. The transceiver module 1301 may be implemented by a transceiver or a transceiver-related circuit. The transceiver module 1301 may also be referred to as a communication module or a communication interface. The storage module may be implemented by at least one memory.

The following describes a communication apparatus provided in embodiments of this application.

FIG. 14 is a diagram of a structure of a communication apparatus according to an embodiment of this application. Refer to FIG. 14. The communication apparatus may be configured to perform a process performed by the network device in the embodiment shown in FIG. 7, the embodiment shown in FIG. 10, or any one of Embodiment A to Embodiment N. For details, refer to related descriptions in the foregoing method embodiments.

The communication apparatus 1400 includes a transceiver module 1401. Optionally, the communication apparatus 1400 further includes a processing module 1402. The transceiver module 1401 may implement a corresponding communication function. The processing module 1402 is configured to process data. The transceiver module 1101 may also be referred to as a communication interface or a communication module.

Optionally, the communication apparatus 1400 may further include a storage module. The storage module may be configured to store instructions and/or data. The processing module 1402 may read the instructions and/or the data in the storage module, so that the communication apparatus implements the foregoing method embodiments.

The communication apparatus module 1400 may be configured to perform an action performed by the network device in the foregoing method embodiments. The communication apparatus 1400 may be a network device or a component that may be disposed in the network device. The transceiver module 1401 is configured to perform a receiving-related operation on a network device side in the foregoing method embodiments, and the processing module 1402 is configured to perform a processing-related operation on the network device side in the foregoing method embodiments.

Optionally, the transceiver module 1401 may include a sending module and a receiving module. The sending module is configured to perform a sending operation in the foregoing method embodiments. The receiving module is configured to perform a receiving operation in the foregoing method embodiments.

It should be noted that the communication apparatus 1400 may include a sending module, but does not include a receiving module. Alternatively, the communication apparatus 1400 may include a receiving module, but does not include a sending module. This may specifically depend on whether the foregoing solution executed by the communication apparatus 1400 includes a sending action and a receiving action.

Optionally, the communication apparatus 1400 is configured to perform an action performed by the network device in the embodiment shown in FIG. 7, the embodiment shown in FIG. 10, or any one of Embodiment A to Embodiment N.

For example, the communication apparatus 1400 is configured to perform the action performed by the network device in the embodiment shown in FIG. 7.

The transceiver module 1401 is configured to receive a first MAC CE from a terminal device, and send DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a quantity of TCI state groups corresponding to the any TCI field value.

For example, the communication apparatus 1400 is configured to perform the action performed by the network device in the embodiment shown in FIG. 10.

The transceiver module 1401 is configured to send a first MAC CE to a terminal device, and send DCI to the terminal device, where the DCI includes a TCI field, the TCI field corresponds to a plurality of TCI field values, any TCI field value in the plurality of TCI field values corresponds to one or two TCI state groups, and each TCI state group includes one or two TCI states; and for the any TCI field value, the first MAC CE includes a first field, and the first field indicates a TCI state group corresponding to the any TCI field value and a quantity of TCI states included in each TCI state group.

It should be understood that a specific process in which the modules perform the foregoing corresponding processes has been described in detail in the foregoing method embodiments. For brevity, details are not described herein again.

The processing module 1402 in the foregoing embodiment may be implemented by at least one processor or a processor-related circuit. The transceiver module 1401 may be implemented by a transceiver or a transceiver-related circuit. The transceiver module 1401 may also be referred to as a communication module or a communication interface. The storage module may be implemented by at least one memory.

An embodiment of this application further provides a communication apparatus 1500. The communication apparatus 1500 includes a processor 1510. The processor 1510 is coupled to a memory 1520. The memory 1520 is configured to store a computer program or instructions and/or data. The processor 1510 is configured to execute the computer program or the instructions and/or the data stored in the memory 1520, so that the method in the foregoing method embodiments is performed.

Optionally, the communication apparatus 1500 includes one or more processors 1510.

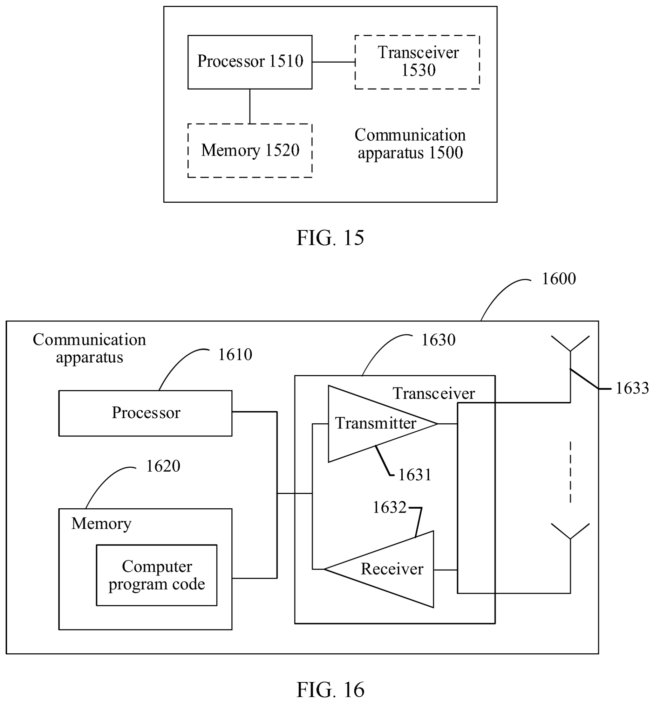

Optionally, as shown in FIG. 15, the communication apparatus 1500 may further include the memory 1520.

Optionally, the communication apparatus 1500 may include one or more memories 1520.

Optionally, the memory 1520 and the processor 1510 may be integrated or separately disposed.

Optionally, as shown in FIG. 15, the communication apparatus 1500 may further include a transceiver 1530. The transceiver 1530 is configured to: receive and/or send a signal. For example, the processor 1510 is configured to control the transceiver 1530 to receive and/or send the signal.

In a solution, the communication apparatus 1500 is configured to implement an operation performed by the terminal device in the foregoing method embodiments.

For example, the processor 1510 is configured to implement a processing-related operation performed by the terminal device in the foregoing method embodiments, and the transceiver 1530 is configured to implement sending-related and receiving-related operations performed by the terminal device in the foregoing method embodiments.

In another solution, the communication apparatus 1500 is configured to implement an operation performed by the network device in the foregoing method embodiments.

For example, the processor 1510 is configured to implement a processing-related operation performed by the network device in the foregoing method embodiments, and the transceiver 1530 is configured to implement sending-related and receiving-related operations performed by the network device in the foregoing method embodiments.

This application further provides a communication apparatus 1600. The communication apparatus 1600 may be a terminal device, a processor of the terminal device, or a chip. The communication apparatus 1600 may be configured to perform an operation performed by the terminal device in the foregoing method embodiments.

When the communication apparatus 1600 is a terminal device, FIG. 16 is a simplified diagram of a structure of the terminal device. As shown in FIG. 16, the terminal device includes a processor, a memory, and a transceiver. The memory may store computer program code. The transceiver includes a transmitter 1631, a receiver 1632, a radio frequency circuit (not shown in the figure), an antenna 1633, and an input/output apparatus (not shown in the figure).

The processor is mainly configured to: process a communication protocol and communication data, control the terminal device, execute a software program, process data of the software program, and so on. The memory is mainly configured to store the software program and data. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display screen, or a keyboard, is mainly configured to receive data input by a user and output data to the user. It should be noted that some types of terminal devices may have no input/output apparatus.

When data needs to be sent, the processor performs baseband processing on the to-be-sent data, and then outputs a baseband signal to the radio frequency circuit. The radio frequency circuit performs radio frequency processing on the baseband signal, and then sends a radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 16 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 16, the terminal device includes a processor 1610, a memory 1620, and a transceiver 1630. The processor 1610 may also be referred to as a processing unit, a processing board, a processing module, a processing apparatus, or the like. The transceiver 1630 may also be referred to as a transceiver unit, a transceiver machine, a transceiver apparatus, or the like.

Optionally, a component for implementing a receiving function in the transceiver 1630 may be considered as a receiving module, and a component for implementing a sending function in the transceiver 1630 may be considered as a sending module. In other words, the transceiver 1630 includes a receiver and a transmitter. The transceiver sometimes may also be referred to as a transceiver machine, a transceiver module, a transceiver circuit, or the like. The receiver sometimes may also be referred to as a receiver machine, a receiving module, a receiver circuit, or the like. The transmitter sometimes may also be referred to as a transmitter machine, a transmitting module, a transmitter circuit, or the like.

The processor 1601 is configured to perform a processing action on a terminal device side in the embodiment shown in FIG. 7, the embodiment shown in FIG. 10, or any one of Embodiment A to Embodiment N. The transceiver 1630 is configured to perform receiving and sending actions on the terminal device side in the embodiment shown in FIG. 7, the embodiment shown in FIG. 10, or any one of Embodiment A to Embodiment N.

For example, in an implementation, the processor 1610 is configured to perform a processing action on the terminal device side in the embodiment shown in FIG. 7, and the transceiver 1630 is configured to perform receiving and sending actions on the terminal device side in the embodiment shown in FIG. 7. The transceiver 1630 is configured to perform step 701 and step 702 in the embodiment shown in FIG. 7, and the processor 1610 is configured to perform step 703 in the embodiment shown in FIG. 7. Optionally, the transceiver 1630 is further configured to perform step 701a in the embodiment shown in FIG. 7.

For example, in an implementation, the processor 1610 is configured to perform a processing action on the terminal device side in the embodiment shown in FIG. 10, and the transceiver 1630 is configured to perform receiving and sending actions on the terminal device side in the embodiment shown in FIG. 10. The transceiver 1630 is configured to perform step 1001 and step 1002 in the embodiment shown in FIG. 10, and the processor 1610 is configured to perform step 1003 in the embodiment shown in FIG. 10. Optionally, the transceiver 1630 is further configured to perform step 1001a in the embodiment shown in FIG. 10.

It should be understood that FIG. 16 is merely an example rather than a limitation. The terminal device including the transceiver module and the processing module may not depend on the structure shown in FIG. 13 or FIG. 16.

When the communication apparatus 1600 is a chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as an output of the chip, and a receiving operation performed by the terminal device in the foregoing method embodiments may be understood as an input of the chip.

This application further provides a communication apparatus 1700. The communication apparatus 1700 may be a network device or a chip. The communication apparatus 1700 may be configured to perform an operation performed by the network device in the embodiment shown in FIG. 7, the embodiment shown in FIG. 10, or any one of Embodiment A to Embodiment N.

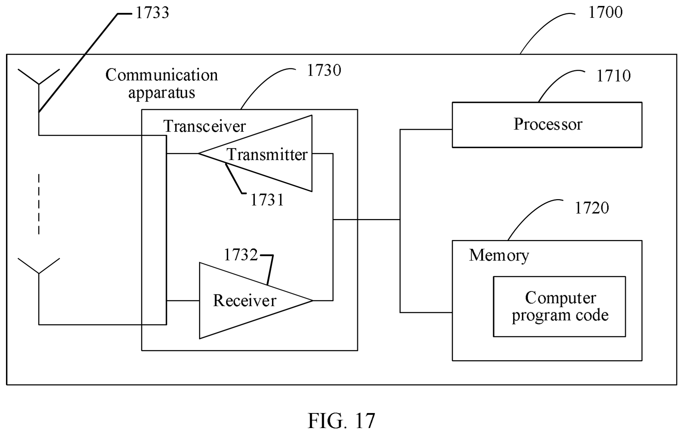

When the communication apparatus 1700 is a network device, for example, a base station, FIG. 17 is a simplified diagram of a structure of the base station. The base station includes a part 1710, a part 1720, and a part 1730. The part 1710 is mainly configured to: perform baseband processing, control the base station, and so on. The part 1710 is usually a control center of the base station, may be usually referred to as a processor, and is configured to control the base station to perform a processing operation on a network device side in the foregoing method embodiments. The part 1720 is mainly configured to store computer program code and data. The part 1730 is mainly configured to receive and send a radio frequency signal, and perform conversion between the radio frequency signal and a baseband signal. The part 1730 may be usually referred to as a transceiver module, a transceiver machine, a transceiver circuit, a transceiver, or the like. A transceiver module in the part 1730 may also be referred to as a transceiver machine, a transceiver, or the like, and includes an antenna 1733 and a radio frequency circuit (not shown in the figure). The radio frequency circuit is mainly configured to perform radio frequency processing. Optionally, a component for implementing a receiving function in the part 1730 may be considered as a receiver, and a component for implementing a sending function may be considered as a transmitter. In other words, the part 1730 includes a receiver 1732 and a transmitter 1731. The receiver may also be referred to as a receiving module, a receiver machine, a receiver circuit, or the like, and the transmitter may be referred to as a transmitting module, a transmitter machine, a transmitter circuit, or the like.

The part 1710 and the part 1720 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, a plurality of boards share one or more memories, or a plurality of boards share one or more processors at the same time.

For example, in an implementation, the transceiver module in the part 1730 is configured to perform sending-related and receiving-related processes performed by the network device in the embodiment shown in FIG. 7, the embodiment shown in FIG. 10, or any one of Embodiment A to Embodiment N. The processor in the part 1410 is configured to perform a processing-related process performed by the network device in the embodiment shown in FIG. 7, the embodiment shown in FIG. 10, or any one of Embodiment A to Embodiment N.

It should be understood that FIG. 17 is merely an example rather than a limitation, and the network device including the processor, the memory, and the transceiver may not depend on the structure shown in FIG. 14 or FIG. 17.

When the communication apparatus 1700 is a chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as an output of the chip, and a receiving operation performed by the network device in the foregoing method embodiments may be understood as an input of the chip.

An embodiment of this application further provides a computer-readable storage medium. The computer-readable storage medium stores computer instructions for implementing the method performed by the terminal device or the network device in the foregoing method embodiments.

For example, when the computer program is executed by a computer, the computer is enabled to implement the method performed by the terminal device or the network device in the foregoing method embodiments.

An embodiment of this application further provides a computer program product including instructions. When the instructions are executed by a computer, the computer is enabled to implement the method performed by the terminal device or the network device in the foregoing method embodiments.

An embodiment of this application further provides a communication system. The communication system includes the terminal device in the foregoing embodiments and the network device in the foregoing embodiments.

An embodiment of this application further provides a chip apparatus, including a processor, configured to invoke a computer program or computer instructions stored in a memory, so that the processor performs the method provided in the embodiment shown in FIG. 7, the embodiment shown in FIG. 10, or any one of Embodiment A to Embodiment N.

In a possible implementation, an input of the chip apparatus corresponds to a receiving operation in the embodiment shown in FIG. 7, the embodiment shown in FIG. 10, or any one of Embodiment A to Embodiment N, and an output of the chip apparatus corresponds to a sending operation in the embodiment shown in FIG. 7, the embodiment shown in FIG. 10, or any one of Embodiment A to Embodiment N.

Optionally, the processor is coupled to the memory through an interface.

Optionally, the chip apparatus further includes the memory, and the memory stores the computer program or the computer instructions.

The processor mentioned anywhere above may be a general-purpose central processing unit, a microprocessor, an application-specific integrated circuit (application-specific integrated circuit, ASIC), or one or more integrated circuits configured to control program execution for the method provided in the embodiment shown in FIG. 7, the embodiment shown in FIG. 10, or any one of Embodiment A to Embodiment N. The memory mentioned anywhere above may be a read-only memory (read-only memory, ROM), another type of static storage device that can store static information and instructions, a random access memory (random access memory, RAM), or the like.

It can be clearly understood by persons skilled in the art that, for convenient and brief description, for explanations and beneficial effects of related content in any one of the communication apparatuses provided above, refer to the corresponding method embodiments provided above. Details are not described herein again.

**In** this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems, for example, a Linux operating system, a Unix operating system, an Android operating system, an iOS operating system, or a Windows operating system, that implement service processing by using a process (process). The application layer may include applications such as a browser, an address book, word processing software, and instant messaging software.

It may be clearly understood by persons skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed system, apparatus, and method may be implemented in other manners. For example, the apparatus embodiments described above are merely examples. For example, the division into modules is merely logical function division. During actual implementation, there may be another division manner. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, that is, may be located in one position, or may be distributed on a plurality of network modules. Some or all the modules may be selected based on actual needs to achieve the objectives of the solutions of embodiments.

In addition, the functional modules in embodiments of this application may be integrated into one processing module, each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated module may be stored in a computer-readable storage medium. Based on such an understanding, the part that essentially contributes to the technical solutions of this application or all or some of the technical solutions may be implemented in a form of a software product. The computer software product is stored in a storage medium, and includes several instructions for enabling a computer device (which may be a personal computer, a server, a network device, or the like) to perform all or some processes of the methods in embodiments of this application. The foregoing storage medium includes any medium that can store program code, for example, a USB flash disk, a removable hard disk, a read-only memory, a random access memory, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions set forth in the foregoing embodiments or make equivalent replacements to some technical features thereof, without departing from the scope of the technical solutions of embodiments of this application.

## Claims

1. A beam indication method, wherein the method comprises:
receiving, by a terminal device, a first medium access control control element MAC CE from a network device;
receiving, by the terminal device, downlink control information DCI from the network device, wherein
the DCI comprises a transmission configuration indicator TCI field, the TCI field corresponds to a plurality of TCI field values, any TCI field value in the plurality of TCI field values corresponds to one or two TCI state groups, and each TCI state group comprises one or two TCI states; and
for the any TCI field value, the first MAC CE comprises a first field, and the first field indicates a quantity of TCI state groups corresponding to the any TCI field value; and
determining, by the terminal device based on the first MAC CE, a TCI state corresponding to each TCI field value in the plurality of TCI field values.

2. A beam indication method, wherein the method comprises:
sending, by a network device, a first medium access control control element MAC CE to a terminal device; and
sending, by the network device, downlink control information DCI to the terminal device, wherein
the DCI comprises a transmission configuration indicator TCI field, the TCI field corresponds to a plurality of TCI field values, any TCI field value in the plurality of TCI field values corresponds to one or two TCI state groups, and each TCI state group comprises one or two TCI states; and for the any TCI field value, the first MAC CE comprises a first field, and the first field indicates a quantity of TCI state groups corresponding to the any TCI field value.

3. The method according to claim 1 or 2, wherein if a value of the first field is a first value, it indicates that the any TCI field value corresponds to one TCI state group; or
if a value of the first field is a second value, it indicates that the any TCI field value corresponds to two TCI state groups.

4. The method according to any one of claims 1 to 3, wherein each TCI state group corresponds to one transmission reception point TRP, and different TCI state groups correspond to different TRPs.

5. The method according to any one of claims 1 to 4, wherein for the any TCI field value, the first MAC CE further comprises a second field, and the second field indicates a quantity of TCI states of each TRP that correspond to the any TCI field value.

6. The method according to claim 5, wherein when the first field indicates that the any TCI field value corresponds to one TCI state group, the second field indicates any one of the following:
the any TCI field value corresponds to one TCI state of a first TRP;
the any TCI field value corresponds to one TCI state of a second TRP;
the any TCI field value corresponds to two TCI states of the first TRP; or
the any TCI field value corresponds to two TCI states of the second TRP.

7. The method according to claim 5, wherein when the first field indicates that the any TCI field value corresponds to two TCI state groups, the second field indicates any one of the following:
the any TCI field corresponds to one TCI state of the first TRP and one TCI state of the second TRP;
the any TCI field corresponds to one TCI state of the first TRP and two TCI states of the second TRP;
the any TCI field corresponds to two TCI states of the first TRP and one TCI state of the second TRP; or
the any TCI field corresponds to two TCI states of the first TRP and two TCI states of the second TRP.

8. The method according to claim 7, wherein when the first field indicates that the any TCI field value corresponds to two TCI state groups, the two TCI state groups comprise a TCI state group corresponding to the first TRP and a TCI state group corresponding to the second TRP; and
in the first MAC CE, a TCI state in the TCI state group corresponding to the first TRP ranks before a TCI state in the TCI state group corresponding to the second TRP; or
in the first MAC CE, a TCI state in the TCI state group corresponding to the first TRP ranks after a TCI state in the TCI state group corresponding to the second TRP.

9. The method according to any one of claims 6 to 8, wherein the any TCI field value corresponds to a maximum of 4 bytes in the first MAC CE; and in the 4 bytes, a 1^{st} byte corresponds to a first TCI state of the first TRP, a 2^{nd} byte corresponds to a second TCI state of the first TRP, a 3^{rd} byte corresponds to a first TCI state of the second TRP, and a 4^{th} byte corresponds to a second TCI state of the second TRP;
or
the any TCI field value corresponds to a maximum of 4 bytes in the first MAC CE; and in the 4 bytes, a 1^{st} byte corresponds to a first TCI state of the second TRP, a 2^{nd} byte corresponds to a second TCI state of the second TRP, a 3^{rd} byte corresponds to a first TCI state of the first TRP, and a 4^{th} byte corresponds to a second TCI state of the first TRP.

10. The method according to claim 9, wherein
a 1^{st} bit of the 1^{st} byte indicates a type of a TCI state indicated by last 7 bits of the 1^{st} byte, and a type of a TCI state indicated by the 2^{nd} byte is a type opposite to the type of the TCI state indicated by the last 7 bits of the 1^{st} byte; and a 1^{st} bit of the 3^{rd} byte indicates a type of a TCI state indicated by last 7 bits of the 3^{rd} byte, and a type of a TCI state indicated by the 4^{th} byte is a type opposite to the type of the TCI state indicated by the last 7 bits of the 3^{rd} byte;
or
a 1^{st} bit of each byte in the 4 bytes indicates a type of a TCI state indicated by last 7 bits of the byte, wherein
the type of the TCI state comprises at least one of the following: an uplink TCI state, a downlink TCI state, or a joint uplink/downlink TCI state.

11. The method according to claim 1 or 2, wherein TCI states in each TCI state group belong to a same type of TCI states, and TCI states in different TCI state groups belong to different types of TCI states.

12. The method according to claim 1, 2, or 11, wherein for the any TCI field value, the first MAC CE further comprises a third field, and the third field indicates a quantity of TCI states of each type that correspond to the any TCI field value.

13. The method according to claim 12, wherein when the first field indicates that the any TCI field value corresponds to one TCI state group, the third field indicates any one of the following:
the any TCI field value corresponds to one uplink TCI state;
the any TCI field value corresponds to one downlink TCI state;
the any TCI field value corresponds to two uplink TCI states; or
the any TCI field value corresponds to two downlink TCI states.

14. The method according to claim 12, wherein when the first field indicates that the any TCI field value corresponds to two TCI state groups, the third field indicates any one of the following:
the any TCI field value corresponds to one uplink TCI state and one downlink TCI state;
the any TCI field value corresponds to one uplink TCI state and two downlink TCI states;
the any TCI field corresponds to two uplink TCI states and one downlink TCI state; or
the any TCI field value corresponds to two uplink TCI states and two downlink TCI states.

15. The method according to claim 14, wherein when the first field indicates that the any TCI field value corresponds to two TCI state groups, the two TCI state groups comprise an uplink TCI state group and a downlink TCI state group; and
in the first MAC CE, an uplink TCI state in the uplink TCI state group ranks before a downlink TCI state in the downlink TCI state group; or
in the first MAC CE, an uplink TCI state in the uplink TCI state group ranks after a downlink TCI state in the downlink TCI state group.

16. The method according to claim 15, wherein the any TCI field value corresponds to a maximum of 4 bytes in the first MAC CE; and in the 4 bytes, a 1^{st} byte corresponds to a first uplink TCI state in the uplink TCI state group, a 2^{nd} byte corresponds to a second uplink TCI state in the uplink TCI state group, a 3^{rd} byte corresponds to a first downlink TCI state in the downlink TCI state group, and a 4^{th} byte corresponds to a second downlink TCI state in the downlink TCI state group; or
the any TCI field value corresponds to a maximum of 4 bytes in the first MAC CE; and in the 4 bytes, a 1^{st} byte corresponds to a first downlink TCI state in the downlink TCI state group, a 2^{nd} byte corresponds to a second downlink TCI state in the downlink TCI state group, a 3^{rd} byte corresponds to a first uplink TCI state in the uplink TCI state group, and a 4^{th} byte corresponds to a second uplink TCI state in the uplink TCI state group.

17. The method according to claim 16, wherein a TCI state corresponding to the any TCI field value belongs to a first TRP and/or a second TRP; a 1^{st} bit of the 1^{st} byte indicates a TRP to which a TCI state indicated by last 7 bits of the 1^{st} byte belongs, and a TRP to which a TCI state indicated by the 2^{nd} byte belongs is a TRP, in the first TRP and the second TRP, other than the TRP to which the TCI state indicated by the last 7 bits of the 1^{st} byte belongs; and a 1^{st} bit of the 3^{rd} byte indicates a TRP to which a TCI state indicated by last 7 bits of the 3^{rd} byte belongs, and a TRP to which a TCI state indicated by the 4^{th} byte belongs is a TRP, in the first TRP and the second TRP, other than the TRP to which the TCI state indicated by the last 7 bits of the 3^{rd} byte belongs; or
a 1^{st} bit of each byte in the 4 bytes indicates a TRP to which a TCI state indicated by last 7 bits of the byte belongs.

18. The method according to claim 9 or 10, wherein the method further comprises:
determining, by the terminal device, a default byte in the 4 bytes based on the second field.

19. The method according to claim 16 or 17, wherein the method further comprises:
determining, by the terminal device, a default byte in the 4 bytes based on the third field.

20. The method according to claim 18 or 19, wherein for either TRP in the first TRP and the second TRP,
if a quantity of TCI states of the either TRP that correspond to the any TCI field value is 0, 2 bytes corresponding to the either TRP are both default;
if a quantity of TCI states of the either TRP that correspond to the any TCI field value is 1, a 2^{nd} byte in 2 bytes corresponding to the either TRP is default; or
if a quantity of TCI states of the either TRP that correspond to the any TCI field value is 2, neither of 2 bytes corresponding to the either TRP is default.

21. The method according to any one of claims 1 and 3 to 20, wherein the method further comprises:
when a first condition is met, performing, by the terminal device, transmission by only using a TCI state of a single TRP, wherein
the first condition comprises either of the following:
the terminal device receives a second MAC CE from the network device, wherein the second MAC CE indicates a TCI state of one TRP; or
the terminal device receives the first MAC CE from the network device, wherein a TCI state of a same TRP is activated in the first MAC CE.

22. A beam indication method, wherein the method comprises:
receiving, by a terminal device, a first medium access control control element MAC CE from a network device;
receiving, by the terminal device, downlink control information DCI from the network device, wherein
the DCI comprises a transmission configuration indicator TCI field, the TCI field corresponds to a plurality of TCI field values, any TCI field value in the plurality of TCI field values corresponds to one or two TCI state groups, and each TCI state group comprises one or two TCI states; and
for the any TCI field value, the first MAC CE comprises a first field, and the first field indicates a TCI state group corresponding to the any TCI field value and a quantity of TCI states comprised in each TCI state group; and
determining, by the terminal device based on the first MAC CE, a TCI state corresponding to each TCI field value in the plurality of TCI field values.

23. A beam indication method, wherein the method comprises:
sending, by a network device, a first medium access control control element MAC CE to a terminal device; and
sending, by the network device, downlink control information DCI to the terminal device, wherein
the DCI comprises a transmission configuration indicator TCI field, the TCI field corresponds to a plurality of TCI field values, any TCI field value in the plurality of TCI field values corresponds to one or two TCI state groups, and each TCI state group comprises one or two TCI states; and
for the any TCI field value, the first MAC CE comprises a first field, and the first field indicates a TCI state group corresponding to the any TCI field value and a quantity of TCI states comprised in each TCI state group.

24. The method according to claim 22 or 23, wherein each TCI state group corresponds to one transmission reception point TRP, and different TCI state groups correspond to different TRPs.

25. The method according to any one of claims 22 to 24, wherein the first field indicates any one of the following:
the any TCI field value corresponds to one TCI state of a first TRP;
the any TCI field value corresponds to one TCI state of a second TRP;
the any TCI field value corresponds to two TCI states of a first TRP;
the any TCI field value corresponds to two TCI states of a second TRP;
the any TCI field value corresponds to one TCI state of a first TRP and one TCI state of a second TRP;
the any TCI field value corresponds to one TCI state of a first TRP and two TCI states of a second TRP;
the any TCI field value corresponds to two TCI states of a first TRP and one TCI state of a second TRP; or
the any TCI field value corresponds to two TCI states of a first TRP and two TCI states of a second TRP.

26. The method according to claim 25, wherein when the first field indicates that the any TCI field value corresponds to two TCI state groups, the two TCI state groups comprise a TCI state group corresponding to the first TRP and a TCI state group corresponding to the second TRP; and
in the first MAC CE, a TCI state in the TCI state group corresponding to the first TRP ranks before a TCI state in the TCI state group corresponding to the second TRP; or
in the first MAC CE, a TCI state in the TCI state group corresponding to the first TRP ranks after a TCI state in the TCI state group corresponding to the second TRP.

27. The method according to claim 25 or 26, wherein the any TCI field value corresponds to a maximum of 4 bytes in the first MAC CE; and in the 4 bytes, a 1^{st} byte corresponds to a first TCI state of the first TRP, a 2^{nd} byte corresponds to a second TCI state of the first TRP, a 3^{rd} byte corresponds to a first TCI state of the second TRP, and a 4^{th} byte corresponds to a second TCI state of the second TRP;
or
the any TCI field value corresponds to a maximum of 4 bytes in the first MAC CE; and in the 4 bytes, a 1^{st} byte corresponds to a first TCI state of the second TRP, a 2^{nd} byte corresponds to a second TCI state of the second TRP, a 3^{rd} byte corresponds to a first TCI state of the first TRP, and a 4^{th} byte corresponds to a 2^{nd} TCI state of the first TRP.

28. The method according to claim 27, wherein
a 1^{st} bit of the 1^{st} byte indicates a type of a TCI state indicated by last 7 bits of the 1^{st} byte, and a type of a TCI state indicated by the 2^{nd} byte is a type opposite to the type of the TCI state indicated by the last 7 bits of the 1^{st} byte; and a 1^{st} bit of the 3^{rd} byte indicates a type of a TCI state indicated by last 7 bits of the 3^{rd} byte, and a type of a TCI state indicated by the 4^{th} byte is a type opposite to the type of the TCI state indicated by the last 7 bits of the 3^{rd} byte;
or
a 1^{st} bit of each byte in the 4 bytes indicates a type of a TCI state indicated by last 7 bits of the byte, wherein
the type of the TCI state comprises at least one of the following: an uplink TCI state, a downlink TCI state, or a joint uplink/downlink TCI state.

29. The method according to claim 22 or 23, wherein TCI states in each TCI state group belong to a same type of TCI states, and TCI states in different TCI state groups belong to different types of TCI states.

30. The method according to claim 22, 23, or 29, wherein the first field indicates any one of the following:
the any TCI field value corresponds to one uplink TCI state group, and the uplink TCI state group comprises one uplink TCI state;
the any TCI field value corresponds to one downlink TCI state group, and the downlink TCI state group comprises one downlink TCI state;
the any TCI field value corresponds to one uplink TCI state group, and the uplink TCI state group comprises two uplink TCI states;
the any TCI field value corresponds to one downlink TCI state group, and the downlink TCI state group comprises two downlink TCI states;
the any TCI field value corresponds to one uplink TCI state group and one downlink TCI state group, the uplink TCI state group comprises one uplink TCI state, and the downlink TCI state group comprises one downlink TCI state;
the any TCI field value corresponds to one uplink TCI state group and one downlink TCI state group, the uplink TCI state group comprises one uplink TCI state, and the downlink TCI state group comprises two downlink TCI states;
the any TCI field value corresponds to one uplink TCI state group and one downlink TCI state group, the uplink TCI state group comprises two uplink TCI states, and the downlink TCI state group comprises one downlink TCI state; or
the any TCI field value corresponds to one uplink TCI state group and one downlink TCI state group, the uplink TCI state group comprises two uplink TCI states, and the downlink TCI state group comprises two downlink TCI states.

31. The method according to claim 30, wherein when the first field indicates that the any TCI field value corresponds to one uplink TCI state group and one downlink TCI state group,
in the first MAC CE, an uplink TCI state in the uplink TCI state group ranks before a downlink TCI state in the downlink TCI state group; or
in the first MAC CE, an uplink TCI state in the uplink TCI state group ranks after a downlink TCI state in the downlink TCI state group.

32. The method according to claim 30 or 31, wherein the any TCI field value corresponds to a maximum of 4 bytes in the first MAC CE; and in the 4 bytes, a 1^{st} byte corresponds to a first uplink TCI state in the uplink TCI state group, a 2^{nd} byte corresponds to a second uplink TCI state in the uplink TCI state group, a 3^{rd} byte corresponds to a first downlink TCI state in the downlink TCI state group, and a 4^{th} byte corresponds to a second downlink TCI state in the downlink TCI state group; or
the any TCI field value corresponds to a maximum of 4 bytes in the first MAC CE; and in the 4 bytes, a 1^{st} byte corresponds to a first downlink TCI state in the downlink TCI state group, a 2^{nd} byte corresponds to a second downlink TCI state in the downlink TCI state group, a 3^{rd} byte corresponds to a first uplink TCI state in the uplink TCI state group, and a 4^{th} byte corresponds to a second uplink TCI state in the uplink TCI state group.

33. The method according to claim 31, wherein a TCI state corresponding to the any TCI field value belongs to a first TRP and/or a second TRP; a 1^{st} bit of the 1^{st} byte indicates a TRP to which a TCI state indicated by last 7 bits of the 1^{st} byte belongs, and a TRP to which a TCI state indicated by the 2^{nd} byte belongs is a TRP, in the first TRP and the second TRP, other than the TRP to which the TCI state indicated by the last 7 bits of the 1^{st} byte belongs; and a 1^{st} bit of the 3^{rd} byte indicates a TRP to which a TCI state indicated by last 7 bits of the 3^{rd} byte belongs, and a TRP to which a TCI state indicated by the 4^{th} byte belongs is a TRP, in the first TRP and the second TRP, other than the TRP to which the TCI state indicated by the last 7 bits of the 3^{rd} byte belongs;
or
a 1^{st} bit of each byte in the 4 bytes indicates a TRP to which a TCI state indicated by last 7 bits of the byte belongs.

34. The method according to claim 27, 28, 32, or 33, wherein the method further comprises:
determining, by the terminal device, a default byte in the 4 bytes based on the first field.

35. The method according to claim 34, wherein for either TCI state group in the first TCI state group and the second TCI state group that correspond to the any TCI field value,
if a quantity of TCI states comprised in the either TCI state group is 0, 2 bytes corresponding to the either TCI state group are both default;
if a quantity of TCI states comprised in the either TCI state group is 1, a 2^{nd} byte in 2 bytes corresponding to the either TCI state group is default; or
if a quantity of TCI states comprised in the either TCI state group is 2, neither of 2 bytes corresponding to the either TCI state group is default.

36. The method according to any one of claims 22 and 24 to 35, wherein the method further comprises:
when a first condition is met, performing, by the terminal device, transmission by only using a TCI state of a single TRP, wherein
the first condition comprises either of the following:
the terminal device receives a second MAC CE from the network device, wherein the second MAC CE indicates a TCI state of one TRP; or
the terminal device receives the first MAC CE from the network device, wherein a TCI state of a same TRP is activated in the first MAC CE.

37. A communication apparatus, wherein the communication apparatus comprises a transceiver module and a processing module, wherein
the transceiver module is configured to perform receiving and sending operations in the method according to any one of claims 1 and 3 to 21, and the processing module is configured to perform a processing operation in the method according to any one of claims 1 and 3 to 21;
or
the transceiver module is configured to perform receiving and sending operations in the method according to any one of claims 22 and 24 to 36, and the processing module is configured to perform a processing operation in the method according to any one of claims 22 and 24 to 36.

38. A communication apparatus, wherein the communication apparatus comprises a transceiver module, wherein
the transceiver module is configured to perform receiving and sending operations in the method according to any one of claims 2 to 17; or
the transceiver module is configured to perform a processing operation in the method according to any one of claims 23 to 33.

39. A communication apparatus, wherein the communication apparatus comprises:
a memory, configured to store computer instructions; and
a processor, configured to execute a computer program or the computer instructions stored in the memory, to enable the communication apparatus to perform the method according to any one of claims 1 and 3 to 21, enable the communication apparatus to perform the method according to any one of claims 2 to 17, enable the communication apparatus to perform the method according to any one of claims 22 and 24 to 36, or enable the communication apparatus to perform the method according to any one of claims 23 to 33.

40. A communication apparatus, wherein the communication apparatus comprises a processor, and the processor is configured to execute a computer program or computer instructions in a memory, to perform the method according to any one of claims 1 and 3 to 21, perform the method according to any one of claims 2 to 17, perform the method according to any one of claims 22 and 24 to 36, or perform the method according to any one of claims 23 to 33.

41. A computer-readable storage medium, wherein the computer-readable storage medium stores a computer program; and when the computer program is executed by a communication apparatus, the communication apparatus is enabled to perform the method according to any one of claims 1 and 3 to 21, perform the method according to any one of claims 2 to 17, perform the method according to any one of claims 22 and 24 to 36, or perform the method according to any one of claims 23 to 33.

42. A communication system, wherein the communication system comprises a terminal device and a network device, wherein
the terminal device is configured to perform the method according to any one of claims 1 and 3 to 21, and the network device is configured to perform the method according to any one of claims 2 to 17; or
the terminal device is configured to perform the method according to any one of claims 22 and 24 to 36, and the network device is configured to perform the method according to any one of claims 23 to 33.
